(19) Europäisches Patentamt
European Patent Office
Office européen des brevets

(11) Veröffentlichungsnummer: **0 352 222 B1**

(12) # EUROPÄISCHE PATENTSCHRIFT

(45) Veröffentlichungstag der Patentschrift: **25.05.94**

(51) Int. Cl.[5]: **C09B 62/465**, C09B 62/04, D06P 1/38, D21H 21/28

(21) Anmeldenummer: **89810475.7**

(22) Anmeldetag: **20.06.89**

Die Akte enthält technische Angaben, die nach dem Eingang der Anmeldung eingereicht wurden und die nicht in dieser Patentschrift enthalten sind.

(54) **Faserreaktive Formazanfarbstoffe, Verfahren zu deren Herstellung und deren Verwendung.**

(30) Priorität: **29.06.88 CH 2473/88**

(43) Veröffentlichungstag der Anmeldung:
**24.01.90 Patentblatt 90/04**

(45) Bekanntmachung des Hinweises auf die Patenterteilung:
**25.05.94 Patentblatt 94/21**

(84) Benannte Vertragsstaaten:
**BE CH DE ES FR GB IT LI**

(56) Entgegenhaltungen:
**EP-A- 0 179 019**
**FR-A- 2 197 946**

(73) Patentinhaber: **CIBA-GEIGY AG**
**Klybeckstrasse 141**
**CH-4002 Basel(CH)**

(72) Erfinder: **Lehmann, Urs, Dr.**
**Palmenstrasse 17**
**CH-4055 Basel(CH)**

EP 0 352 222 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die vorliegende Erfindung betrifft neue faserreaktive Formazanfarbstoffe, Verfahren zu deren Herstellung und die Verwendung dieser Farbstoffe zum Färben und Bedrucken von Fasermaterialien.

Gegenstand der vorliegenden Erfindung sind faserreaktive Formazanfarbstoffe der Formel

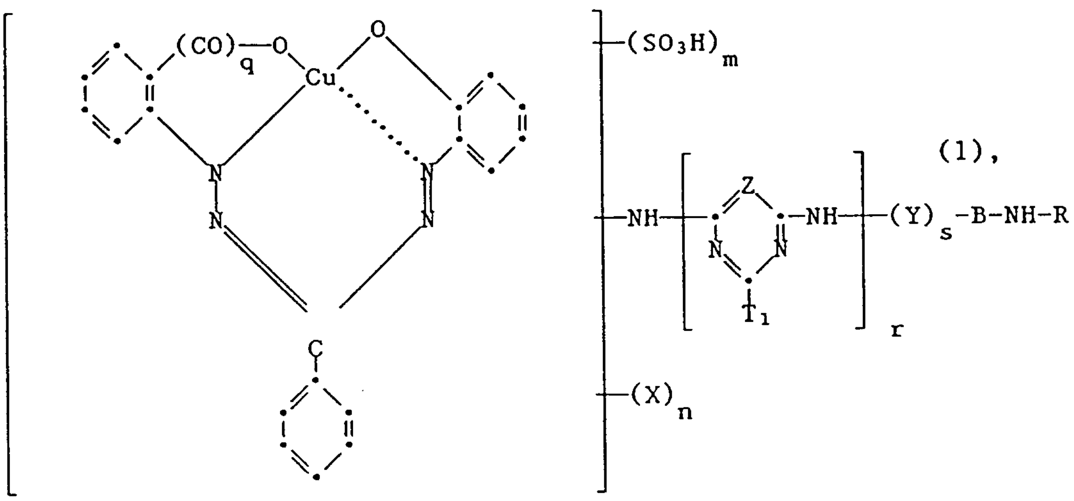

(1),

worin B gegebenenfalls durch $C_1$-$C_4$-Alkoxy oder Halogen substituiertes $C_1$-$C_8$-Alkylen oder ein sulfogruppenfreies aromatisches Brückenglied, R $\alpha,\beta$-Dihalogenpropionyl, $\alpha$-Halogenacryloyl oder Halogenacetyl, $T_1$ Halogen, X Halogen, $C_1$-$C_4$-Alkyl, $C_1$-$C_4$-Alkoxy, Cyan oder Nitro, Y -CO- oder -$SO_2$-, Z ein Stickstoffatom oder -C-$T_2$, $T_2$ Halogen, Wasserstoff, $C_1$-$C_4$-Alkylthio, Cyano, Formyl oder $C_1$-$C_4$-Alkylsulfonyl, m die Zahl 1 oder 2, n die Zahl 0, 1 oder 2, q die Zahl 0 oder 1, r die Zahl 0 oder 1 und s die Zahl 0 oder 1 ist, wobei r und s voneinander verschiedene Bedeutungen haben.

Als $C_1$-$C_8$-Alkylen kommt für B in Formel (1) insbesondere $C_1$-$C_6$-Alkylen in Betracht, wobei der Alkylenrest substituiert sein kann, z.B. durch Halogen, wie Fluor, Chlor oder Brom oder $C_1$-$C_4$-Alkoxy, wie Methoxy oder Aethoxy.

Als aromatisches Brückenglied kommt für B in Formel (1) Naphthylen oder insbesondere Phenylen in Betracht. Als Substituenten für Naphthylen und Phenylen seien z.B. genannt:
Alkylgruppen mit 1 bis 8, vorzugsweise 1 bis 4, Kohlenstoffatomen, wie z.B. Methyl, Aethyl, Propyl, Isopropyl, Butyl, Isobutyl, sek.-Butyl, tert.-Butyl, Hexyl, Octyl, Alkoxygruppen mit 1 bis 8 Kohlenstoffatomen, insbesondere 1 bis 4 Kohlenstoffatomen, wie z.B. Methoxy, Aethoxy, Propoxy, Isopropoxy, Butoxy, Acylaminogruppen wie Alkanoylaminogruppen mit 2 bis 8 Kohlenstoffatomen und Alkoxycarbonylaminogruppen mit 2 bis 8 Kohlenstoffatomen wie z.B. Acetylamino, Propionylamino, Methoxycarbonylamino, Aethoxycarbonylamino, Benzoylamino, $C_5$-$C_7$-Cycloalkylcarbonyl, Benzoyl, Amino, Mono- oder Dialkylamino mit 1 bis 8 Kohlenstoffatomen im Alkylrest, Phenylamino, Alkoxycarbonyl mit 1 bis 8 Kohlenstoffatomen im Alkoxyrest, $C_5$-$C_7$-Cycloalkylaminosulfonyl, Nitro, Cyan, Trifluormethyl, Halogen, wie Fluor, Brom oder insbesondere Chlor, Sulfamoyl, am Stickstoffatom ein- oder zweifach durch $C_1$-$C_4$-Alkyl, $C_5$-$C_7$-Cycloalkyl oder Phenyl substituiertes Sulfamoyl, Carbamoyl, Ureido, Hydroxy, $C_1$-$C_8$-Alkylsulfonyl, $C_1$-$C_8$-Alkylaminosulfonyl, gegebenenfalls durch $C_1$-$C_4$-Alkyl substituiertes Phenylsulfonyl, Carboxy, Sulfomethyl, Sulfato, Thiosulfato sowie Phenyl, Naphthyl, Phenoxy, Phenoxysulfonyl, Phenylaminosulfonyl, wobei die angegebenen Phenyl- oder Naphthylreste durch die oben angegebenen Substituenten weitersubstituiert sein können.

Als $\alpha,\beta$-Dihalogenpropionyl kommt für R in Formel (1) z.B. $\alpha,\beta$-Dibrompropionyl, $\alpha,\beta$-Dichlorpropionyl, $\alpha$-Chlor-$\beta$-brompropionyl und $\alpha$-Brom-$\beta$-chlorpropionyl in Betracht.

Als $\alpha$-Halogenacryloyl kommt für R in Formel (1) z.B. $\alpha$-Bromacryloyl und $\alpha$-Chloracryloyl in Betracht.

Als Halogenacetyl kommt für R in Formel (1) Bromacetyl und Chloracetyl in Betracht.

Als Halogen kommt für $T_1$ in Formel (1) z.B. Fluor oder insbesondere Chlor in Betracht.

Als Halogen kommt für $T_2$ in Formel (1) z.B. Fluor oder insbesondere Chlor in Betracht.

Als $C_1$-$C_4$-Alkylthio kommt für $T_2$ in Formel (1) z.B. Methyl-, Aethyl-, Propyl-, Isopropyl-, Butyl-, Isobutyl-, sek.-Butyl- oder tert.-Butylthio in Betracht.

Als $C_1$-$C_4$-Alkylsulfonyl kommt für $T_2$ z.B. Methylsulfonyl, Aethylsulfonyl oder Isopropylsulfonyl in Betracht.

Als Halogen kommt für X in Formel (1) z.B. Fluor, Brom oder insbesondere Chlor in Betracht.

Als $C_1$-$C_4$-Alkyl kommt für X in Formel (1) z.B. Methyl, Aethyl, Propyl, Isopropyl, Butyl, Isobutyl, sek.-Butyl oder tert.-Butyl in Betracht.

Als $C_1$-$C_4$-Alkoxy kommt für X in Formel (1) z.B. Methoxy, Aethoxy, Propoxy, Isopropoxy, Butoxy, Isobutoxy, sek.-Butoxy oder tert.-Butoxy in Betracht.

Bevorzugt sind Farbstoffe der Formel (1), worin m die Zahl 2 bedeutet. Bevorzugt sind ferner Farbstoffe der Formel (1), worin q die Zahl 1 bedeutet.

Ebenfalls bevorzugt sind Farbstoffe der Formel (1), worin X Halogen, insbesondere Chlor, ist; insbesondere bevorzugt sind Farbstoffe der Formel (1), worin m die Zahl 2 und q die Zahl 1 bedeutet, und X Chlor ist.

Ferner sind Farbstoffe der Formel (1) bevorzugt, worin B $-(CH_2)_p-$ oder

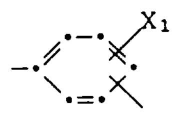

ist, und p die Zahl 1, 2, 3, 4, 5 oder 6 ist und $X_1$ Wasserstoff oder ein Substituent, ausgenommen Sulfo, ist; insbesondere hat B die oben angegebene Bedeutung, m ist die Zahl 2, q ist die Zahl 1 und X ist Chlor. Der Substituent $X_1$ kann die gleiche Bedeutung haben wie die oben angegebenen Substituenten des Restes B als Phenylen.

Vorzugsweise bedeutet n in Formel (1) die Zahl 0 oder 1, insbesondere zusammen mit den oben angegebenen bevorzugten Bedeutungen von m, q, X und/oder B.

Vorzugsweise bedeutet $T_1$ in Formel (1) Fluor oder inbesondere Chlor und L den Rest -C-F oder -C-Cl oder insbesondere ein Stickstoffatom; insbesondere haben $T_1$ und Z die oben angegebenen Bedeutungen zusammen mit den angegebenen bevorzugten Bedeutungen von m, n, q, X und/oder B.

Besonders bevorzugt sind die Farbstoffe der Formel

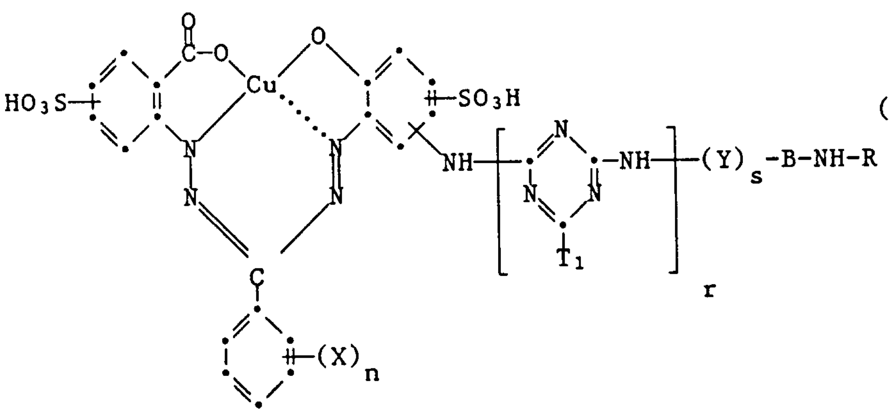

(2)

worin B Phenylen, R ein als Halogen, Brom- und/oder Chloratome enthaltender $\alpha,\beta$-Dihalogenpropionyl-, $\alpha$-Halogenacryloyl- oder Halogenacetylrest, $T_1$ Fluor oder insbesondere Chlor, X Chlor, Y -CO- oder $-SO_2-$, n die Zahl 0 oder 1, r die Zahl 0 oder 1 und s die Zahl 0 oder 1 ist.

Ganz besonders bevorzugt sind die Farbstoffe der Formel

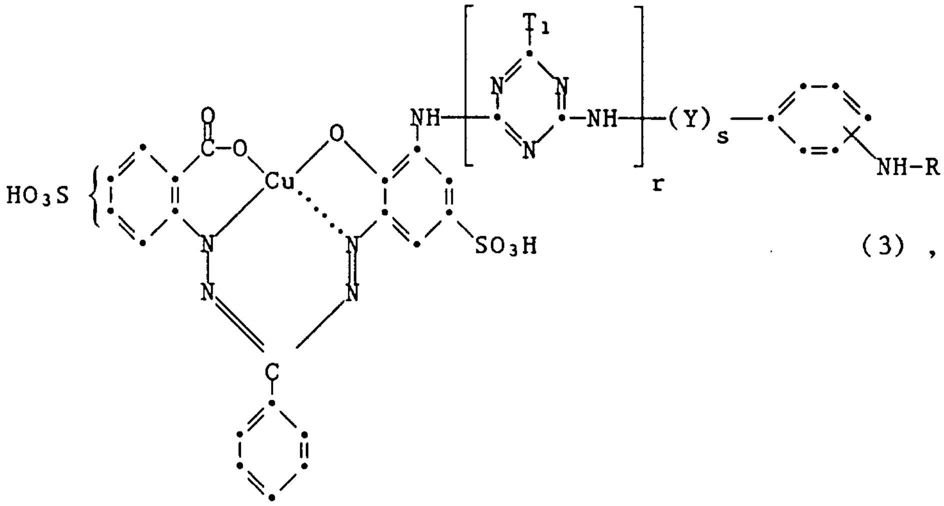

(3) ,

worin R, $T_1$, Y, r und s die unter Formel (2) angegebenen Bedeutungen haben.

Von den ganz besonders bevorzugten Farbstoffen der Formel (3) sind die Farbstoffe der Formeln

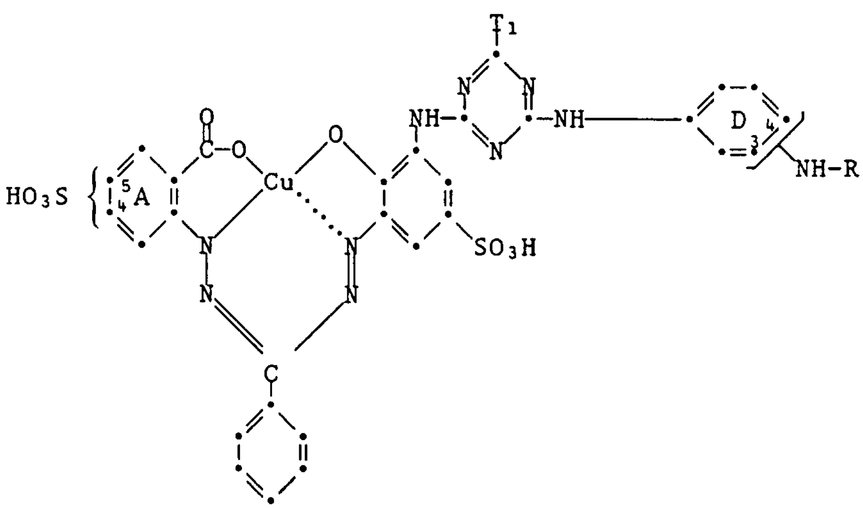

(4)

und

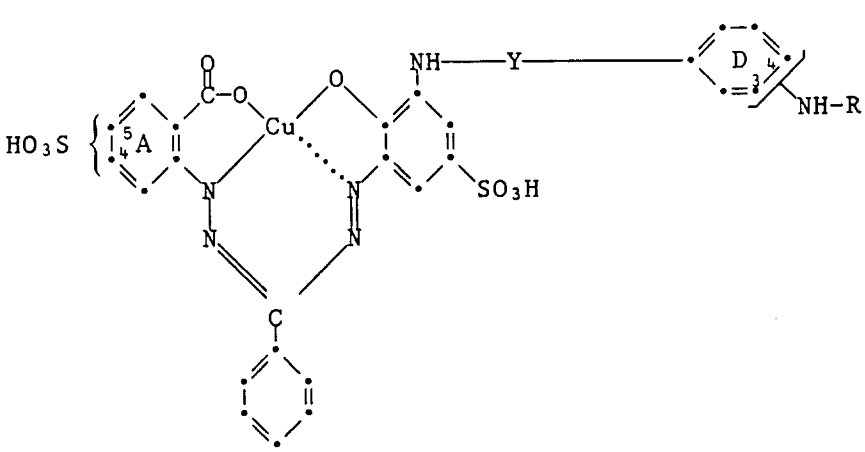

(5)

worin in den Formeln (4) und (5) R $\alpha,\beta$-Dibrompropionyl, $\alpha$-Bromacryloyl oder Chloracetyl ist, die Sulfogruppe in 4- oder 5-Position an den Benzring A gebunden ist, -NH-R in 3- oder 4-Position an den Benzring D gebunden ist, $T_1$ in Formel (4) Fluor oder insbesondere Chlor ist, und Y in Formel (5) -CO- oder -$SO_2$- ist, ganz besonders wichtig.

Gegenstand der Erfindung ist ferner ein Verfahren zur Herstellung der Farbstoffe der Formel (1), welches dadurch gekennzeichnet ist, dass man eine Verbindung der Formel

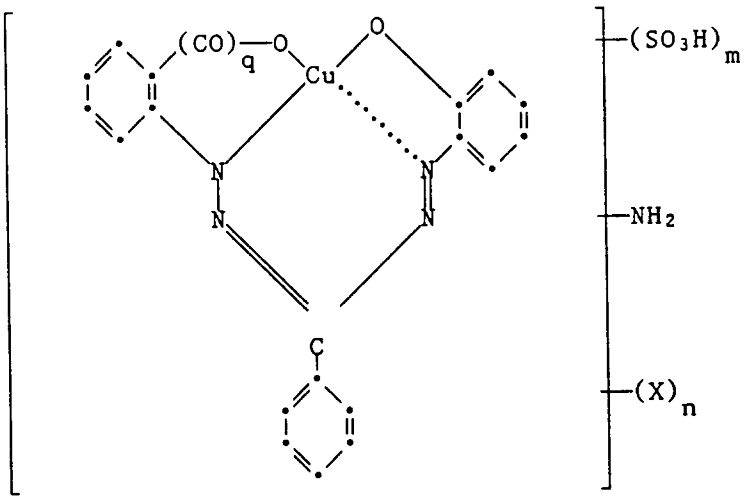

(6),

worin X, m, n und q die unter Formel (1) angegebenen Bedeutungen haben, mit einer den Rest der Formel

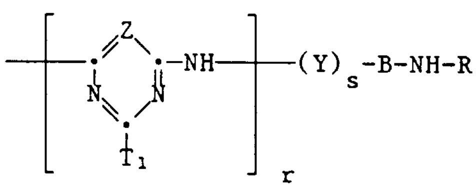

(7)

einführenden Verbindung, worin B, R, Y, $T_1$, Z, r und s die unter Formel (1) angegebenen Bedeutungen haben, umsetzt, oder ein Amin der Formel (6), worin X, m, n und q die unter Formel (1) angegebenen Bedeutungen haben, mit einer Verbindung der Formel

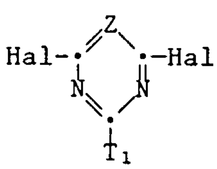

(8),

worin Z und $T_1$ die unter Formel (1) angegebenen Bedeutungen haben, und Hal je ein Halogenatom, insbesondere ein Fluor- oder Chloratom, bedeuten, kondensiert, und das Kondensationsprodukt anschliessend mit einer den Rest der Formel

-NH-B-NH-R (9)

einführenden Verbindung umsetzt, wobei B und R in Formel (9) die unter Formel (1) angegebenen Bedeutungen haben.

Als den Rest der Formel (7) einführende Verbindungen kommen vorzugsweise entsprechende Halogenide, insbesondere Chloride oder Fluoride, in Betracht. Als Beispiele seien genannt:

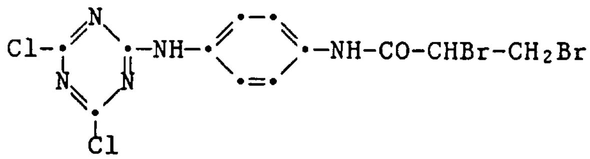 , 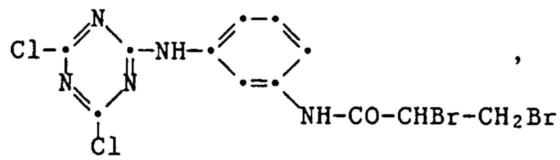 ,

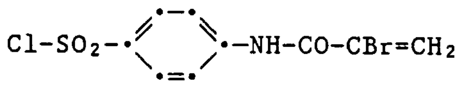 , 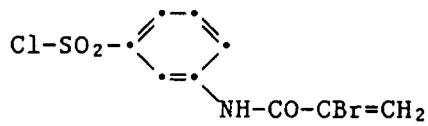 ,

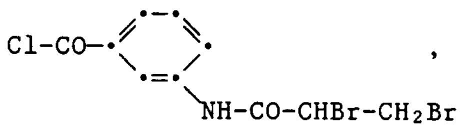 , 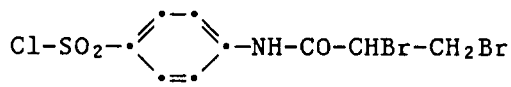 ,

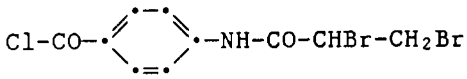 , 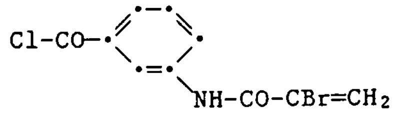 ,

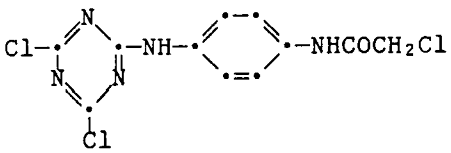 , 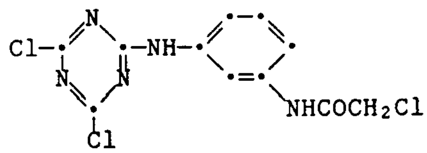 ,

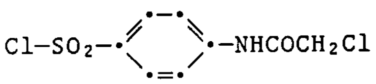 , 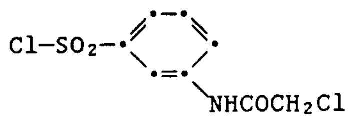 ,

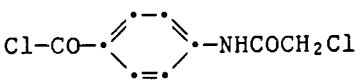 , 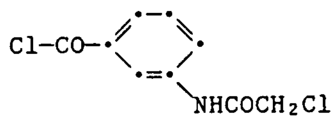 ,

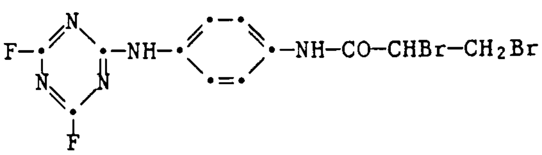 ,

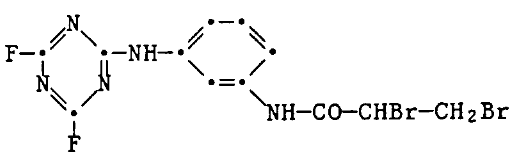 ,

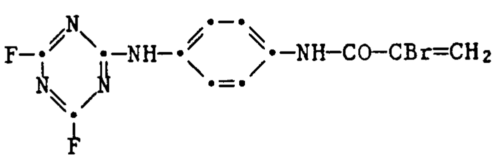 ,

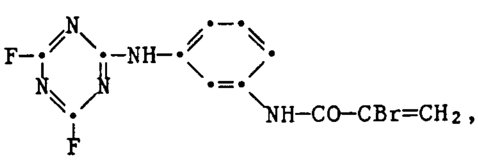 ,

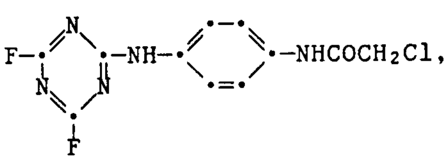 , 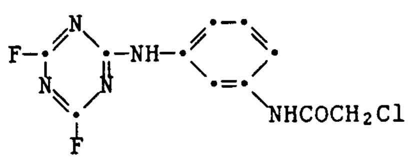 .

Eine bevorzugte Ausführungsform des erfindungsgemässen Verfahrens ist dadurch gekennzeichnet, dass man eine Verbindung der Formel (6) zunächst mit einer Verbindung der Formel

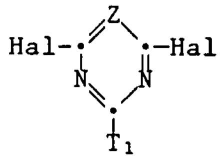 (8),

worin Z und $T_1$ die unter Formel (1) angegebenen Bedeutungen haben, und Hal je ein Halogenatom insbesondere ein Fluor- oder Chloratom bedeuten, kondensiert, und das Kondensationsprodukt anschliessend mit einer den Rest der Formel

-NH-B-NH-R (9)

einführenden Verbindung umsetzt, wobei B und R in Formel (9) die unter Formel (1) angegebenen Bedeutungen haben. Als Beispiele für Verbindungen der Formel (8) seien genannt: Cyanurchlorid, Cyanurfluorid, 2,4,6-Trifluor-5-chlorpyrimidin. Als Beispiele für den Rest der Formel (9) einführende Verbindungen seien genannt: 3'-Amino-2,3-dibrompropionylanilid, 4'-Amino-2,3-dibrompropionylanilid, 3'-Amino-2-bromacrylanilid, 4'-Amino-2-bromacrylanilid, 3'-Aminochloracetanilid, 4'-Aminochloracetanilid.

Eine ebenfalls bevorzugte Ausführungsform des erfindungsgemässen Verfahrens ist dadurch gekennzeichnet, dass man eine Verbindung der Formel (6) mit einer den Rest der Formel

-Y-B-NH-R (10)

einführenden Verbindung umsetzt, wobei Y, B und R die unter Formel (1) angegebenen Bedeutungen haben. Beispiele für Verbindungen, die den Rest der Formel (10) einführen sind entsprechende Säurehalogenide, vorzugsweise Säurechloride wie z.B.

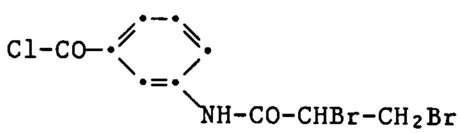 , 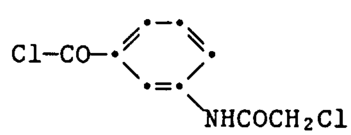 ,

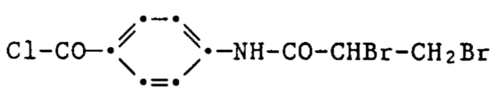 , 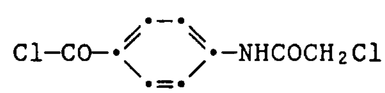 ,

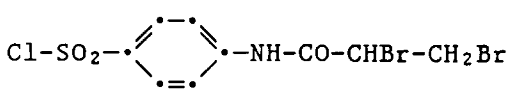 , 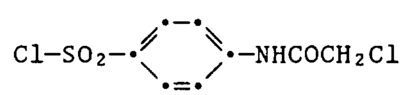 ,

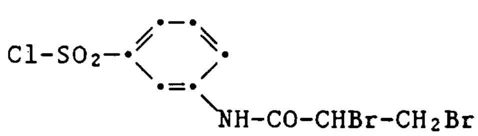 , 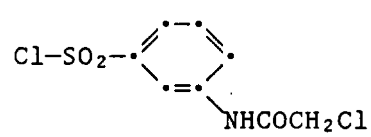 .

Die Verbindungen der Formel (10), die eine abspaltbare Gruppe, vorzugsweise ein Halogenatom enthalten, und die der Formel

Z—Y—B—NH—R (10a)

entsprechen, stellen einen weiteren Gegenstand der Erfindung dar. Z in Formel (10a) bedeutet eine abspaltbare Gruppe, insbesondere ein Halogenatom, vorzugsweise Chlor. Y, B und R haben die in Formel (1) angegebenen Bedeutungen. Bevorzugt haben B und R die oben angegebenen bevorzugten Bedeutungen.

Hergestellt werden die Verbindungen der Formel (10a), indem man z.B. eine Verbindung der Formel

HO-Y-B-$NH_2$ (10b),

worin Y und B die unter Formel (1) angegebenen Bedeutungen haben, mit einer den Rest R einführenden Verbindung kondensiert und anschliessend mit einer die Gruppe Z einführenden Verbindung umsetzt.

Insbesondere verwendet man eine Verbindung der Formel (10b), worin B $-(CH_2)_p-$ oder

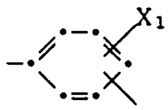,

p die Zahl 1, 2, 3, 4, 5 oder 6 und $X_1$ Wasserstoff oder ein Substituent, ausgenommen Sulfo, ist.

Als den Rest R einführende Verbindungen kommen z.B. 2,3-Dibrompropionylchlorid oder 2-Bromacryloylchlorid in Betracht.

Als die Gruppe Z einführende Verbindung kommt z.B. Thionylchlorid in Betracht.

Eine weitere ganz besonders bevorzugte Ausführungsform des erfindungsgemässen Verfahrens zur Herstellung der Farbstoffe der Formel (1) ist dadurch gekennzeichnet, dass man eine Verbindung der Formel (6) mit einer Verbindung der Formel

Z-Y-B-$NHCOCH_3$ (10c),

worin Z, Y und B die unter Formel (10a) angegebenen Bedeutungen haben, umsetzt, anschliessend das Reaktionsprodukt in Gegenwart einer Base, wie z.B. NaOH, verseift und dann mit einer den Rest R einführenden Verbindung kondensiert.

Als Verbindungen der Formel (10c) kommen z.B. in Betracht:

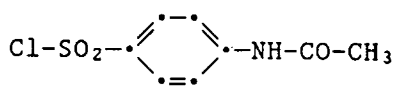

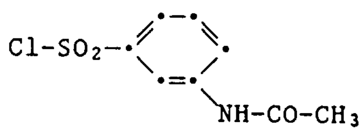

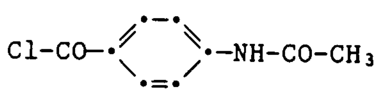

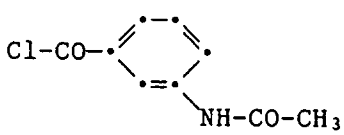

Als den Rest R einführende Verbindungen kommen z.B. 2,3-Dibrompropionylchlorid, 2-Bromacryloylchlorid oder $\alpha$-Chloracetylchlorid in Betracht.

An die Herstellung der Farbstoffe der Formel (1) mit einer Dihalogenpropionyl-Gruppe kann eine Eliminierungsreaktion angeschlossen werden. Beispielsweise kann man den Farbstoff der Formel (1), welcher eine Dihalogenpropionyl-Gruppe enthält, unter alkalischen Bedingungen, wie z.B. Natriumhydroxid, behandeln, wobei unter Abspaltung von Halogenwasserstoff der Dihalogenpropionylrest in einen Halogenacryloylrest übergeht.

Die Kondensation des Amins der Formel (6) mit der den Rest der Formel (7) einführenden Verbindung, bzw. die Kondensation des Amins der Formel (6) mit der Verbindung der Formel (8) und die anschliessende Umsetzung mit der den Rest der Formel (9) einführenden Verbindung, bzw. die Kondensation des Amins der Formel (6) mit der den Rest der Formel (10) einführenden Verbindung erfolgt vorzugsweise in wässriger

Lösung, Emulsion oder Suspension, bei niederiger Temperatur, z.B. 0 bis 40 °C, und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert.

Eine bevorzugte Ausführungsform des erfindungsgemässen Verfahrens ist dadurch gekennzeichnet, dass man ein Amin der Formel (6) verwendet, worin m die Zahl 2 ist.

Eine weitere bevorzugte Ausführungsform des erfindungsgemässen Verfahrens ist dadurch gekennzeichnet, dass man ein Amin der Formel (6) verwendet, worin q die Zahl 1 bedeutet.

Eine ebenfalls bevorzugte Ausführungsform des erfindungsgemässen Verfahrens ist dadurch gekennzeichnet, dass man ein Amin der Formel (6) verwendet, worin X Halogen, insbesondere Chlor ist; insbesondere verwendet man ein Amin der Formel (6), worin X Chlor ist, m die Zahl 2 und q die Zahl 1 bedeutet zusammen mit einer den Rest der Formel (7) einführenden Verbindung.

Eine weitere bevorzugte Ausführungsform des erfindungsgemässen Verfahrens ist dadurch gekennzeichnet, dass man eine den Rest der Formel (7), (8) oder (9) einführende Verbindung verwendet, worin B $-(CH_2)_p-$ oder

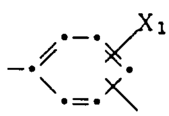

ist, und p die Zahl 1, 2, 3, 4, 5 oder 6 ist und $X_1$ Wasserstoff oder ein Substituent, ausgenommen Sulfo, ist.

Insbesondere verwendet man ein Amin der Formel (6), worin m die Zahl 2, q die Zahl 1 und X Chlor bedeutet, zusammen mit einer dem Rest der Formel (7) einführenden Verbindung, worin B die als bevorzugt angegebene Bedeutung hat.

Bevorzugt werden ausserdem Amine der Formel (6) verwendet, worin n die Zahl 0 oder 1 ist; insbesondere zusammen mit den vorstehend angegebenen bevorzugten Bedeutungen der Reste m, q und X.

Bevorzugt sind ferner Verbindungen der Formel (7) bzw. der Formel (8), worin $T_1$ Fluor oder insbesondere Chlor ist und Z den Rest -C-F oder -C-Cl oder insbesondere ein Stickstoffatom bedeutet.

Eine besonders bevorzugte Ausführungsform des erfindungsgemässen Verfahrens zur Herstellung der Farbstoffe der Formel (2) ist dadurch gekennzeichnet, dass man eine Verbindung der Formel

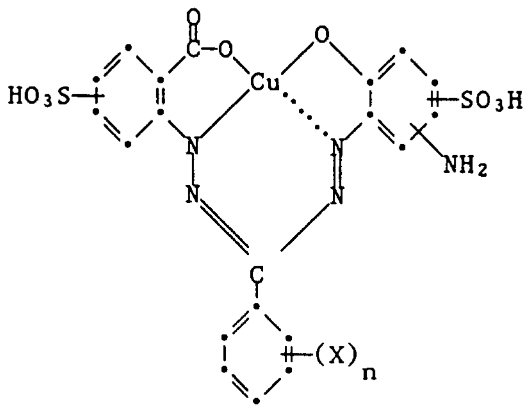

(11),

worin X und n die unter Formel (2) angegebenen Bedeutungen haben, entweder mit einer Verbindung der Formel (8) kondensiert und anschliessend das Kondensationsprodukt mit einer den Rest der Formel (9) einführenden Verbindung umsetzt, oder mit einer den Rest der Formel (10) einführenden Verbindung umsetzt, wobei B, R, $T_1$, X, Y und n die unter Formel (2) angegebenen Bedeutungen haben.

Eine ganz besonders bevorzugte Ausführungsform des erfindungsgemässen Verfahrens zur Herstellung der Farbstoffe der Formel (3) ist dadurch gekennzeichnet, dass man ein Amin der Formel

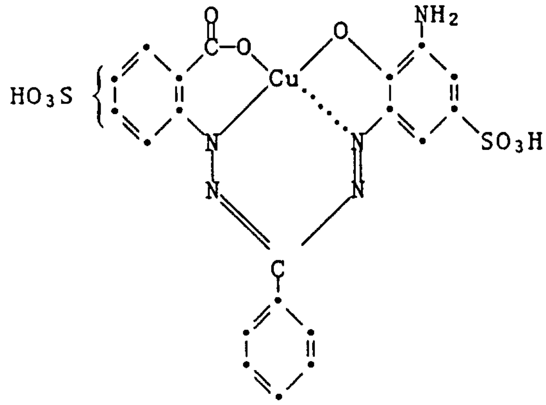

(12)

entweder mit Cyanurchlorid oder Cyanurfluorid kondensiert und anschliessend das Kondensationsprodukt mit einer den Rest der Formel (9) einführenden Verbindung umsetzt, oder mit einer den Rest der Formel (10) einführenden Verbindung umsetzt, wobei R und Y die unter Formel (3) angegebenen Bedeutungen haben.

Die besonders wichtigen Farbstoffe der Formel (4) werden hergestellt, indem man ein Amin der Formel

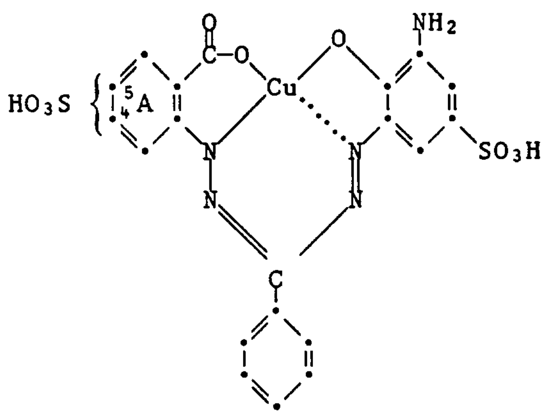

(13),

worin die Sulfogruppe in 4- oder 5-Position an den Benzring A gebunden ist, mit Cyanurchlorid oder Cyanurfluorid kondensiert und das Kondensationsprodukt anschliessend mit einer Verbindung der Formel

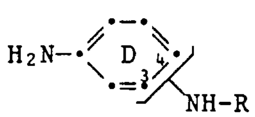

(14) ,

worin R die unter Formel (4) angegebene Bedeutung hat, umsetzt, wobei -NHR in 3- oder 4-Position an den Benzring D gebunden ist.

Die besonders wichtigen Farbstoffe der Formel (5) werden hergestellt, indem man ein Amin der Formel (13) mit einer Verbindung der Formel

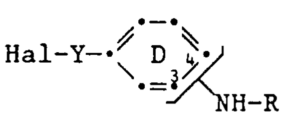

(15) ,

worin Hal Halogen, insbesondere Chlor, ist und Y und R die unter Formel (5) angegebenen Bedeutungen haben, umsetzt, wobei -NH-R in 3- oder 4-Position an den Benzring D gebunden ist.

Die Verbindungen der Formel (6) sind an sich bekannt oder können in Analogie zu bekannten Verbindungen hergestellt werden. Zur Herstellung der Kupferkomplexe der vierzähnigen Formazane sei auf K. Venkataraman, The Chemistry of Synthetic Dyes, Volume VI, Seiten 287 bis 297, Academic Press New York und London (1972) und Ullmanns Encyklopädie der technischen Chemie, Band 11, Seiten 714 bis 718, Verlage Chemie (1976) verwiesen.

Die den Rest der Formel (7), (9) oder (10) einführenden Verbindungen sowie die Verbindungen der Formel (8) sind ebenfalls an sich bekannt oder können in Analogie zu bekannten Verbindungen hergestellt werden.

Die Farbstoffe der Formel (1) eignen sich zum Färben und Bedrucken der verschiedensten Fasermaterialien, insbesondere textiler Fasermaterialien, wie z.B. Seide, Fasermaterialien aus Cellulose und insbesondere Wolle, synthetische Polyamidfasermaterialien, wie z.B. Polyamid-6 und Polyamid-6,6 und Leder. Man erhält mit den Farbstoffen der Formel (1) egale Färbungen in blauen Tönen mit guten Allgemeinechtheiten, insbesondere guter Nassechtheit, wie z.B. Nassreibechtheit und guter Lichtechtheit. Ferner sind die Farbstoffe der Formel (1) sehr gut mit anderen Reaktivfarbstoffen kombinierbar. Das oben genannt Textilmaterial kann in den verschiedensten Verarbeitungsformen vorliegen, wie z.B. als Garn, Gewebe oder Gewirke.

Hervorzuheben ist, dass die erfindungsgemässen Farbstoffe der Formel (1) eine hohe Reduktionsstabilität besitzen, ein gutes Aufziehverhalten und gute Fixiergeschwindigkeit sowie eine hohe Faseregalität und hohe Flächenegalität aufweisen und keinen Dichroismus zeigen.

Aus der EP-A-0 179 019 sind ähnliche Farbstoffe bekannt, welche jedoch nicht alle vorteilhaften Eigenschaften der erfindungsgemässen Farbstoffe aufweisen.

Die erfindungsgemässen Farbstoffe der Formel (1), welche mindestens eine Sulfonsäuregruppe enthalten, liegen entweder in der Form ihrer freien Säure oder vorzugsweise als deren Salze vor. Als Salze kommen beispielsweise Alkali-, Erdalkali- oder Ammoniumsalze oder die Salze eines organischen Amins in Betracht. Als Beispiel seien die Natrium-, Lithium-, Kalium- oder Ammoniumsalze oder das Salz des Triäthanolamins genannt.

Hervorzuheben ist ferner für die erfindungsgemässen Farbstoffe der Formel (1) deren Eignung zum Trichromie-Färben und -Bedrucken von natürlichen oder synthetischen Polyamidfasermaterialien zusammen mit einem faserreaktiven gelb- oder orangefärbenden Farbstoff und einem faserreaktiven rotfärbenden Farbstoff.

Unter Trichromie ist die additive Farbmischung passend gewählter gelb- bzw. orange-, rot- und blaufärbender Farbstoffe zu verstehen, mit denen jede gewünschte Nuance des sichtbaren Farbspektrums durch geeignete Wahl der Mengenverhältnisse eingestellt werden kann.

Die in dem Trichromie-Verfahren zu verwendenden Farbstoffe sollen einen gleichmässigen Farbaufbau bei gleichzeitiger Nuancenkonstanz in verschiedenen Konzentrationen und eine gute Kombinierbarkeit zeigen.

Gegenstand der Erfindung ist somit ein Verfahren zum Trichromie-Färben oder -Bedrucken von natürlichen und synthetischen Polyamidfasermaterialien mit Farbstoffmischungen faserreaktiver Farbstoffe, welches dadurch gekennzeichnet ist, dass man einen blaufärbenden Farbstoff der Formel (1) zusammen mit einem gelb- oder orangefärbenden sulfogruppenhaltigen Reaktivfarbstoff und einem rotfärbenden sulfogruppenhaltigen Reaktivfarbstoff verwendet.

Insbesondere werden faserreaktive, sulfogruppenhaltige gelb- oder orange- und rotfärbende Azofarbstoffe verwendet, die als faserreaktive Gruppe vorzugsweise eine Halogentriazin- oder Halogenpyrimidingruppe oder eine Gruppe der aliphatischen Reihe enthalten.

Als Halogenpyrimidingruppe oder Gruppe der aliphatischen Reihe werden vorzugsweise als faserreaktive Gruppe Difluorchlorpyrimidinyl, insbesondere 2,4-Difluor-5-chlorpyrimidinyl, oder $\alpha,\beta$-Dihalogenpropionyl, insbesondere $\alpha,\beta$-Dibrompropionyl, oder $\alpha$-Halogenacryloyl, insbesondere $\alpha$-Bromacryloyl, verwendet.

Als gelb- oder orangefärbende, sulfogruppenhaltige, faserreaktive Farbstoffe kommen z.B. die folgenden in Betracht:

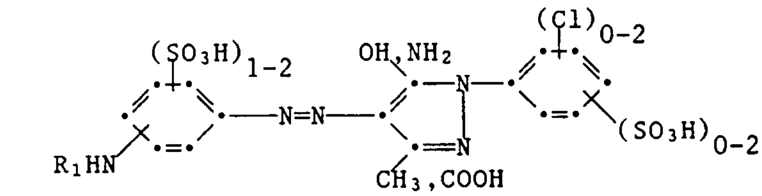

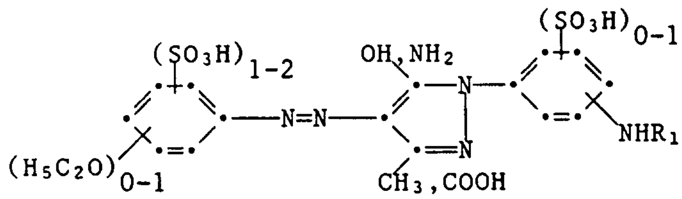

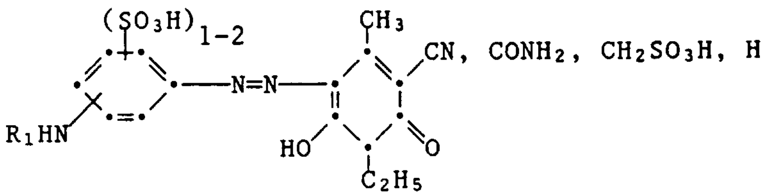

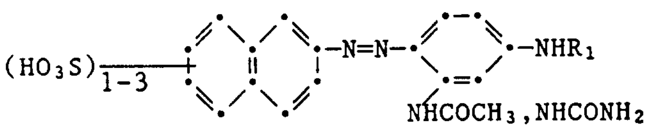

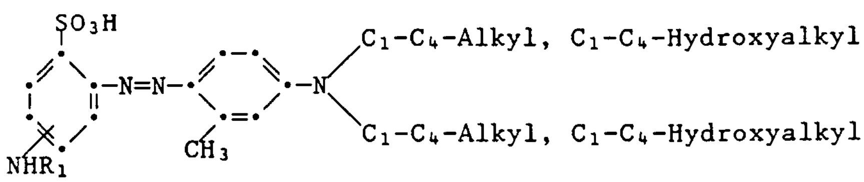

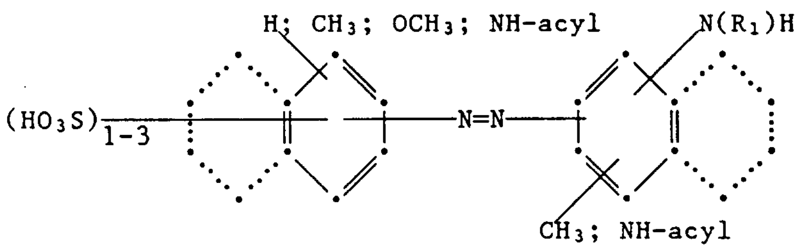

Als rotfärbende, sulfogruppenhaltige, faserreaktive Farbstoffe kommen z.B. die folgenden in Betracht:

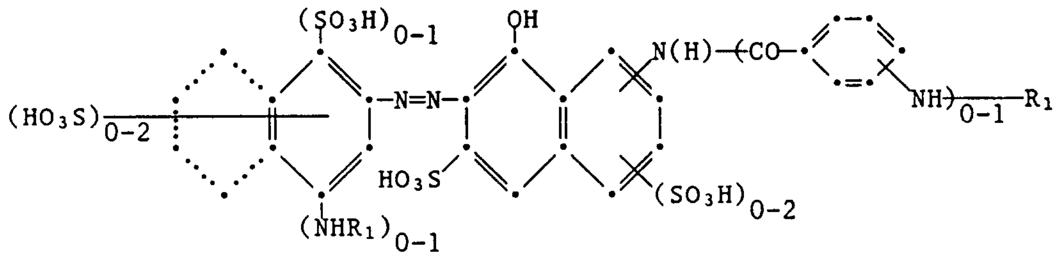

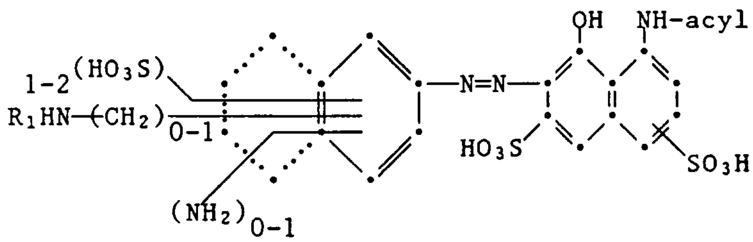

worin Acyl z.B. Acetyl oder gegebenenfalls substituiertes Benzoyl ist.

Die durch Punkte angedeuteten kondensierten Ringe stehen für alternativ mögliche Naphthalinsysteme.

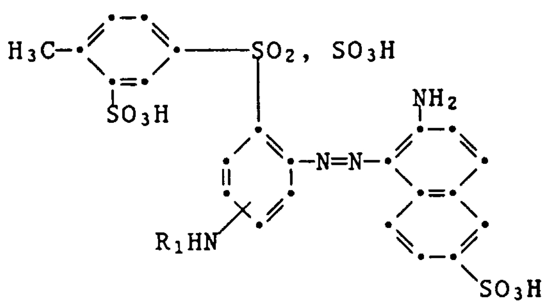

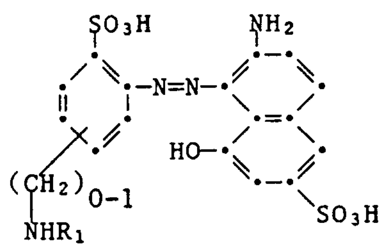

In den vorstehenden Formeln bedeutet $R_1$ einen faserreaktiven Rest, insbesondere einen faserreaktiven Rest der Halogentriazin- oder der Halogen-Pyrimidinreihe oder der aliphatischen Reihe, vorzugsweise bedeutet $R_1$ Difluorchlorpyrimidinyl oder $\alpha,\beta$-Dihalogenpropionyl oder $\alpha$-Bromacryloyl. Besonders bevorzugt ist $R_1$ 2,4-Difluor-5-chlorpyrimidin-6-yl- oder $\alpha,\beta$-Dibrompropionyl oder $\alpha$-Bromacyloyl.

In dem erfindungsgemässen Verfahren zum Trichromie-Färben oder -Bedrucken von natürlichen und synthetischen Polyamidfasermaterialien werden als blaufärbende Farbstoffe die obengenannten, insbesondere diejenigen der Formeln (2) und (3) und ganz besonders bevorzugt die Farbstoffe der Formeln (4) und (5) verwendet.

Als besonders bevorzugte gelb- oder orangefärbende Farbstoffe kommen in Betracht:

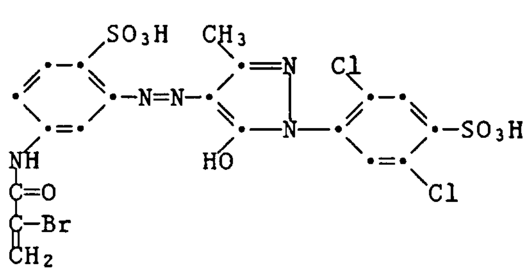

oder

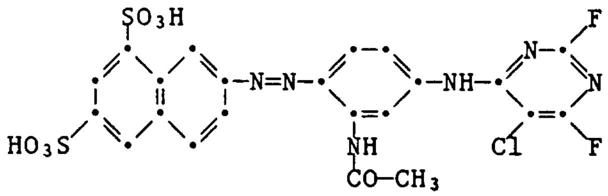

Als besonders bevorzugte rotfärbende Farbstoffe kommen in Betracht:

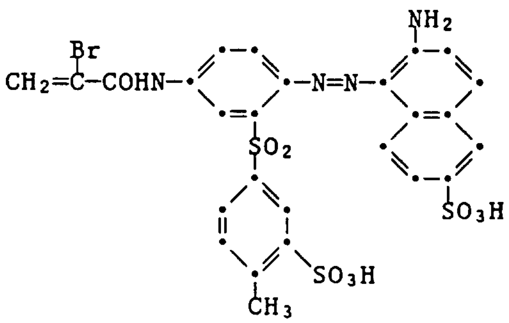

oder

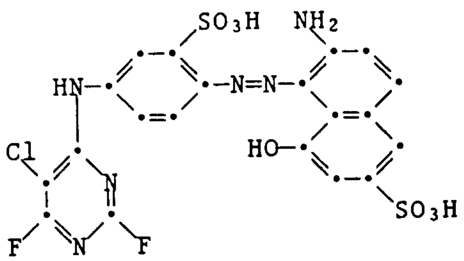

Die in dem erfindungsgemässen Verfahren zum Trichromie-Färben oder -Bedrucken verwendeten gelb- bzw. orange- und rotfärbenden Farbstoffe sind bekannt oder können in Analogie zu bekannten Farbstoffen hergestellt werden. Die Farbstoffe liegen entweder in der Form ihrer freien Sulfonsäure oder vorzugsweise als deren Salz vor, wobei die gleichen Salze wie für die Farbstoffe der Formel (1) angegeben verwendet werden können.

Die Mengen, in denen die Farbstoffe der Formel (1) und die gelb- bzw. orange- und rot-färbenden faserreaktiven Farbstoffe in den Färbebädern oder Druckpasten verwendet werden, können je nach der gewünschten Farbtiefe in weiten Grenzen schwanken, im allgemeinen haben sich Mengen von 0,01 bis 10 Gewichtsprozent, insbesondere 2 bis 10 Gewichtsprozent, bezogen auf das Färbegut, bzw. die Druckpaste, als vorteilhaft erwiesen.

Vorzugsweise wird in dem erfindungsgemässen Verfahren Fasermaterial aus natürlichen Polyamiden, insbesondere Wolle, verwendet.

Besondere Vorrichtungen sind beim erfindungsgemässen Verfahren nicht erforderlich. Es können die üblichen Färbe- und Druckapparate und -maschinen, beispielsweise für Flocke, Kammzug, Stranggarn, Wickelkörper, Stückware und Teppiche verwendet werden.

Die wässrigen Färbebäder können neben dem Reaktivfarbstoff noch Hilfsmittel, insbesondere Egalisierhilfsmittel, enthalten. Die Egalisierhilfsmittel werden in einer Menge von 0,3 bis 3 Gewichtsprozent, bezogen auf das Fasermaterial, verwendet.

Als weitere Hilfsmittel können die Färbebäder Mineralsäuren, wie Schwefelsäure, Sulfaminsäure oder Phosphorsäure, organische Säuren, zweckmässig niedere, aliphatische Carbonsäuren, wie Ameisensäure, Essigsäure oder Maleinsäure, enthalten. Die Säuren dienen vor allem der Einstellung des pH-Wertes der erfindungsgemäss verwendeten Flotten.

Vorzugsweise erfolgt die Einstellung des pH-Wertes von 3 bis 6 mit einer organischen Säure, insbesondere Ameisensäure oder Essigsäure.

Vorzugsweise färbt man bei einem pH-Wert von 4 bis 6, insbesondere 4,2 bis 5,5.

Ferner kann die Färbeflotte verschiedene Salze, insbesondere Ammoniumsalze oder Alkalisalze, wie z.B. Ammoniumsulfat oder Natriumsulfat als Hilfsmittel enthalten.

Das Flottenverhältnis kann innerhalb eines weiten Bereichs gewählt werden, von 1:6 bis 1:80, vorzugsweise 1:10 bis 1:50.

Das Färben erfolgt aus wässriger Flotte nach dem Ausziehverfahren z.B. bei einer Temperatur zwischen 80 und 105 °C bzw. 110 °C bei Verwendung eines Formaldehyd-abspaltenden Wollschutzmittels, vorzugsweise zwischen 98 ° und 103 °C.

Die Färbedauer beträgt in der Regel 30 bis 90 Minuten.

Eine besonders bevorzugte Ausführungsform des erfindungsgemässen Verfahrens ist dadurch gekennzeichnet, dass man nach dem Färben bei vorzugsweise 98 bis 103 °C die Färbeflotte abkühlen lässt auf ca. 75 ° bis 90 °C und den pH-Wert auf 8 bis 9, vorzugsweise auf ca. 8,5, einstellt. Die Einstellung des pH-Wertes kann mit üblichen Mitteln erfolgen, z.B. Alkalihydroxidlösungen sowie insbesondere mit wässriger Ammoniaklösung üblicher Konzentration, z.B. 25 Gewichtsprozent Ammoniak enthaltend.

In den folgenden Beispielen stehen Teile für Gewichtsteile. Die Temperaturen sind Celsiusgrade. Die Beziehung zwischen Gewichtsteilen und Volumenteilen ist dieselbe wie zwischen diejenige zwischen Gramm und Kubikzentimeter.

Beispiel 1: 13,24 Teile des Farbstoffs der Formel (101)

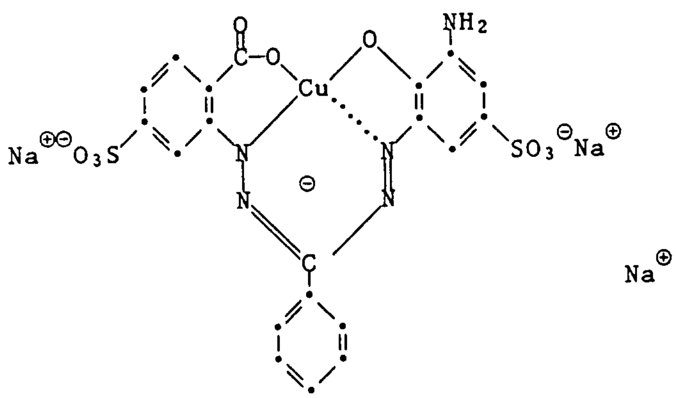

(101)

werden in 200 Teilen Wasser aufgenommen, mit 0,6 Teilen Dinatriumhydrogenphosphat versetzt und auf 40 ° erwärmt, wobei nach Zugabe von Natronlauge bis zum pH-Wert 6,5 eine klare Lösung entsteht. Nach Kühlung auf 0-2 ° wird eine Lösung von 3,9 Teilen Cyanurchlorid in 25 Teilen Aceton innerhalb von 2-3 Minuten zugetropft, wobei der pH mit Natronlauge bei einem Wert von 6,25 gehalten wird.

Nach beendeter Umsetzung wird eine Lösung von 7,72 Teilen 4'-Amino-2,3-dibrompropionylanilid in Wasser/Aceton 1:2 innert 5 Minuten bei 0-5 ° zugetropft. Der pH-Wert wird dabei mit Natronlauge bei 6,25 konstant gehalten. Nach Ausrühren über Nacht wird der Farbstoff abgenuscht, mit Natriumchloridlösung gewaschen und bei 60-70 ° getrocknet. Man erhält 25,1 Teile eines Farbstoffs der Formel (102), der Wolle in echten blauen Tönen färbt.

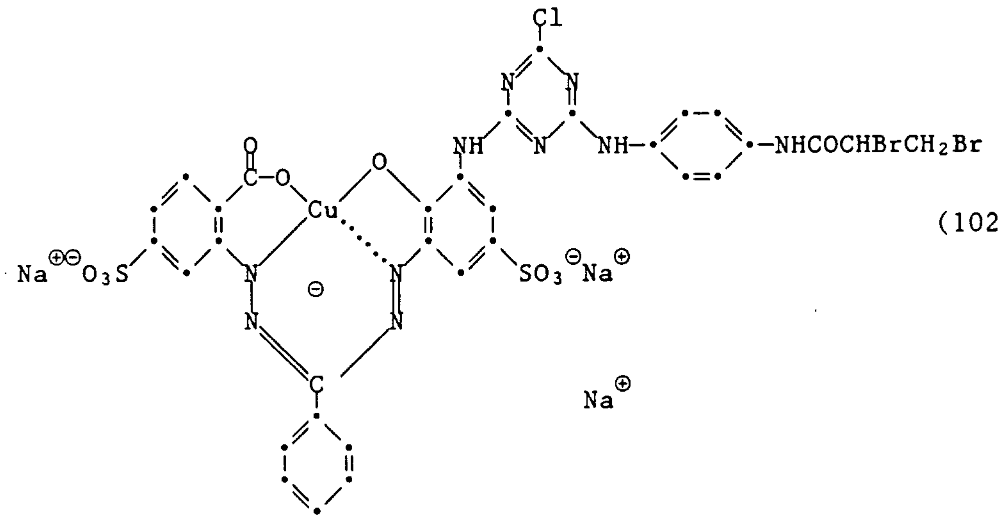

(102)

Beispiel 2: 3 Teile des Farbstoffs der Formel (102) aus Beispiel 1 werden in 50 Teilen Wasser gelöst. Die Lösung wird mit Natronlauge auf den pH-Wert 12 gestellt und 2 Stunden bei 40° gehalten. Nach Abkühlen wird der pH-Wert auf 7 gesenkt und nach Zusatz von Kochsalz der Farbstoff abgenutscht, mit Kochsalzlösung gewaschen und bei 60 - 70° getrocknet. Man erhält 3,1 g Farbstoff der Formel (103), der Wolle in echten blauen Tönen färbt.

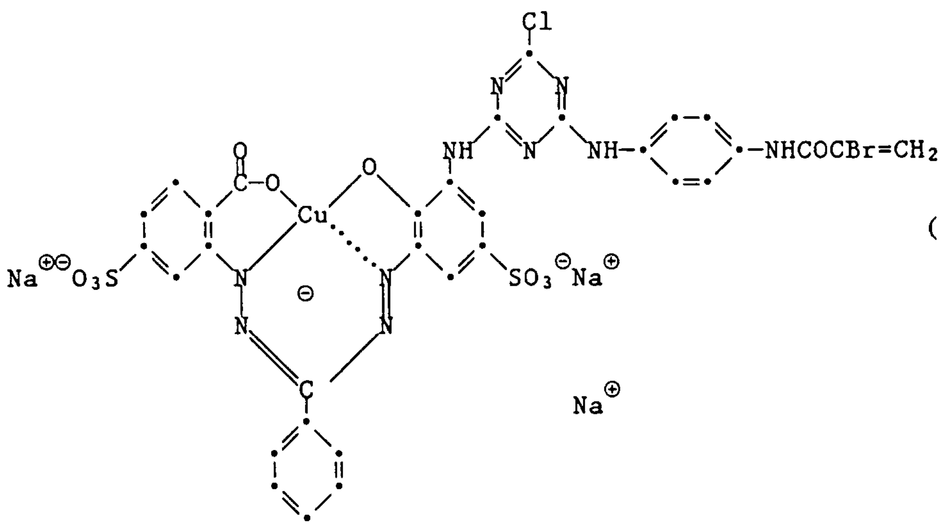

(103)

Beispiel 3: Wenn man wie in Beispiel 1 angegeben verfährt, jedoch anstelle des Farbstoffs der Formel (101) eine äquimolare Menge des Farbstoffes der Formel

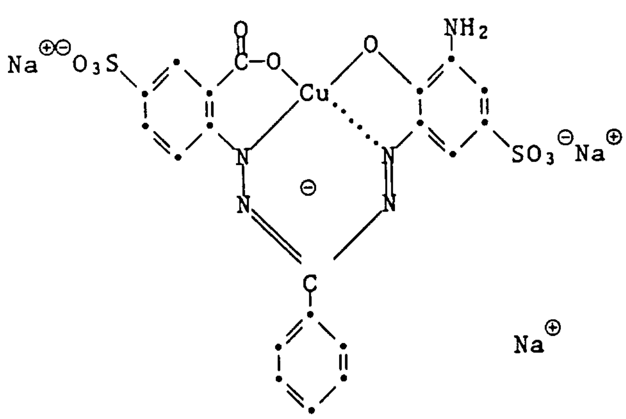

(104)

verwendet, so erhält man einen Farbstoff der Formel (105), der Wolle in echten blauen Tönen färbt.

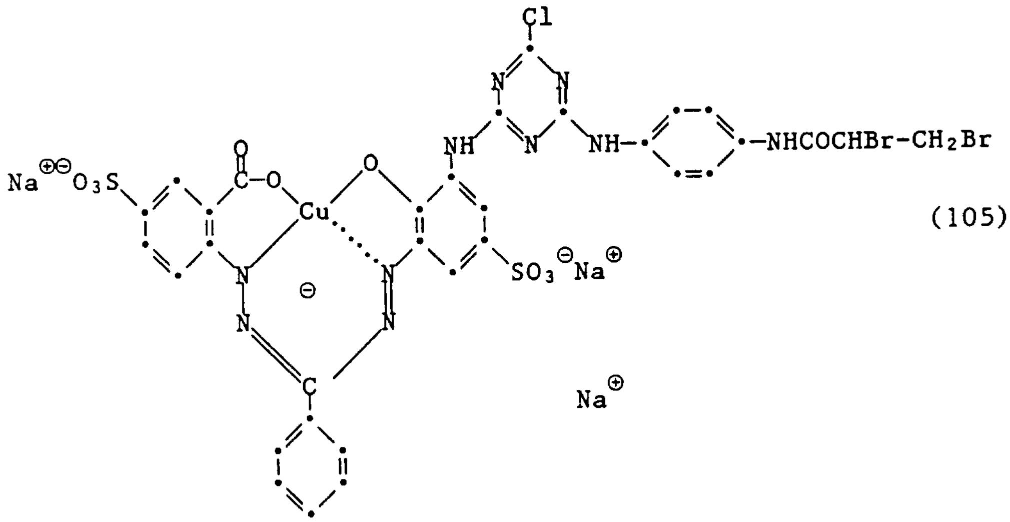

(105)

Beispiel 4: Wenn man wie in Beispiel 2 angegeben verfährt, jedoch anstelle des Farbstoffs der Formel (102) den Farbstoff der Formel (105) aus Beispiel 3 verwendet, so erhält man den Farbstoff der Formel (106), der Wolle in echten blauen Tönen färbt.

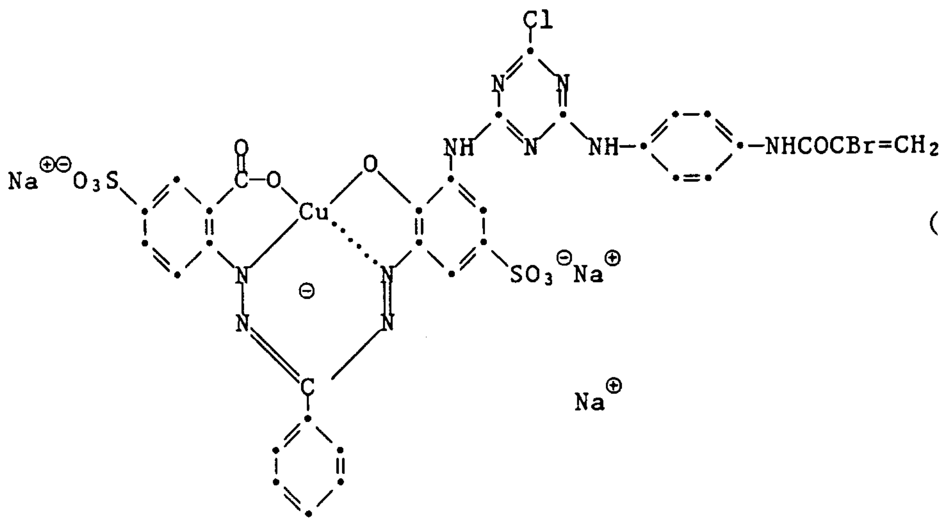

(106)

Beispiel 5 bis 8: Wenn man wie in den Beispielen 1 bis 4 angegeben verfährt, jedoch anstelle von 4'-Amino-2,3-dibrompropionylanilid eine äquimolare Menge 3'-Amino-2,3-dibrompropionylanilid verwendet, so erhält man die in Tabelle 1 in Spalte 2 angegebenen Farbstoffe, die Wolle in den in Spalte 3 angegebenen Tönen färben.

Tabelle 1

| Bsp. | Farbstoff | Nuance auf Wolle |
|---|---|---|
| 5 | 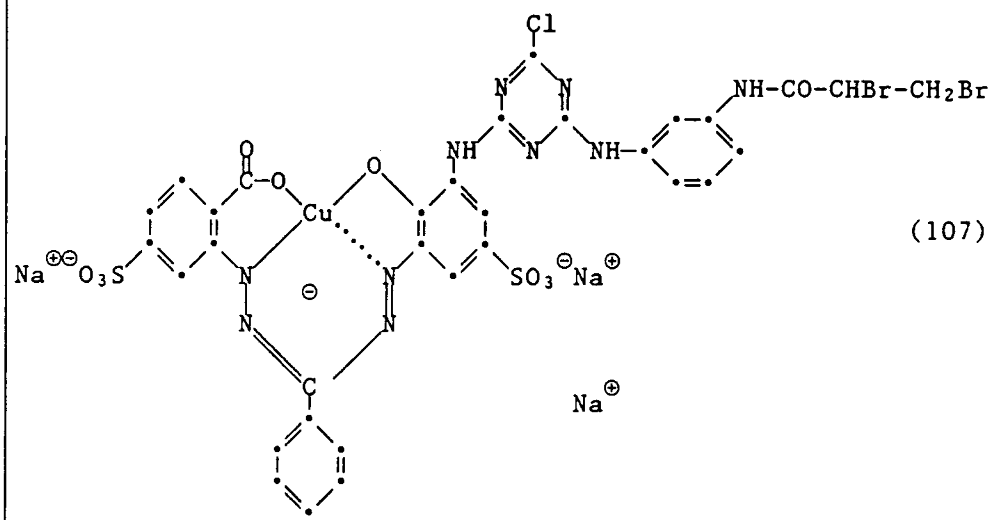 (107) | blau |
| 6 | 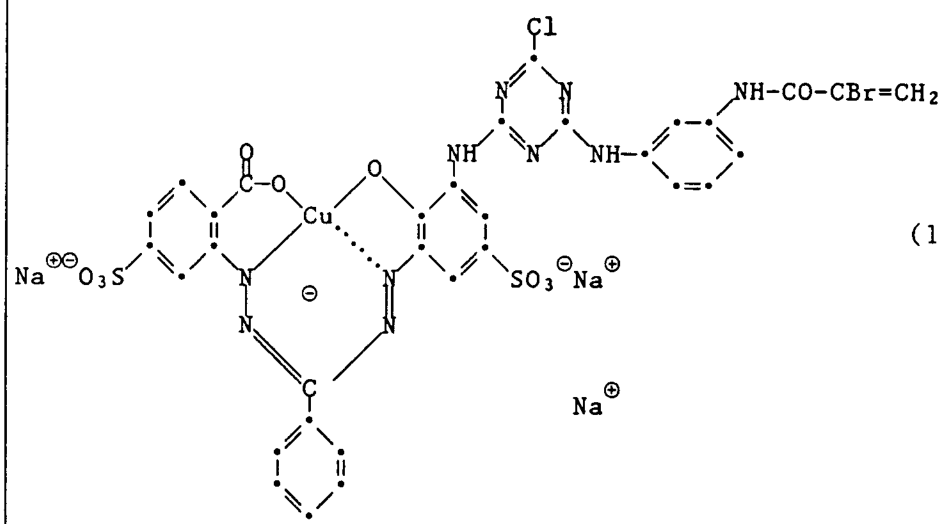 (108) | blau |

Tabelle 1 (Fortsetzung)

| Bsp. | Farbstoff | Nuance auf Wolle |
|---|---|---|
| 7 | 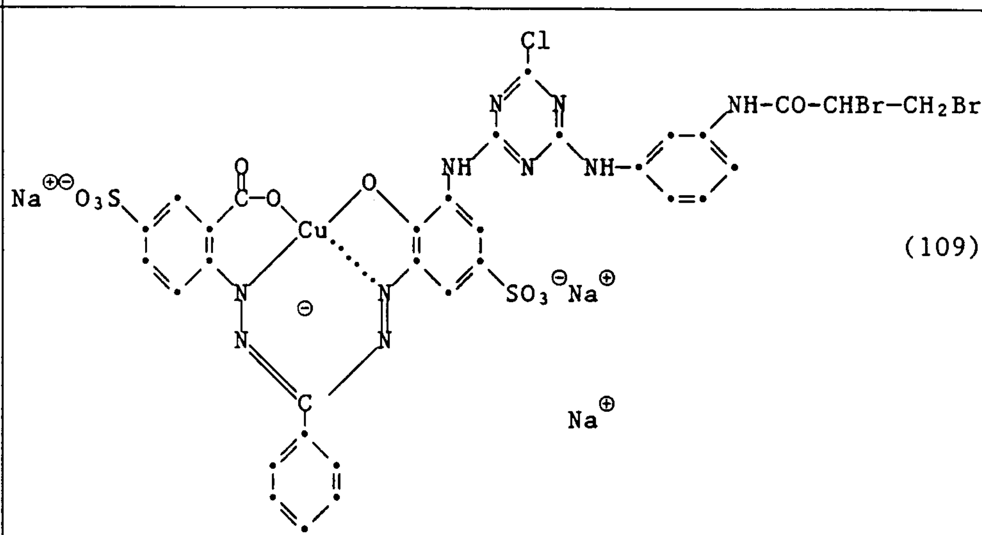 (109) | blau |
| 8 | 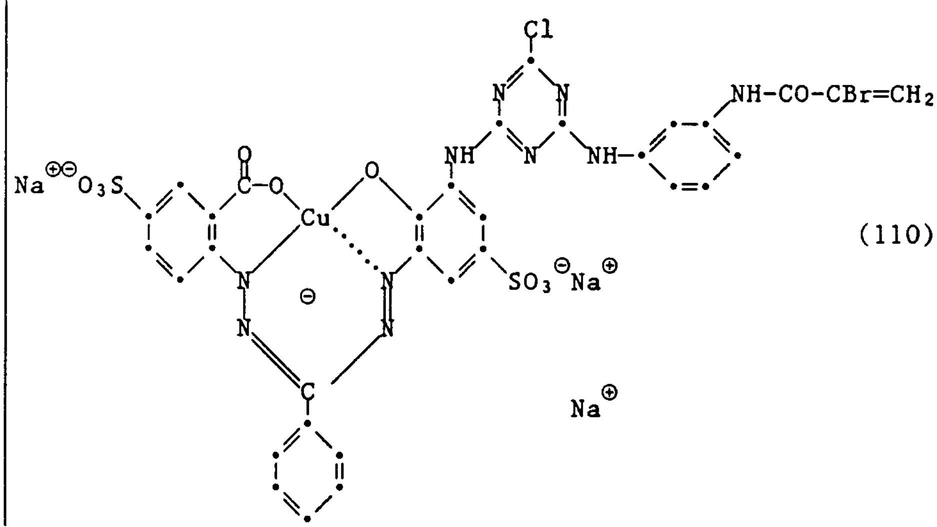 (110) | blau |

Beispiel 9: 6,62 Teile des Farbstoffs der Formel (104) aus Beispiel 3 werden in 50 Teilen Wasser unter Zusatz von Salzsäure bei einem pH-Wert von 7 gelöst. Nach Zugabe von 0,84 Teilen Natriumhydrogencarbonat wird bei Raumtemperatur eine Lösung von 6,1 Teilen 4-(2',3'-Dibrompropionamido)-benzolsulfonylchlorid (hergestellt durch Umsatz von Sulfanilsäure mit 2,3-Dibrompropionylchlorid und anschliessender Ueberführung in das entsprechende Sulfonylchlorid mit Thionylchlorid unter Zusatz von Dimethylformamid) in 25 Teilen Aceton während 10 - 15 Minuten zugetropft, wobei der pH-Wert mit Natronlauge bei 7 gehalten wird. Nach einer Stunde bei 30° und Ausrühren bei Raumtemperatur wird der Farbstoff durch Zugabe von Kochsalz ausgefällt, abgesaugt, mit Kochsalzlösung gewaschen und bei 60 - 70° getrocknet. Man erhält 11 Teile eines Farbstoffs der Formel (111), der Wolle in echten blauen Tönen färbt.

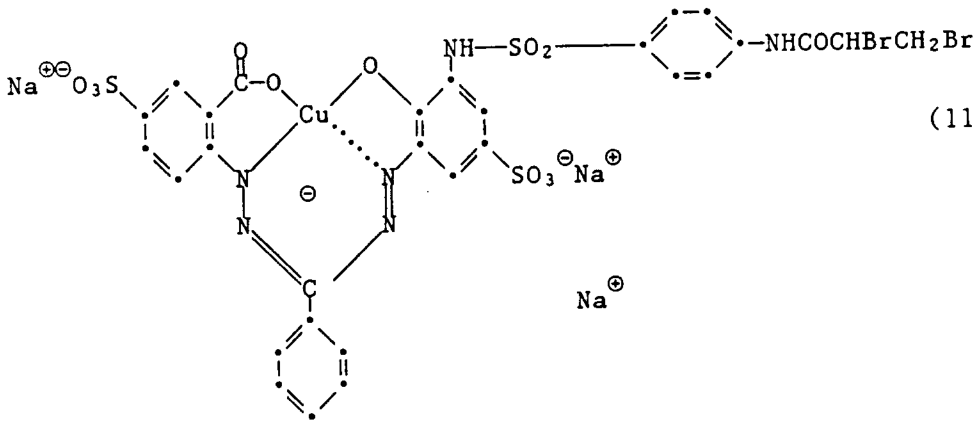

(111)

Beispiel 10: Verfährt man wie in Beispiel 9 angegeben, verwendet aber eine Lösung von 6,62 Teilen des Farbstoffs der Formel (101) aus Beispiel 1 in 100 Teilen Wasser und 0,3 Teilen Dinatriumhydrogenphosphat erhält man 11 Teile eines Farbstoffs der Formel (112), der Wolle in echten blauen Tönen färbt.

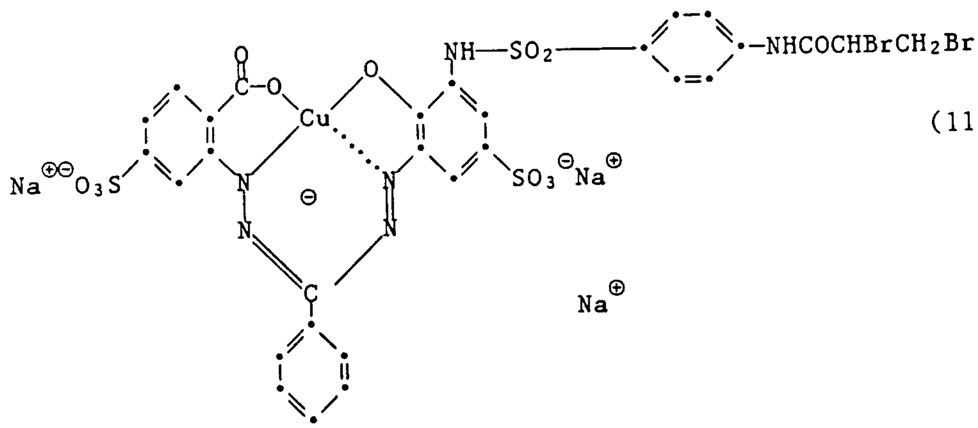

(112)

Beispiele 11 und 12: 5,5 Teile des Farbstoffs der Formel (111) oder (112) werden in 100 Teilen Wasser unter Zusatz von Natronlauge bei einem pH-Wert von 12 bis 12,5 während einer Stunde bei 0 bis 5° gerührt. Anschliessend wird mit Salzsäure auf einen pH-Wert von 7 gestellt und mit Kochsalz versetzt. Der Farbstoff wird abgesaugt, mit Kochsalz-Lösung gewaschen und bei 60 - 70° getrocknet. Man erhält 5,3 Teile des Farbstoffs der Formel (113) bzw. 5,6 Teile des Farbstoffs der Formel (114), die Wolle in echten blauen Tönen färben.

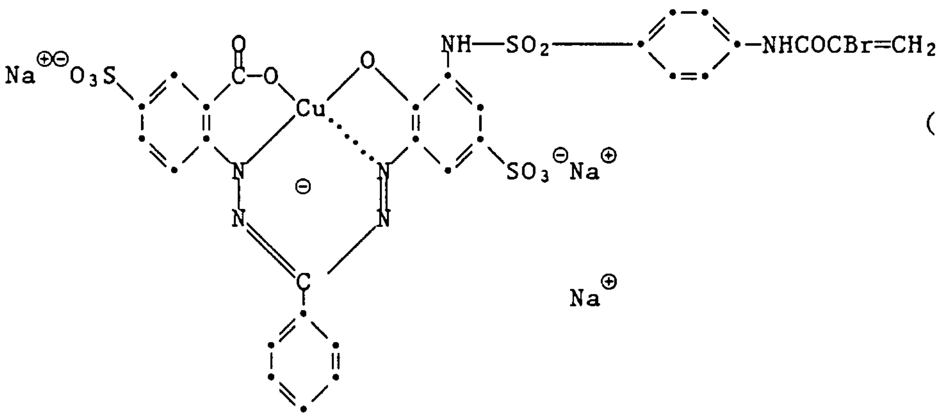

(113)

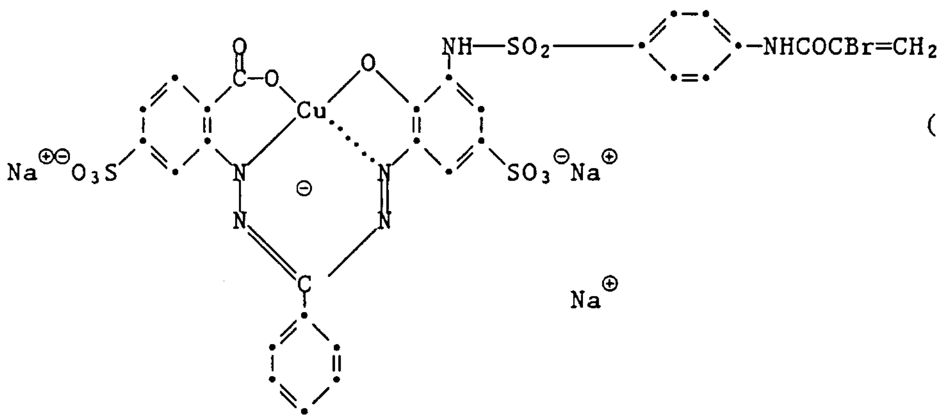

(114)

Beispiele 13 bis 16: Wenn man wie in den Beispielen 9 bis 12 angegeben verfährt jedoch anstelle von 6,1 Teilen 4-(2',3'-Dibrompropionamido)-benzolsulfonylchlorid eine äquimolare Menge 3-(2',3'-Dibrompropionamido)-benzolsulfonylchlorid verwendet, so erhält man die in Tabelle 2 in Spalte 2 angegebenen Farbstoffe, die Wolle in den in Spalte 3 angegebenen Tönen färben.

Tabelle 2

| Bsp. | Farbstoff | Nuance auf Wolle |
|---|---|---|
| 13 | 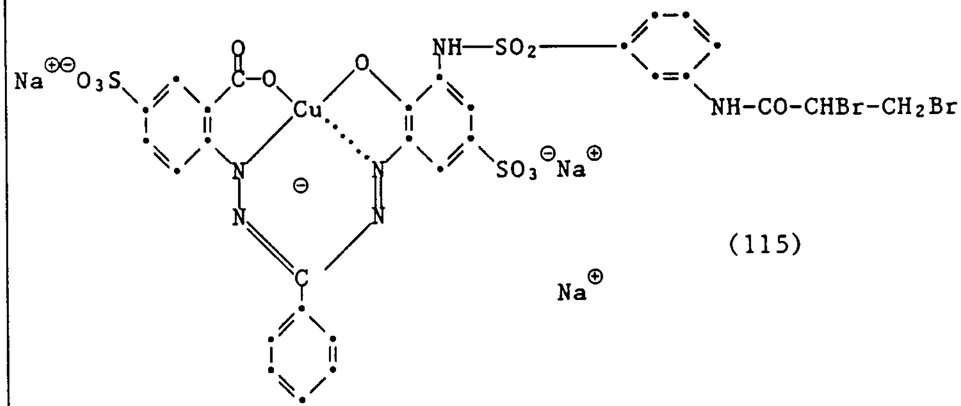 (115) | blau |
| 14 | 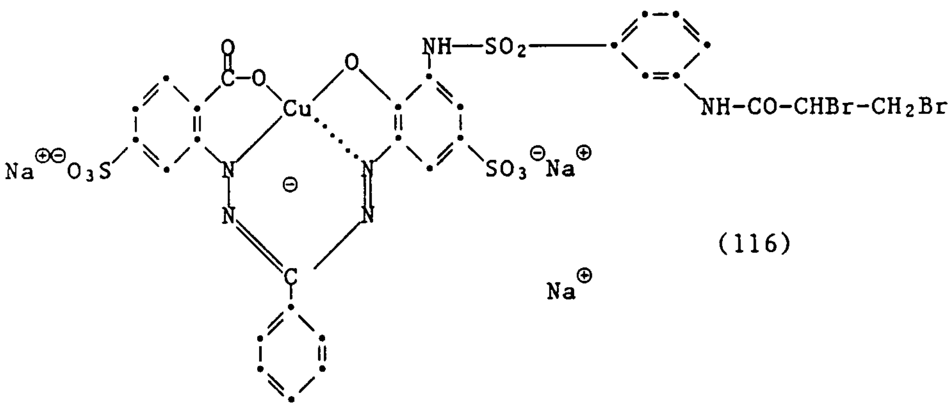 (116) | blau |
| 15 | 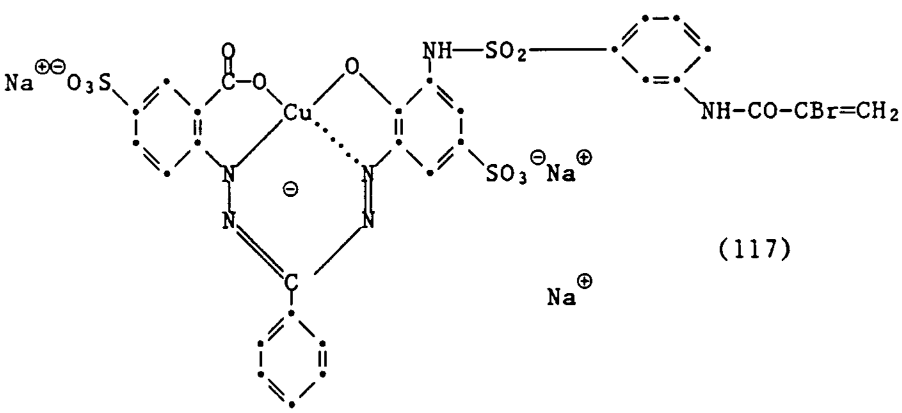 (117) | blau |

Tabelle 2 (Fortsetzung)

| Bsp. | Farbstoff | Nuance auf Wolle |
|---|---|---|
| 16 | 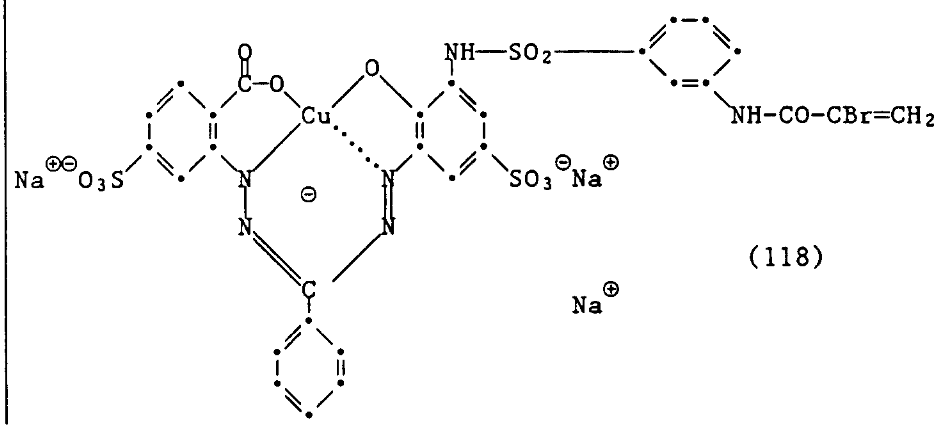 (118) | blau |

Beispiel 17: 1,7 Teile des Farbstoffs der Formel (104) in Beispiel 3 werden unter Zusatz von Salzsäure in 50 Teilen Wasser bei einem pH-Wert von 7 gelöst und mit wenig Dinatriumhydrogenphosphat versetzt. Zu dieser Lösung wird 1 Teil 3-(2',3'-Dibrompropionamido)-benzoylchlorid (hergestellt durch Umsatz von 3-Aminobenzoesäure mit 2,3-Dibrompropionylchlorid und anschliessender Ueberführung in das entsprechende Benzoylchlorid mit Thionylchlorid unter Zusatz von Dimethylformamid) gelöst in Aceton während 5 Minuten zugetropft. Nach Ausrühren über Nacht unter Konstanthaltung des pH-Werts bei 7 mit Natronlauge wird nach Zugabe von Kochsalz filtriert, mit Kochsalzlösung gewaschen und bei 60-70° getrocknet. Man erhält 2,5 Teile eines Farbstoffs der Formel (119), der Wolle in echten blauen Tönen färbt.

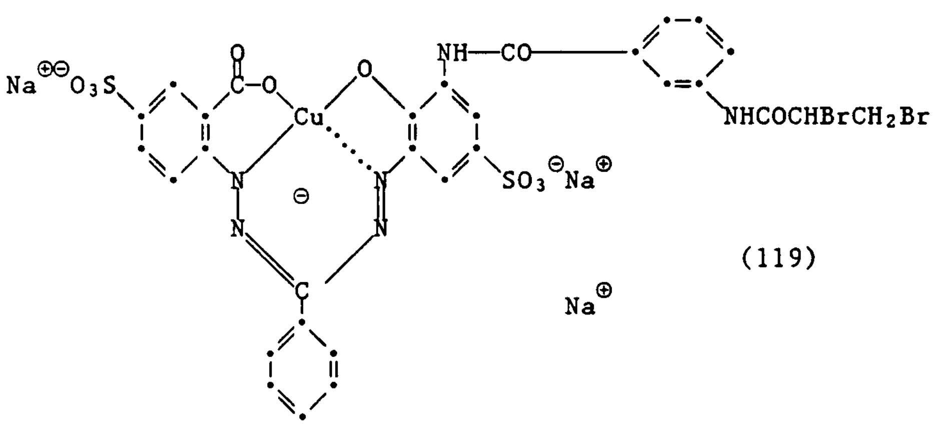

(119)

Beispiel 18: Verfährt man wie in Beispiel 17, verwendet aber einen Farbstoff der Formel (101) aus Beispiel 1, erhält man 2,8 Teile eines Farbstoffs der Formel (120), der Wolle in echten blauen Tönen färbt.

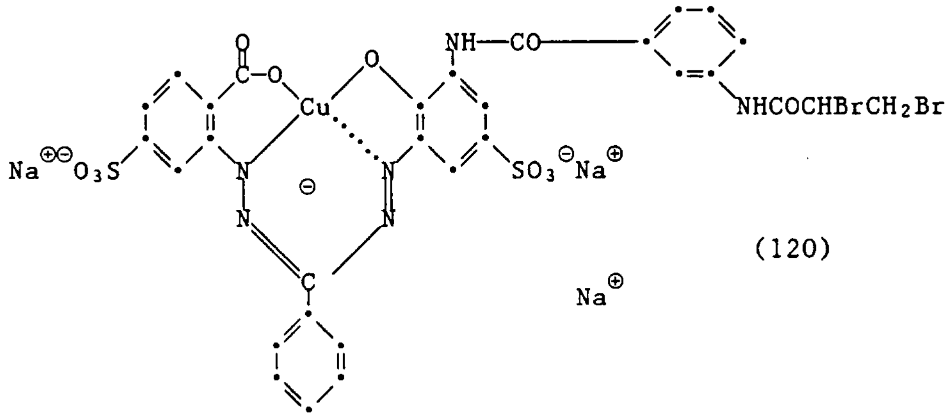

(120)

Beispiel 19 und 20: Verfährt man wie in den Beispielen 11 und 12 angegeben, verwendet aber anstelle der Farbstoffe der Formeln (111) bzw. (112) die Farbstoffe der Formeln (119) bzw. (120), so erhält man Farbstoffe der Formeln (121) bzw. (122), die Wolle in echten blauen Tönen färben.

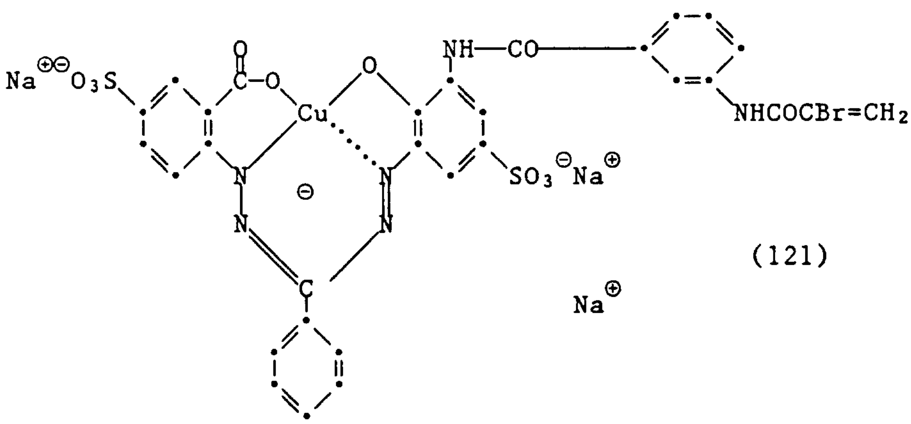

(121)

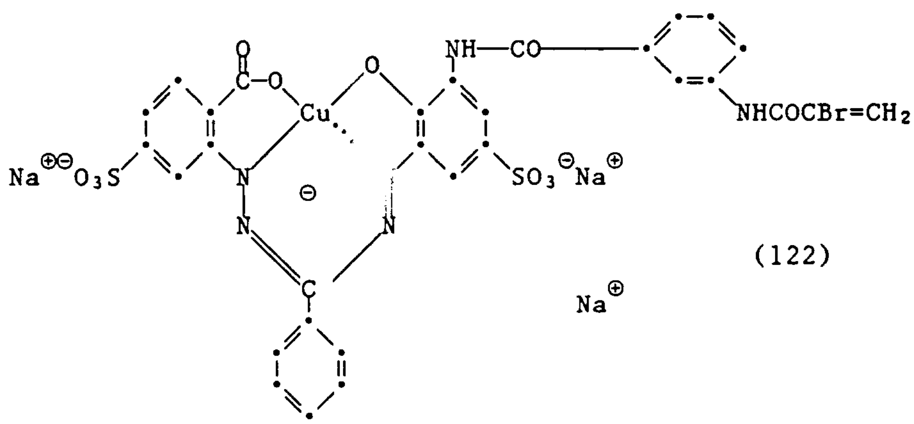

(122)

Beispiele 21 bis 24: Wenn man wie in den Beispielen 17 bis 20 angegeben verfährt, jedoch anstelle von 3-(2',3'-Dibrompropionamido)benzoylchlorid eine äquimolare Menge 4-(2',3'-Dibrompropionamido)-benzoylchlorid verwendet, so erhält man die in Tabelle 3 in Spalte 2 angegebenen Farbstoffe, die Wolle in den in Spalte 3 angegebenen Tönen färben.

Tabelle 3:

| Bsp. | Farbstoff | | Nuance auf Wolle |
|---|---|---|---|
| 21 | 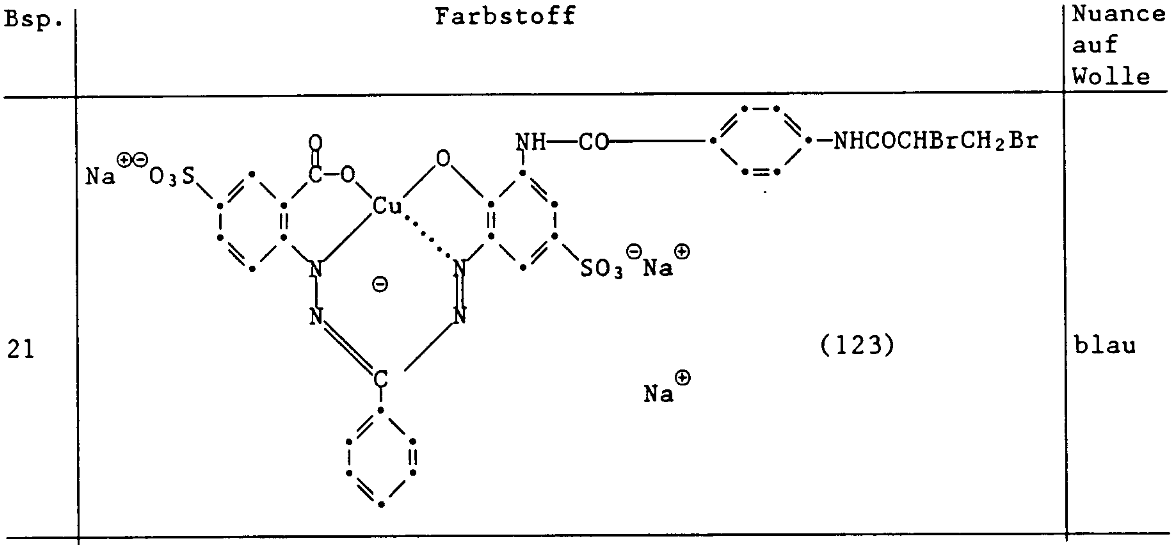 | (123) | blau |

Tabelle 3 (Fortsetzung)

| Bsp. | Farbstoff | Nuance auf Wolle |
|---|---|---|
| 22 | 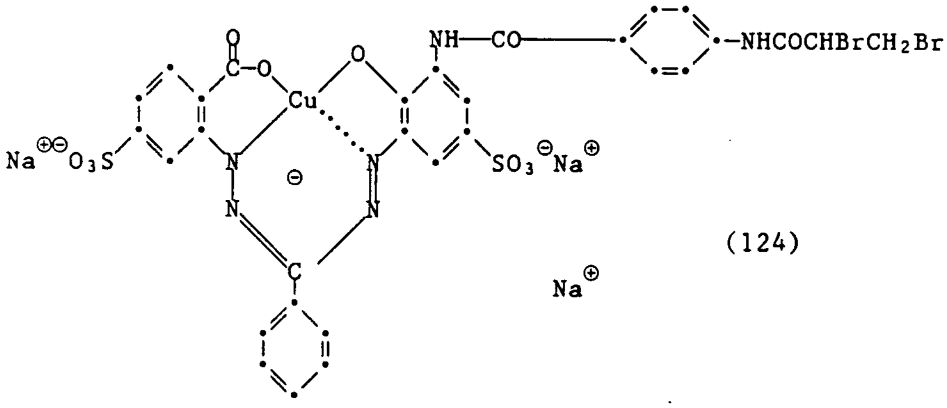 (124) | blau |
| 23 | 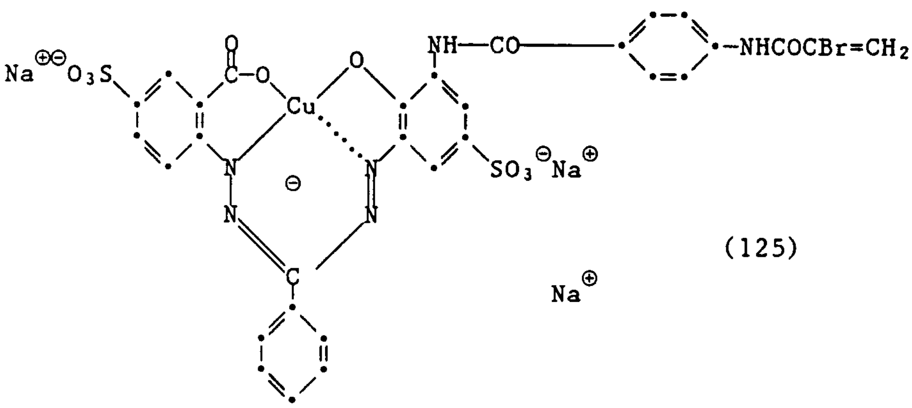 (125) | blau |
| 24 | 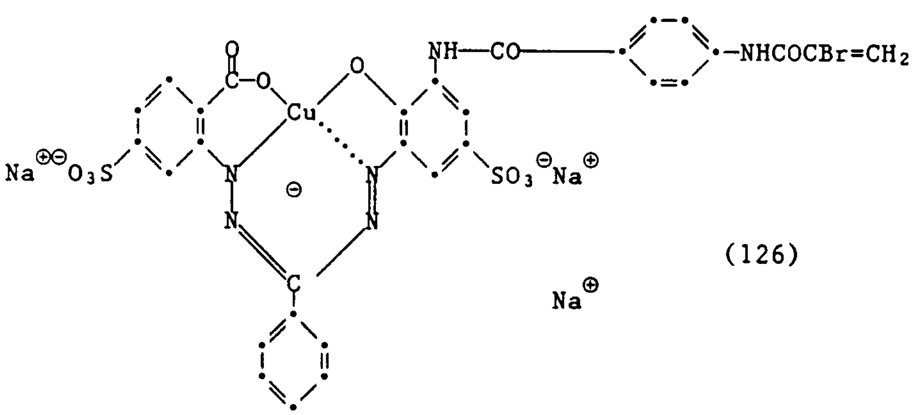 (126) | blau |

Beispiel 25:

6,62 Teile des Farbstoffs der Formel (101) werden wie in Beispiel 1 angegeben gelöst und mit Cyanurchlorid umgesetzt. Anschliessend wird eine Lösung von 2,9 Teilen 3'-Amino-2-bromacrylanilid in 40 Teilen Aceton bei 0-5° und einem pH-Wert von 6,5 innert 10 Minuten zugetropft. Nach Ausrühren über Nacht wird Kochsalz zugesetzt, filtriert und mit Kochsalzlösung gewaschen. Nach Trocknung bei 60-70° werden 12,6 Teile des Farbstoffs der Formel (108) erhalten.

Beispiel 26:

Verfährt man wie in Beispiel 25 angegeben, verwendet aber anstelle des Farbstoffs der Formel (101) den Farbstoff der Formel (104), erhält man den Farbstoff der Formel (110).

Beispiele 27 und 28:

Verfährt man wie in den Beispielen 25 und 26 angegeben, verwendet aber anstelle von 3'-Amino-2-bromacrylanilid eine äquimolare Menge 4'-Amino-2-bromacrylanilid werden Farbstoffe der Formeln (103) bzw. (106) erhalten.

Beispiele 29 bis 36:

Verfährt man wie in den Beispielen 1 bis 8 angegeben, verwendet aber anstelle von Cyanurchlorid eine äquimolare Menge Cyanurfluorid, so erhält man die in Tabelle 4 in Spalte 2 angegebenen Farbstoffe, die Wolle in den in Spalte 3 angegebenen Tönen färben.

Tabelle 4:

| Bsp. | Farbstoff | Nuance auf Wolle |
|---|---|---|
| 29 | 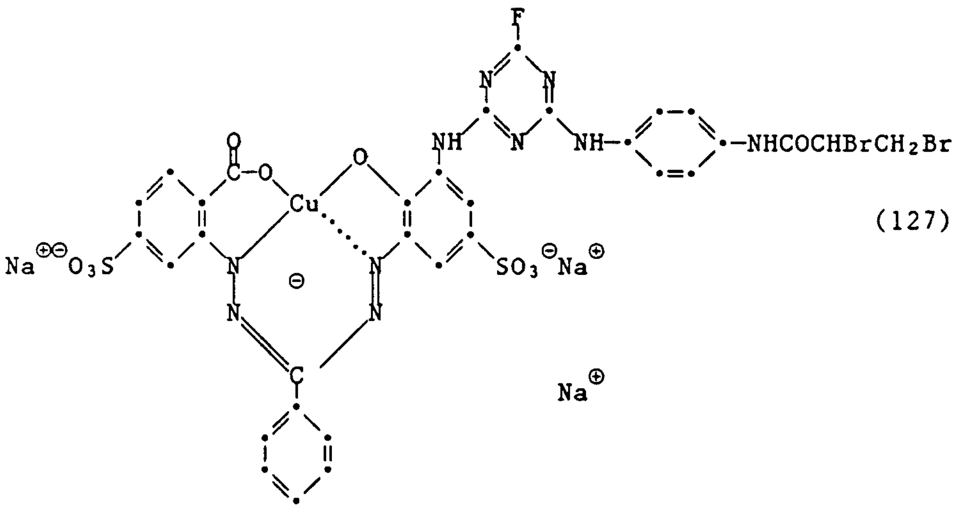 (127) | blau |
| 30 | 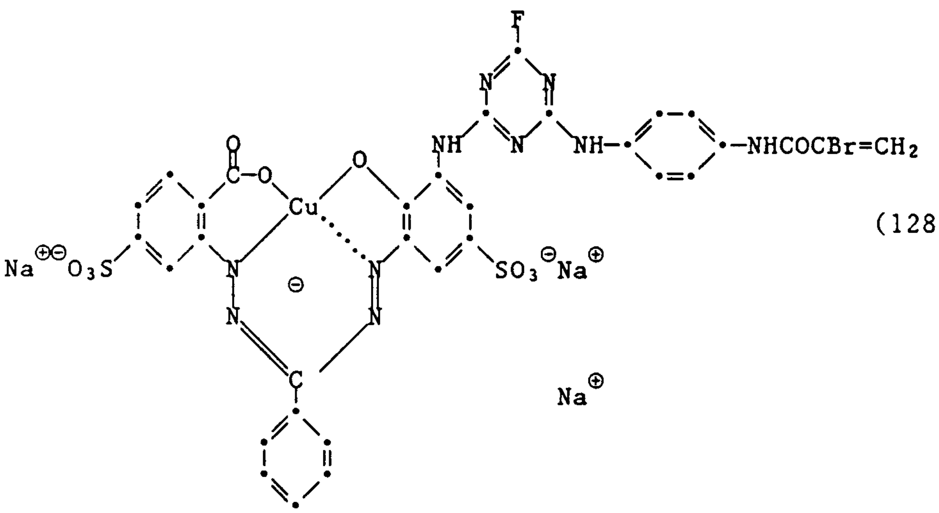 (128) | blau |

Tabelle 4 (Fortsetzung)

| Bsp. | Farbstoff | Nuance auf Wolle |
|---|---|---|
| 31 | 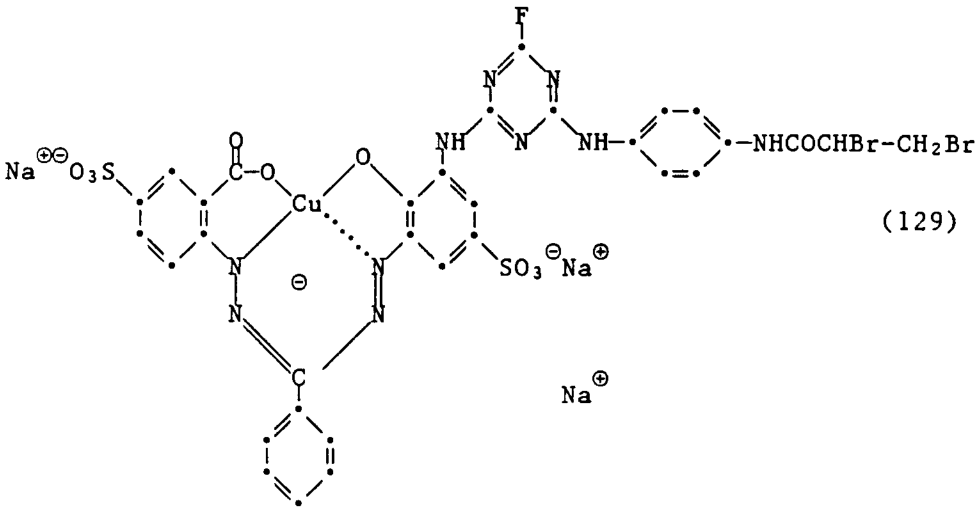 (129) | blau |
| 32 | 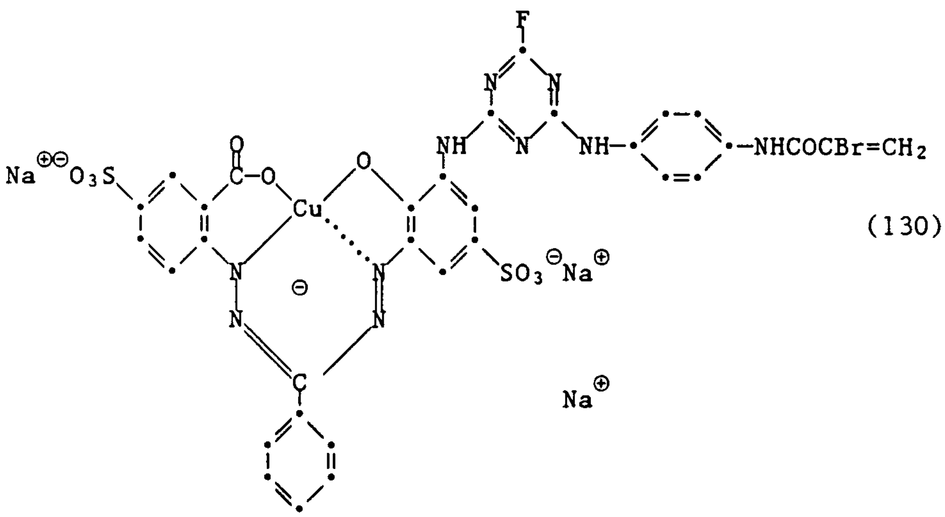 (130) | blau |

Tabelle 4 (Fortsetzung)

| Bsp. | Farbstoff | Nuance auf Wolle |
|---|---|---|
| 33 | 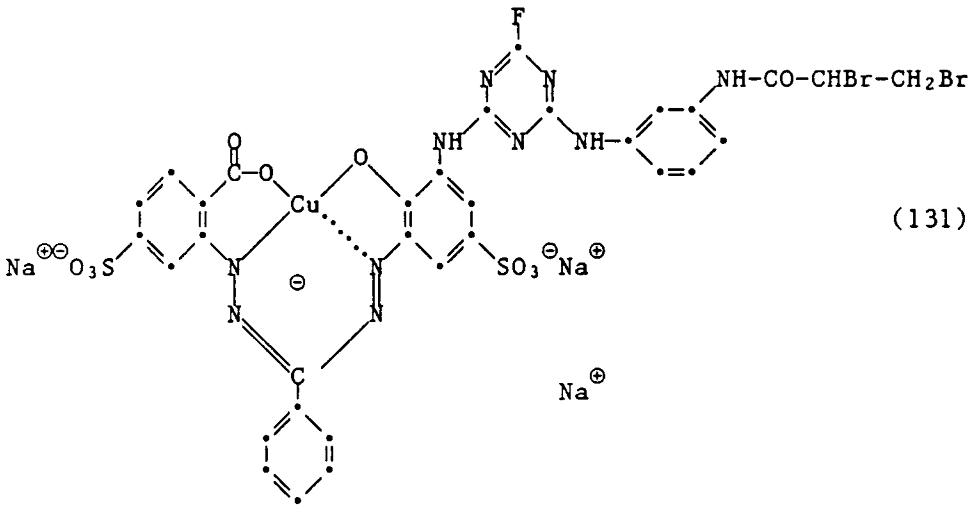 (131) | blau |
| 34 | 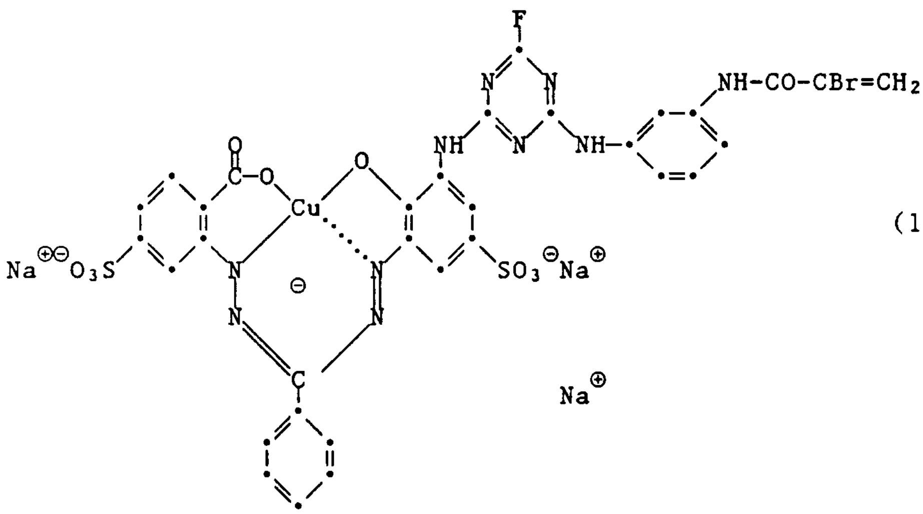 (132) | blau |

Tabelle 4 (Fortsetzung)

| Bsp. | Farbstoff | Nuance auf Wolle |
|---|---|---|
| 35 | 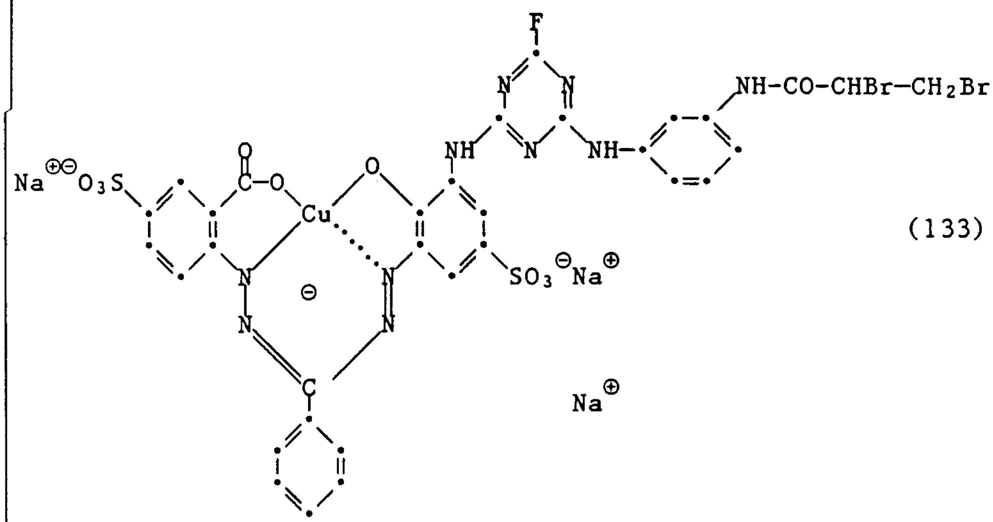 (133) | blau |
| 36 | 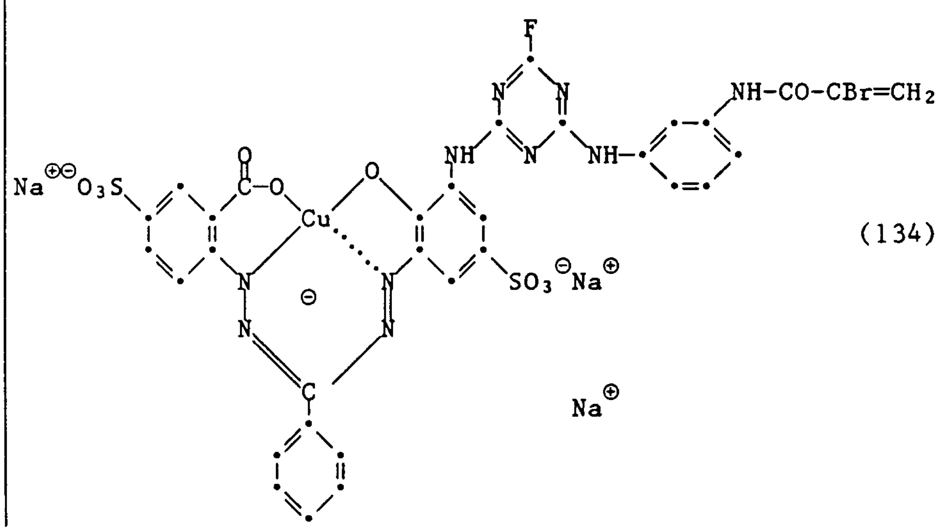 (134) | blau |

Beispiel 37:

Zu einer Suspension von 3,22 Teilen 4'-Amino-2,3-dibrompropionylanilid in 25 Teilen Wasser wird eine Lösung von 2,02 Teilen Cyanurchlorid in 30 Teilen Aceton bei 0-2° und einem pH-Wert von 6-6,5 getropft. Nach beendeter Reaktion wird eine Lösung von 6 Teilen des Farbstoffs der Formel (104) in 50 Teilen Wasser (mit Salzsäure auf einen pH-Wert von 7 gestellt) innert 15 Minuten bei 5° zugegeben, wobei der pH-Wert mit Natronlauge konstant bei 6,25 gehalten wird. Nach Ausrühren über Nacht bei Raumtemperatur wird Kochsalz zugesetzt. Der Farbstoff wird abgesaugt, mit Kochsalzlösung gewaschen und bei 60-70° getrocknet. Man erhält 10,8 Teile Farbstoff der Formel (105).

Beispiele 38 bis 44:

Verfährt man wie in Beispiel 37 angegeben, verwendet aber anstatt 4'-Amino-2,3-dibrompropionylanilid eine äquimolare Menge 3'-Amino-2,3-dibrompropionylanilid oder 4'-Amino-2-brom-acrylanilid bzw. 3'-Amino-2-bromacrylanilid zusammen mit einem Farbstoff der Formel (104) oder eine äquimolare Menge des Farbstoffs der Formel (101), erhält man die entsprechenden Farbstoffe der Formeln (102), (103), (106),

(107), (108) (109) und (110).

Beispiele 45 bis 52:

Verfährt man wie in den Beispielen 1, 3, 5, 7, 29, 31, 33 und 35 angegeben, verwendet aber anstelle von 3'- oder 4'-Amino-2,3-dibrompropionylanilid eine äquimolare Menge 3'- oder 4'-Aminochloracetanilid, so erhält man die in Tabelle 5 in Spalte 2 angegebenen Farbstoffe, die Wolle in den in Spalte 3 angegebenen Tönen färben.

Tabelle 5

| Bsp. | Farbstoff | Nuance auf Wolle |
|---|---|---|
| 45 | 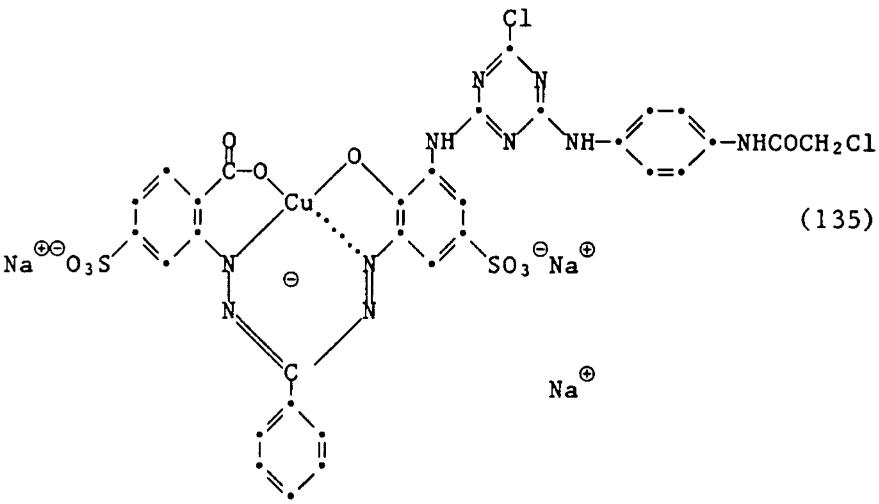 (135) | blau |
| 46 | 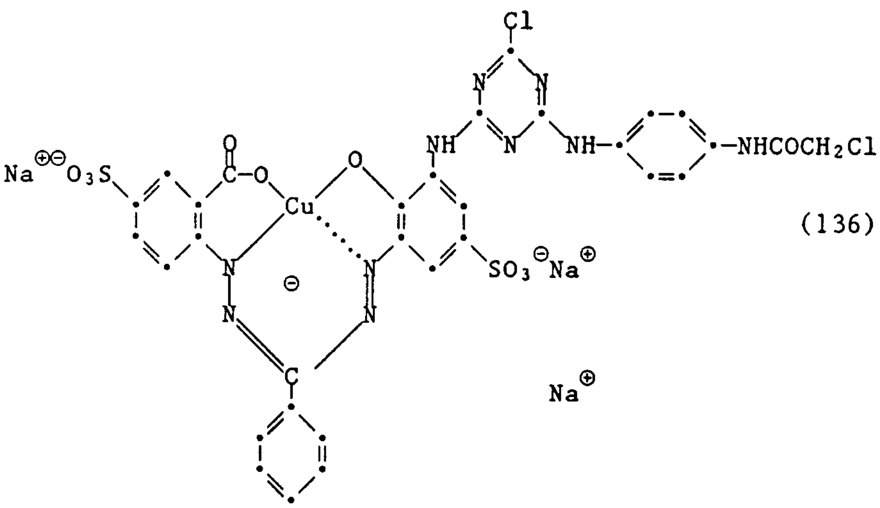 (136) | blau |

Tabelle 5 (Fortsetzung)

| Bsp. | Farbstoff | | Nuance auf Wolle |
|---|---|---|---|
| 47 | 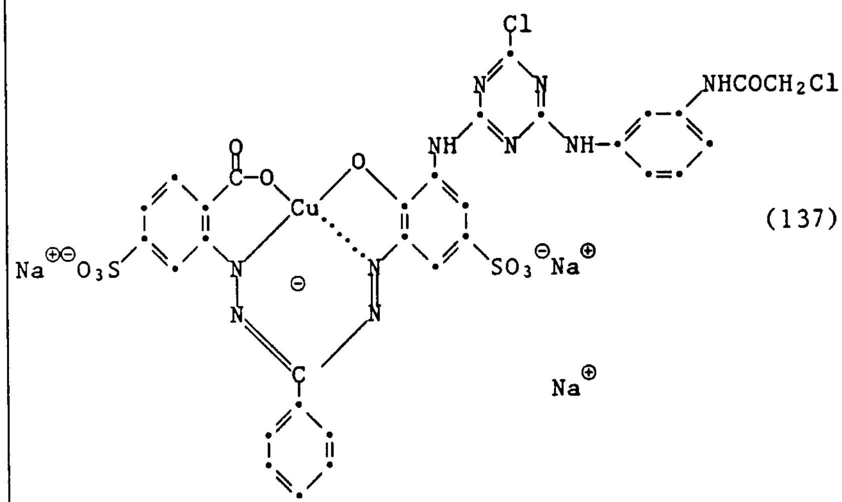 | (137) | blau |
| 48 | 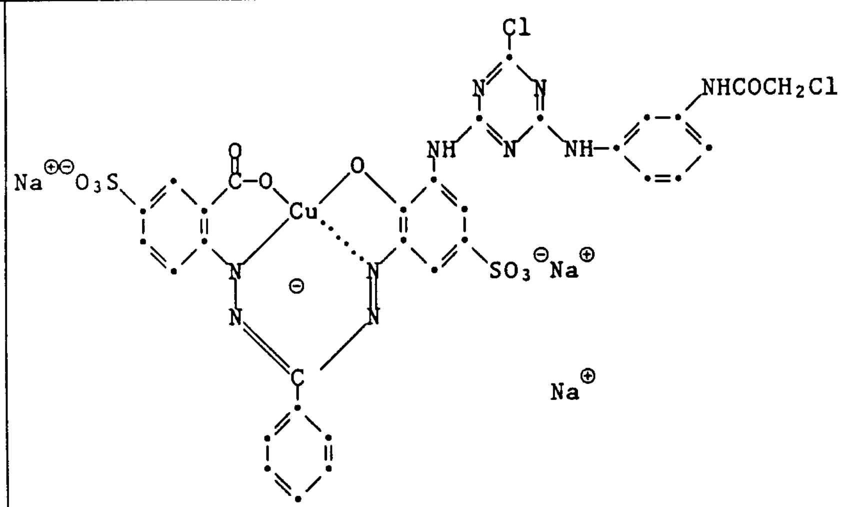 | (138) | blau |

Tabelle 5 (Fortsetzung)

| Bsp. | Farbstoff | | Nuance auf Wolle |
|---|---|---|---|
| 49 | 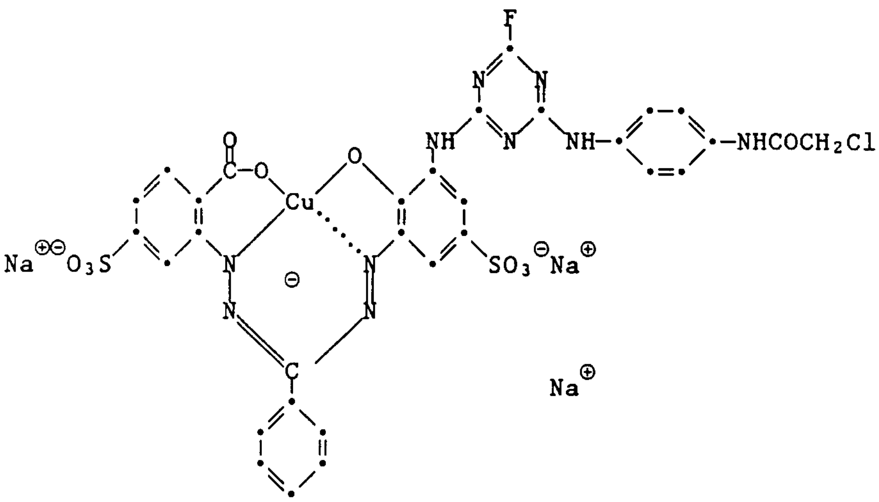 | (139) | blau |
| 50 | 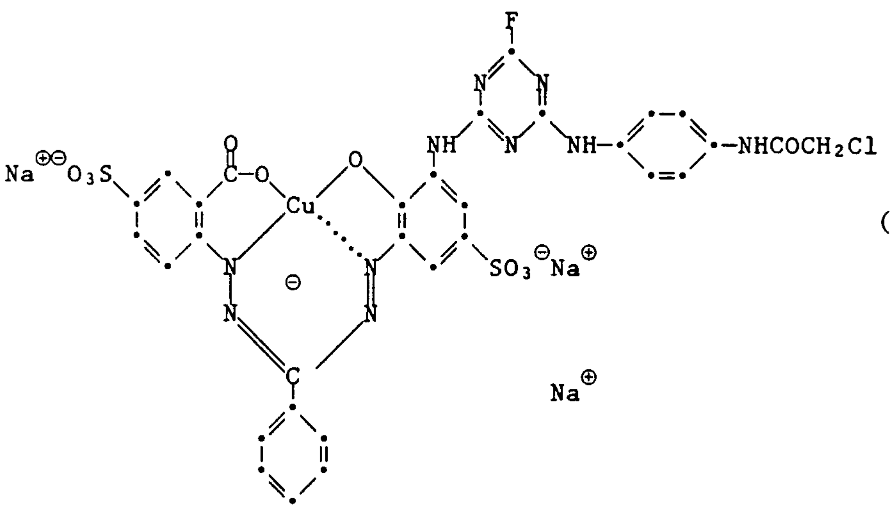 | (140) | blau |

Tabelle 5 (Fortsetzung)

| Bsp. | Farbstoff | Nuance auf Wolle |
|---|---|---|
| 51 | 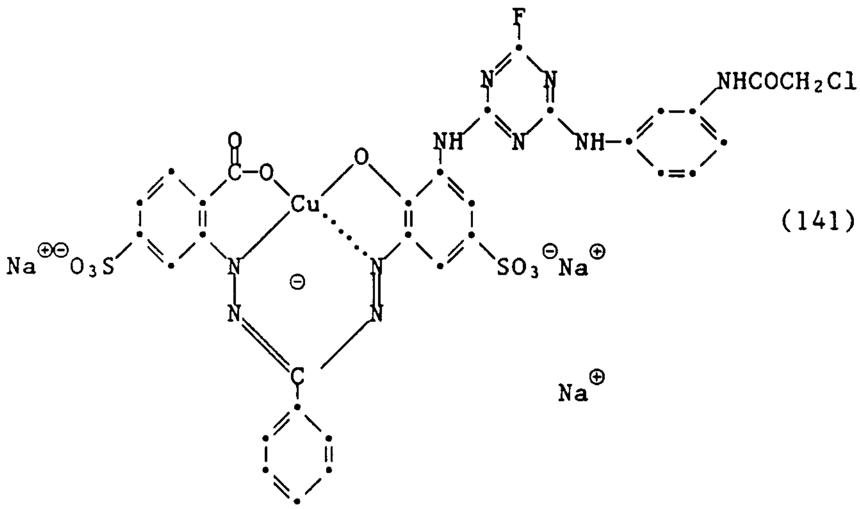 (141) | blau |
| 52 | 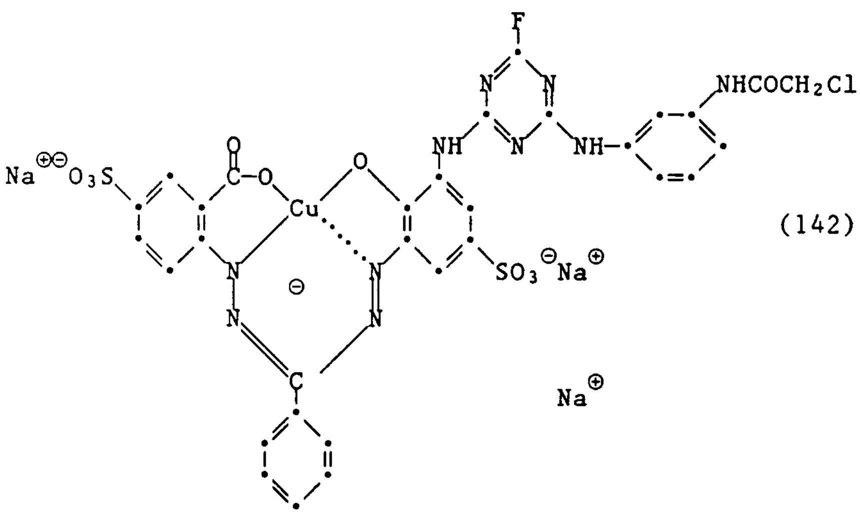 (142) | blau |

Beispiele 53 bis 56: Verfährt man wie in den Beispielen 9, 10, 13 und 14 angegeben, verwendet aber anstatt 3- oder 4-(2',3'-Dibrompropionamido)-benzolsulfonylchlorid eine äquimolare Menge 3- oder 4-Chloracetamidobenzolsulfonylchlorid, so erhält man die in der folgenden Tabelle 6 in Spalte 2 angegebenen Farbstoffe, die Wolle in den in Spalte 3 angegebenen Tönen färben.

Tabelle 6

| Bsp. | Farbstoff | Nuance auf Wolle |
|---|---|---|
| 53 | 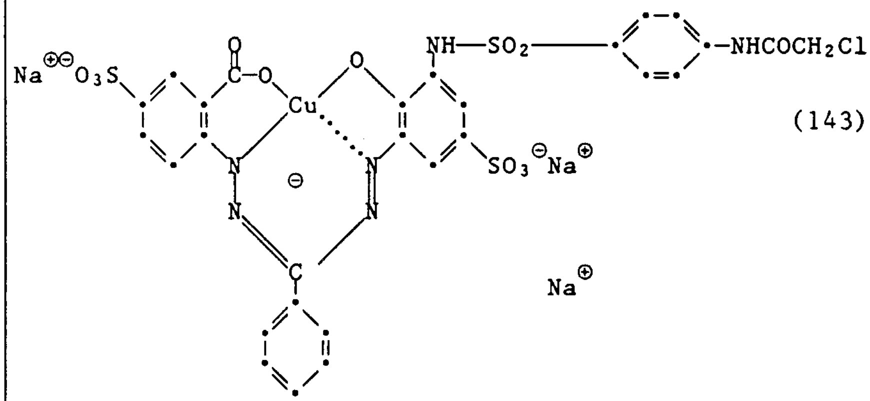 (143) | blau |
| 54 | 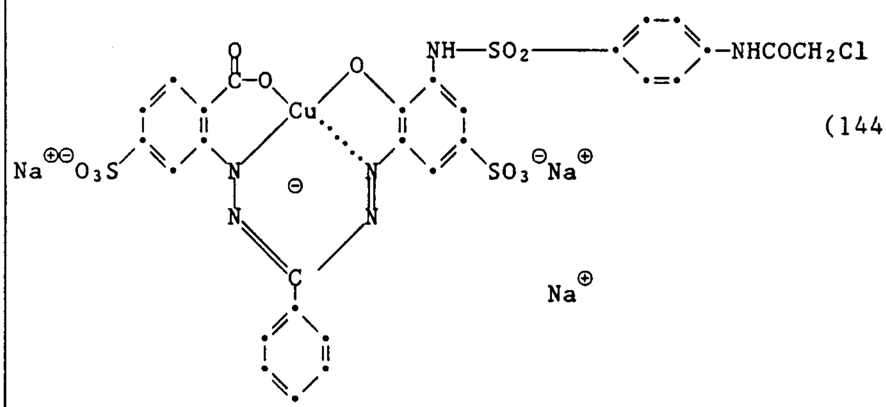 (144) | blau |
| 55 | 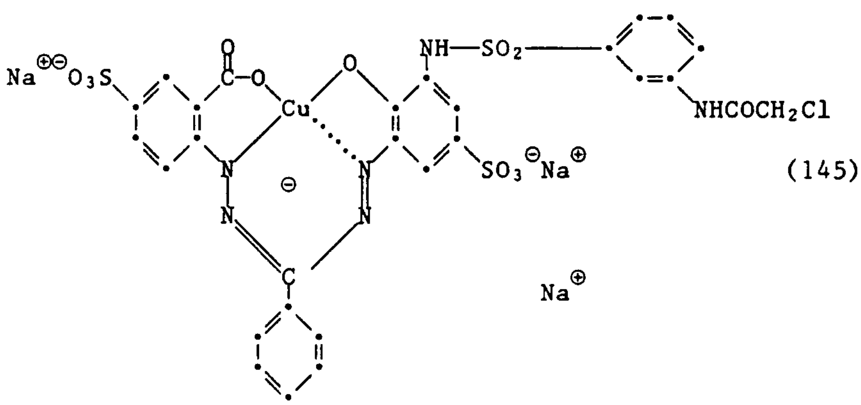 (145) | blau |

Tabelle 6 (Fortsetzung)

| Bsp. | Farbstoff | Nuance auf Wolle |
|---|---|---|
| 56 | 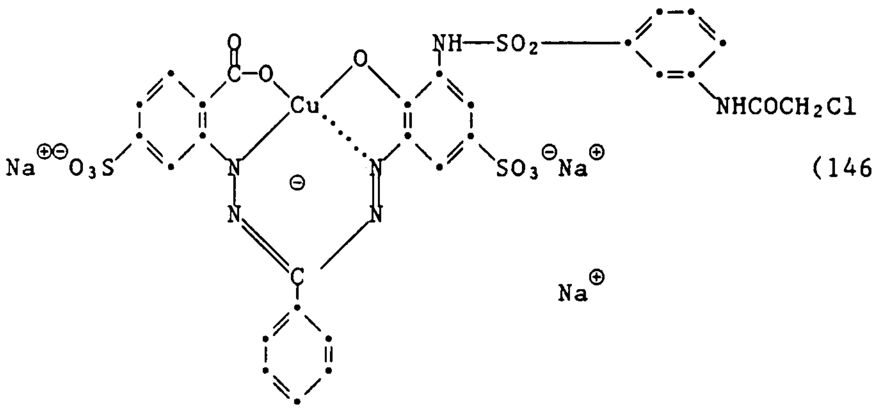 (146) | blau |

Beispiele 57 bis 60: Verfährt man wie in den Beispielen 17, 18, 21 und 22 angegeben, verwendet aber anstatt 3- oder 4-(2',3'-Dibrompropionamido)-benzoylchlorid eine äquimolare Menge 3- oder 4-Chloracetamidobenzoylchlorid, so erhält man die in der folgenden Tabelle 7 in Spalte 2 angegebenen Farbstoffe, die Wolle in den in Spalte 3 angegebenen Tönen färben.

Tabelle 7

| Bsp. | Farbstoff | Nuance auf Wolle |
|---|---|---|
| 57 | 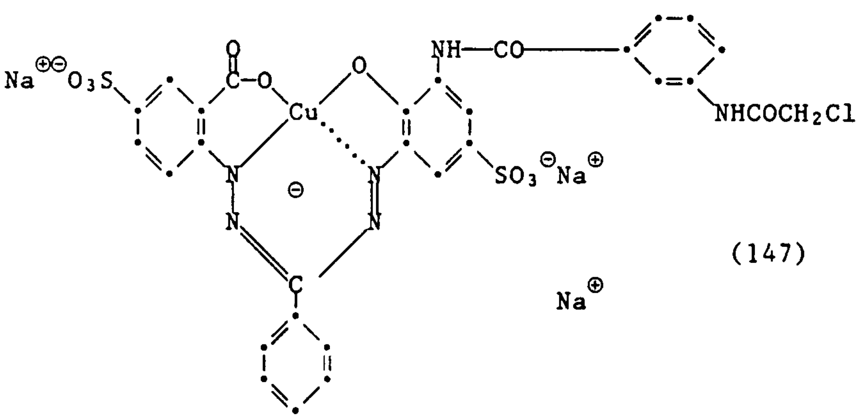 (147) | blau |

Tabelle 7 (Fortsetzung)

| Bsp. | Farbstoff | Nuance auf Wolle |
|---|---|---|
| 58 | 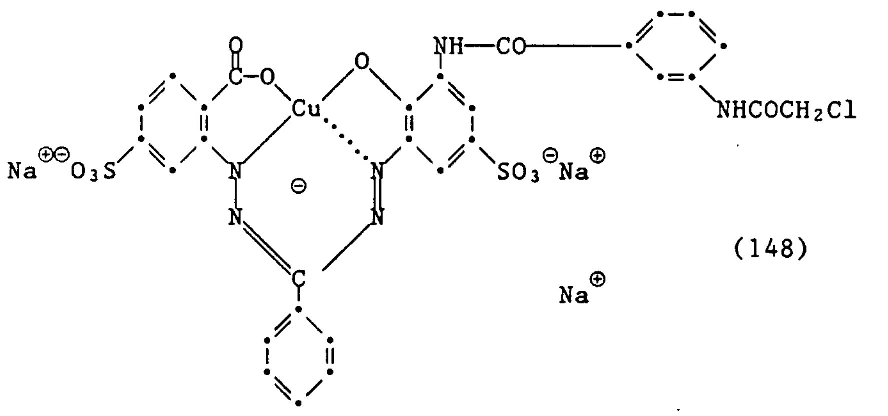 (148) | blau |
| 59 | 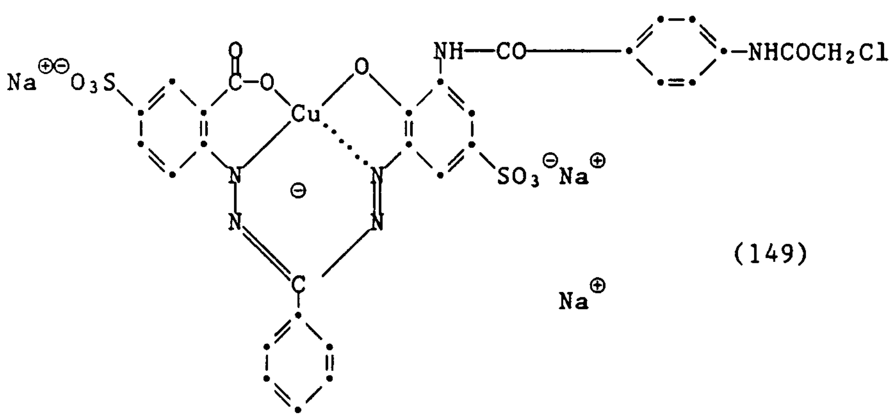 (149) | blau |
| 60 | 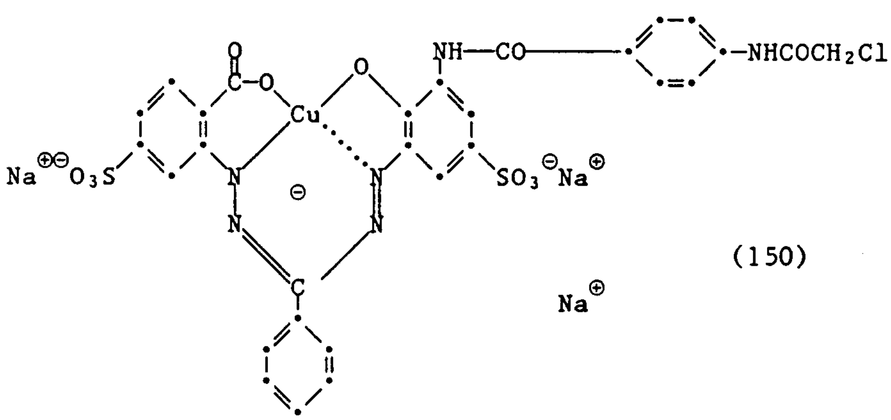 (150) | blau |

Beispiel 61:

6,62 Teile des Farbstoffs der Formel (104) werden in 50 Teilen Wasser unter Zusatz von Salzsäure bei einem pH-Wert von 7 gelöst. Anschliessend wird bei Raumtemperatur eine Suspension von 2,9 Teilen 4-Acetamidobenzolsulfonylchlorid in 40 Teilen Aceton innert 10 Minuten zugetropft. Der pH-Wert wird dabei konstant bei 7 gehalten. Nach Ausrühren über Nacht wird klärfiltriert, mit Natronlauge auf einen pH-Wert von 13,5 gestellt und eine Stunde am Rückfluss gehalten. Anschliessend wird bei Raumtemperatur klärfiltriert, mit Salzsäure auf einen pH-Wert von 7-8 gestellt und mit Kochsalz versetzt. Der Farbstoff wird

abgesaugt und mit Kochsalzlösung gewaschen. Die feuchte Farbstoffpaste wird in 200 Teilen Wasser gelöst und mit 0,84 Teilen Natriumhydrogencarbonat versetzt. Anschliessend werden 2,76 Teile 2,3-Dibrompropionylchlorid bei einem pH-Wert von 7 rasch zugetropft. Nach Ausrühren über Nacht beim pH-Wert von 7 wird Kochsalz zugesetzt, filtriert, mit Kochsalzlösung gewaschen und bei 60-70° getrocknet. Man erhält 8,7 Teile Farbstoff der Formel (111).

Beispiele 62 bis 68:

Verfährt man wie in Beispiel 61 angegeben, verwendet aber anstelle von 4-Acetamido-benzolsulfonylchlorid eine äquimolare Menge 3-Acetamido-benzolsulfonylchlorid oder 4-Acetamidobenzoylchlorid bzw. 3-Acetamido-benzoylchlorid zusammen mit dem Farbstoff der Formel (104) oder verwendet man eine äquimolare Menge des Farbstoffs der Formel (101), erhält man Farbstoffe der Formeln (112), (115), (116), (119), (120), (123) und (124).

Beispiele 69 bis 76:

Verfährt man wie in den Beispielen 61 bis 68 angegeben, verwendet aber anstatt 2,3-Dibrompropionylchlorid eine äquimolare Menge Chloracetylchlorid, so erhält man die Farbstoffe der Formeln (143), (144), (145), (146), (147), (148), (149) und (150).

Beispiele 77 bis 93:

Verfährt man wie in den Beispielen 1, 2, 5, 6, 10, 12, 16, 18, 22, 24, 30, 33, 34, 55 oder 60 angegeben, verwendet aber anstelle eines Amins der Formel (101) eine äquimolare Menge eines der in Tabelle 8 in Spalte 2 angegebenen Amine, so erhält man die in Spalte 3 angegebenen Farbstoffe, die Wolle in den in Spalte 4 aufgeführten Nuancen färben.

Tabelle 8

| Bsp. | Amin | Farbstoff | Nuance auf Wolle |
|---|---|---|---|
| 77 | 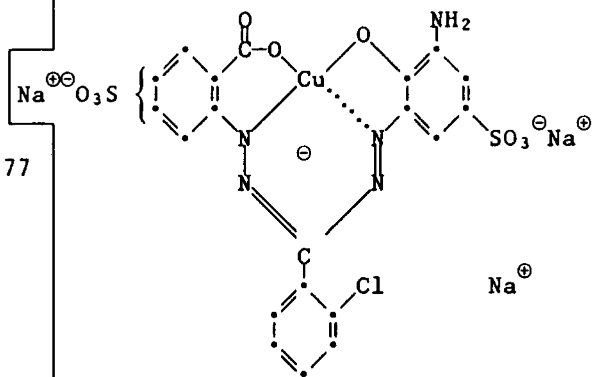 | 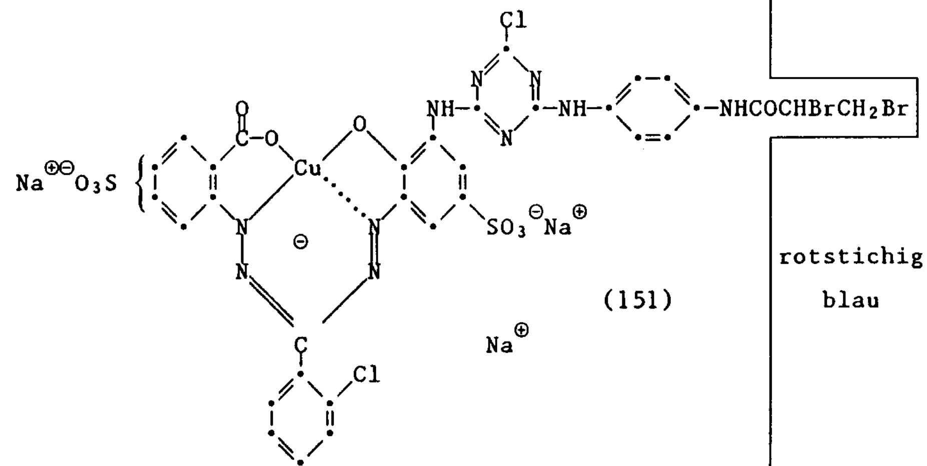 (151) | rotstichig blau |
| 78 | 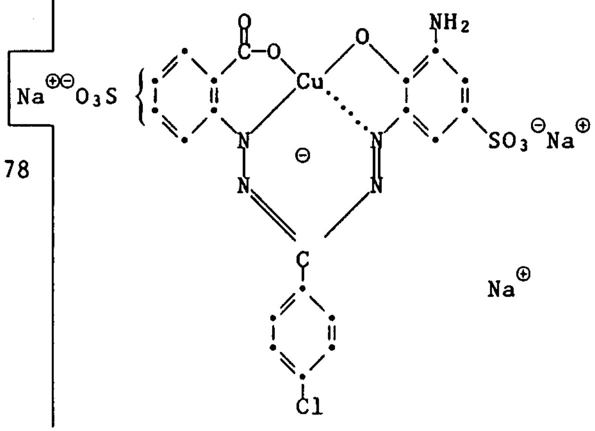 | 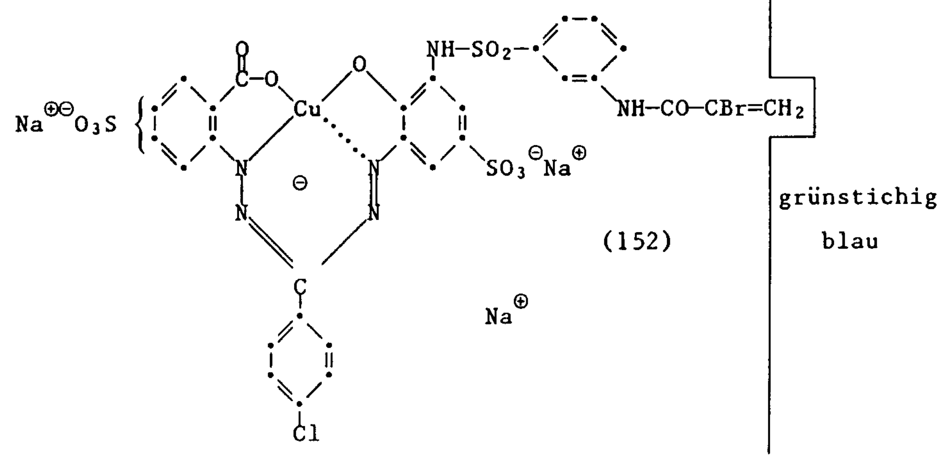 (152) | grünstichig blau |

Tabelle 8 (Fortsetzung)

| Bsp. | Amin | Farbstoff | Nuance auf Wolle |
|---|---|---|---|
| 79 | 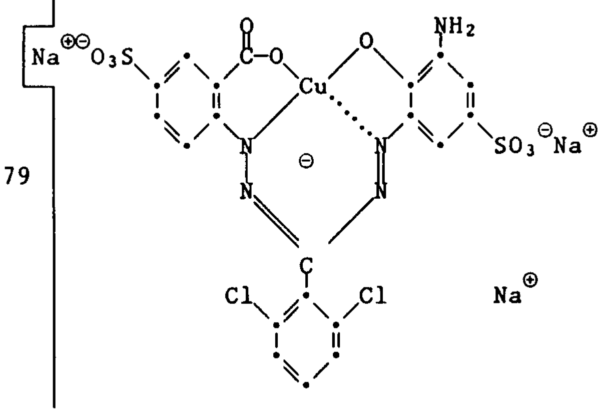 | 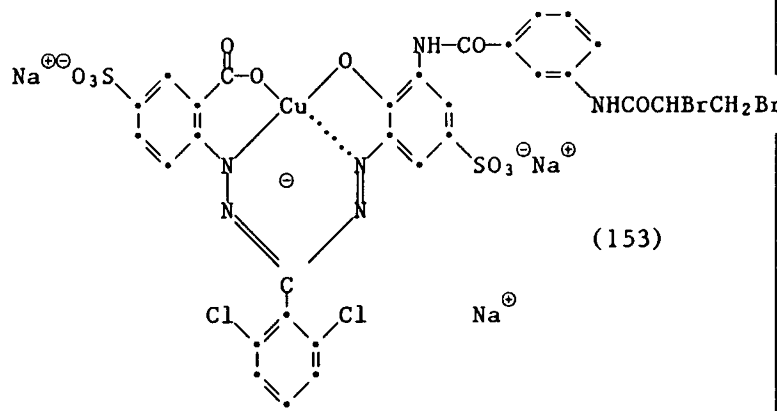 (153) | rotstichig blau |

Tabelle 8 (Fortsetzung)

| Bsp. | Amin | Farbstoff | Nuance auf Wolle |
|---|---|---|---|
| 80 | 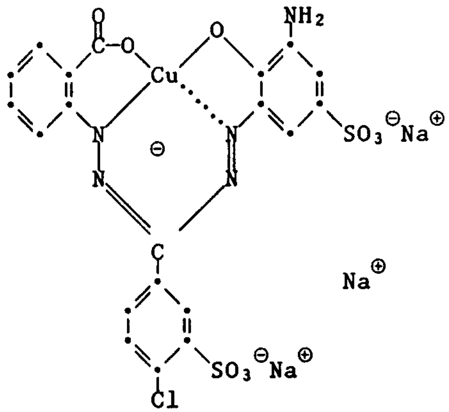 | 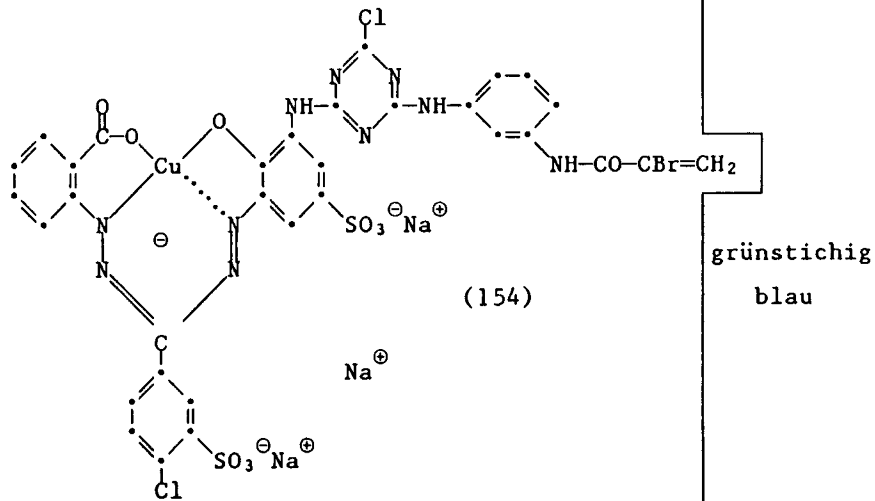 (154) | grünstichig blau |
| 81 | 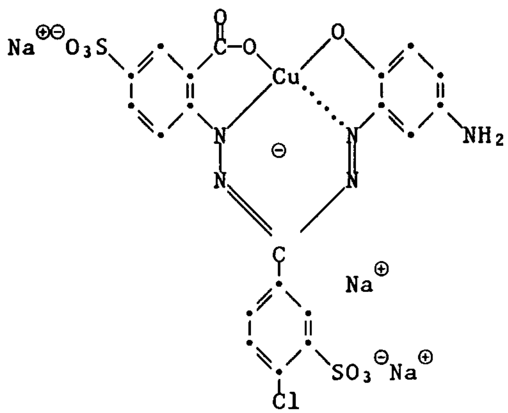 | 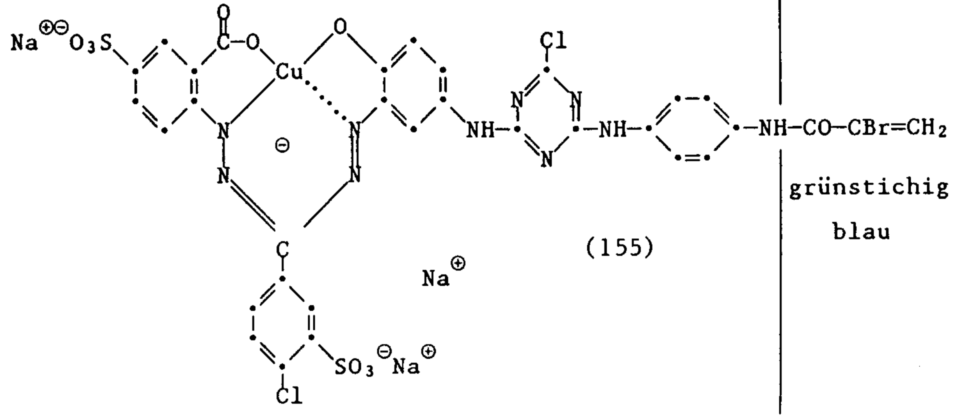 (155) | grünstichig blau |

Tabelle 8 (Fortsetzung)

| Bsp. | Amin | Farbstoff | Nuance auf Wolle |
|---|---|---|---|
| 82 | 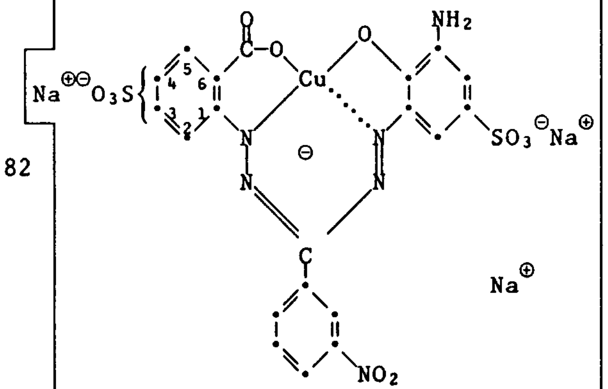 | 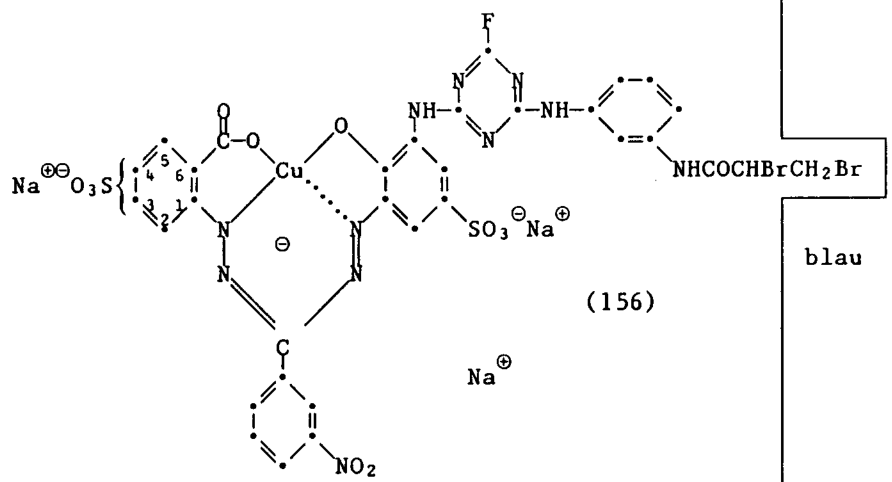 (156) | blau |
| 83 | 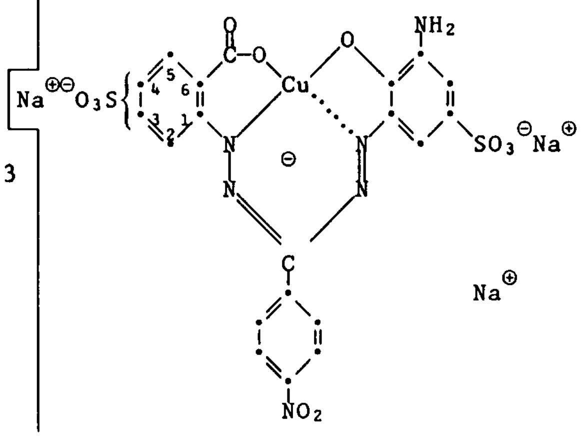 | 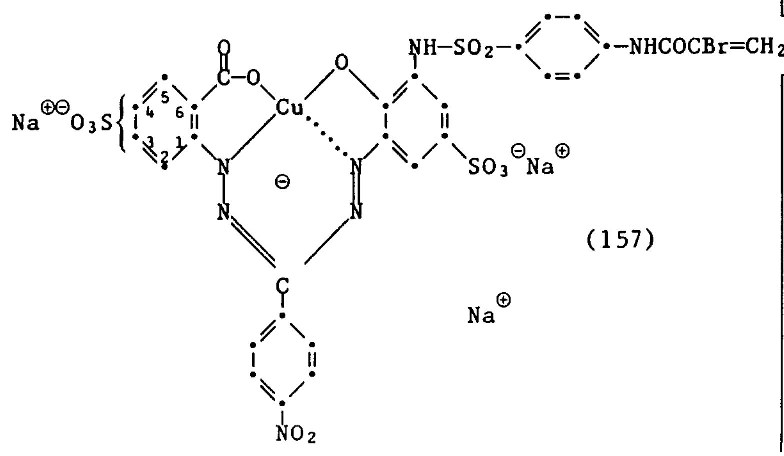 (157) | blau |

Tabelle 8 (Fortsetzung)

| Bsp. | Amin | Farbstoff | Nuance auf Wolle |
|---|---|---|---|
| 84 | 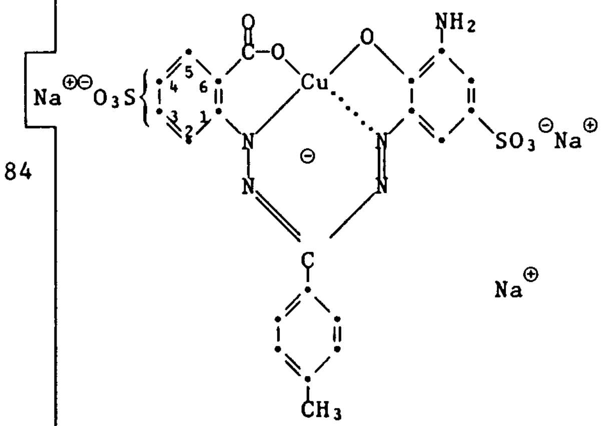 | 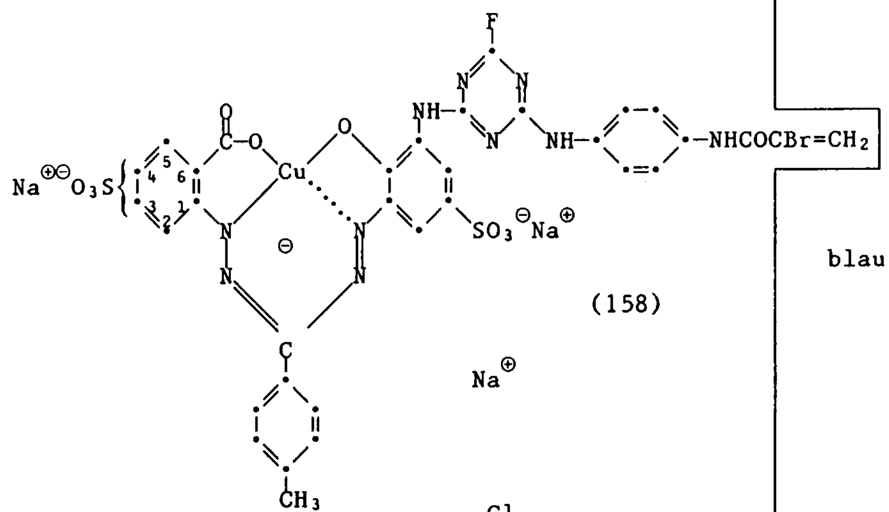 (158) | blau |
| 85 | 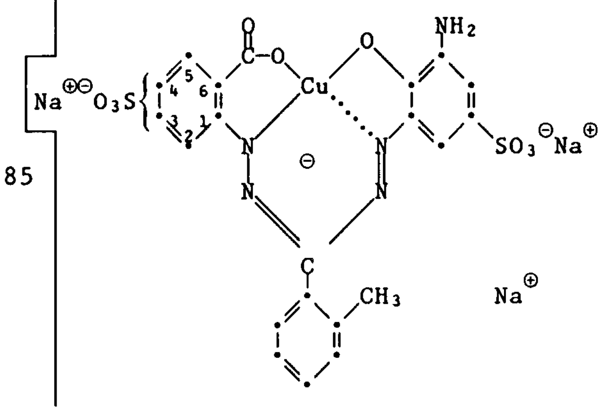 | 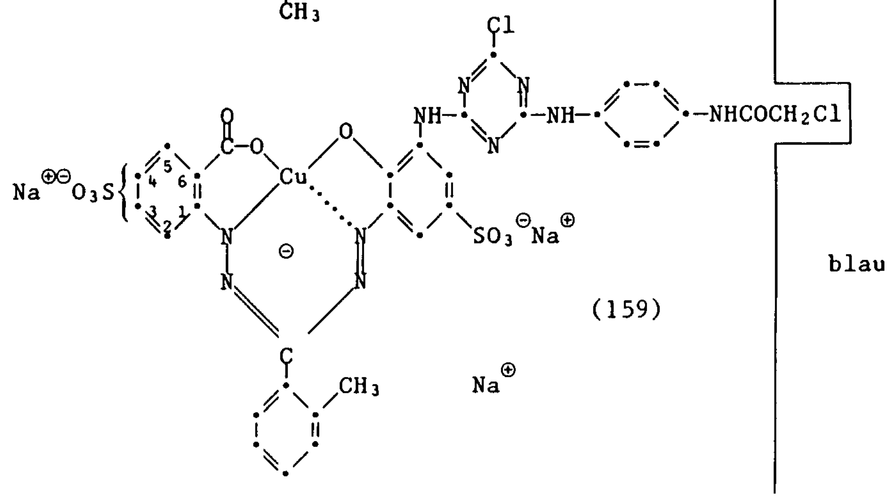 (159) | blau |

Tabelle 8 (Fortsetzung)

| Bsp. | Amin | Farbstoff | Nuance auf Wolle |
|---|---|---|---|
| 86 | 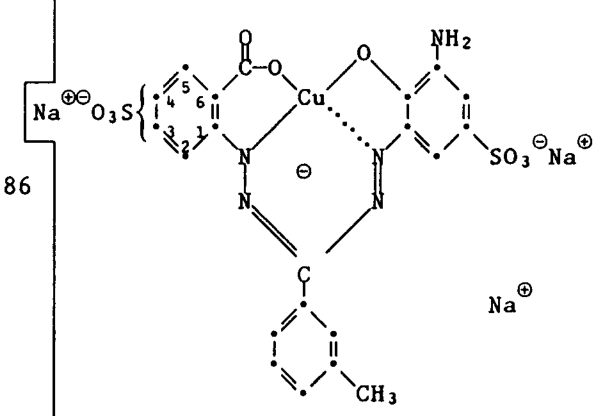 | 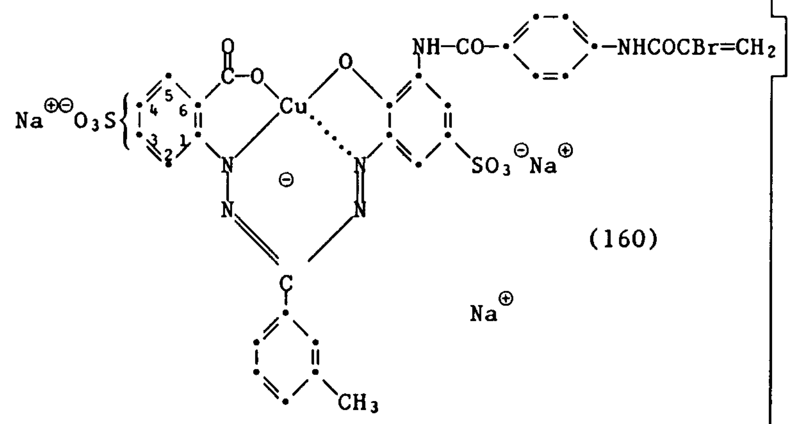 (160) | blau |
| 87 | 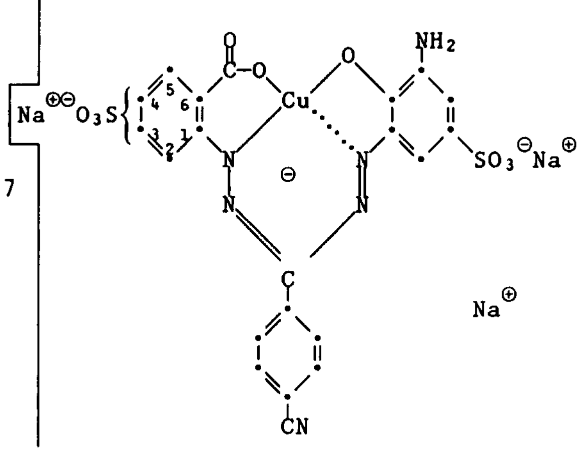 | 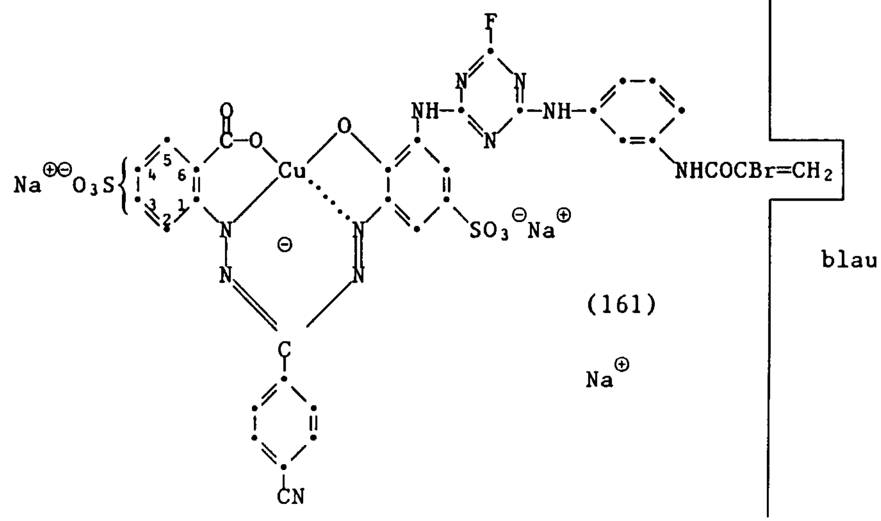 (161) | blau |

Tabelle 8 (Fortsetzung)

| Bsp. | Amin | Farbstoff | Nuance auf Wolle |
|---|---|---|---|
| 88 | 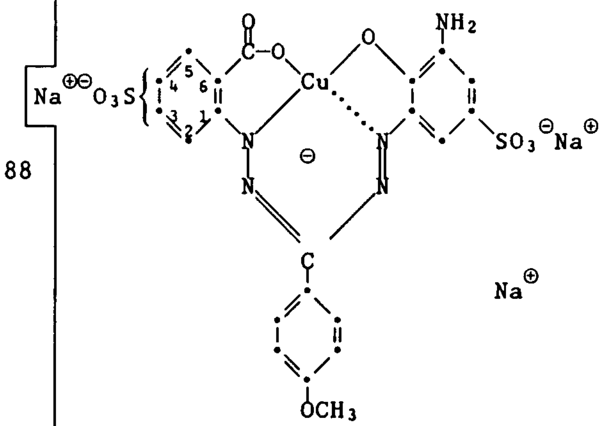 | 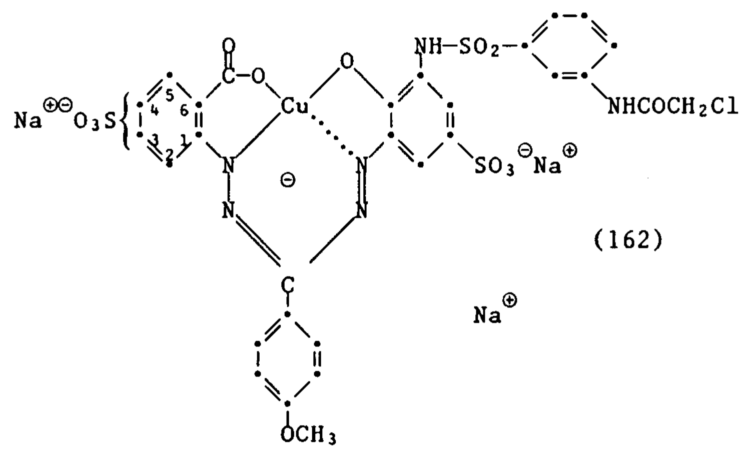 (162) | blau |
| 89 | 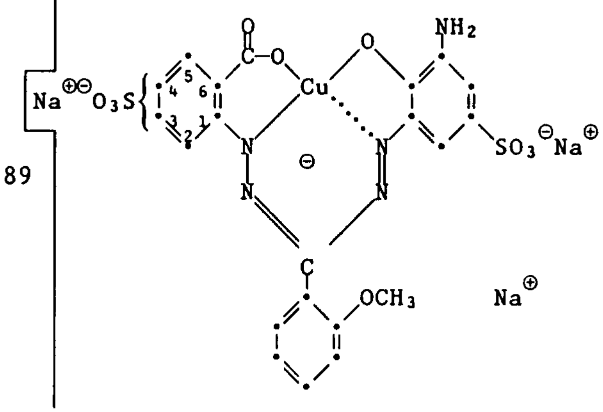 | 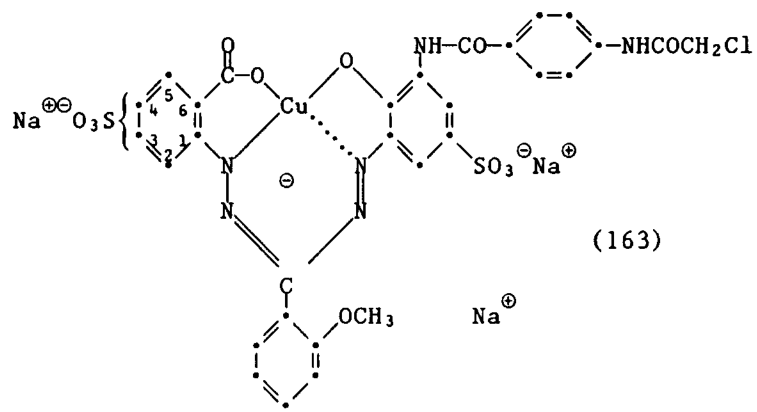 (163) | blau |

Tabelle 8 (Fortsetzung)

| Bsp. | Amin | Farbstoff | Nuance auf Wolle |
|---|---|---|---|
| 90 | 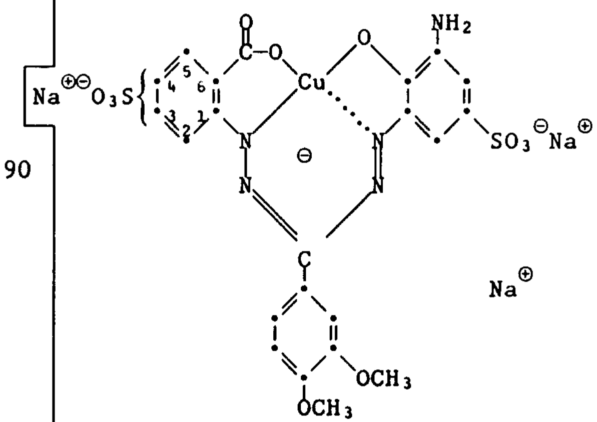 | 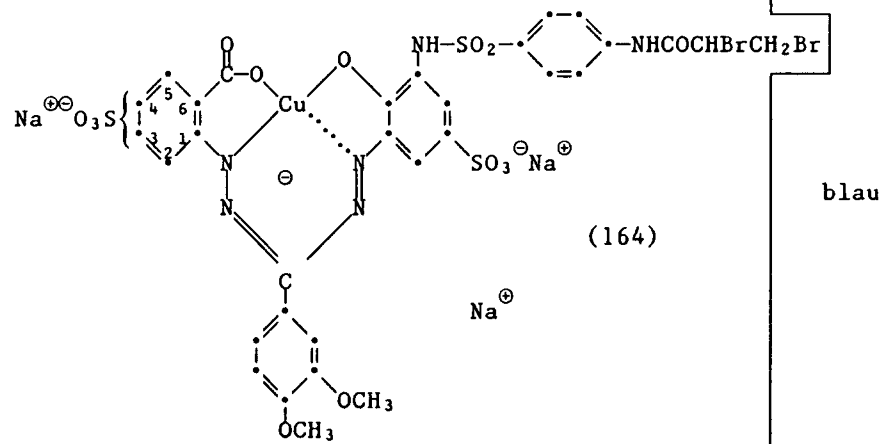 (164) | blau |
| 91 | 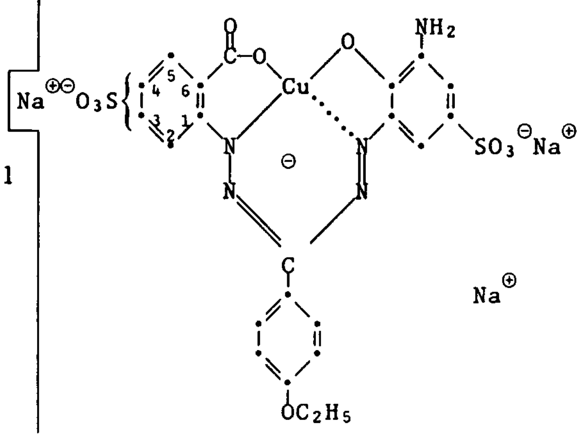 | 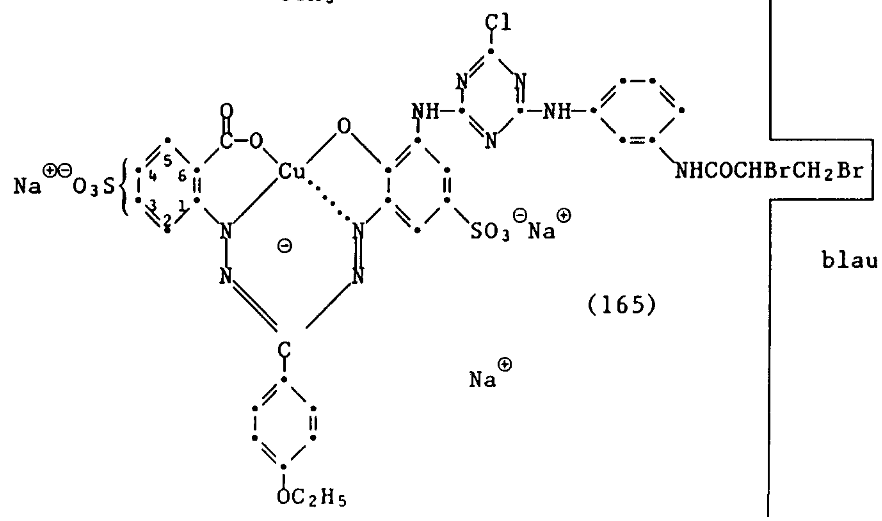 (165) | blau |

Tabelle 8 (Fortsetzung)

| Bsp. | Amin | Farbstoff | Nuance auf Wolle |
|---|---|---|---|
| 92 | 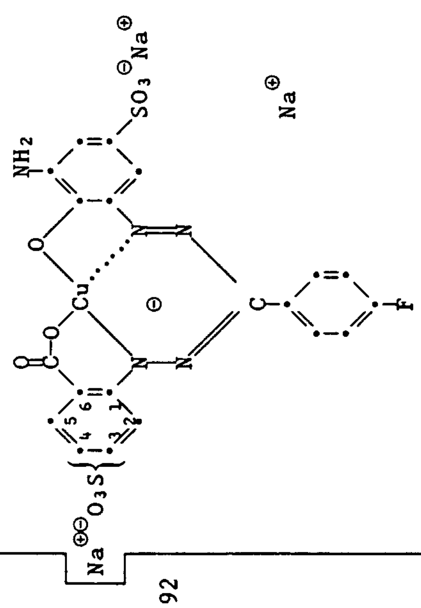 | 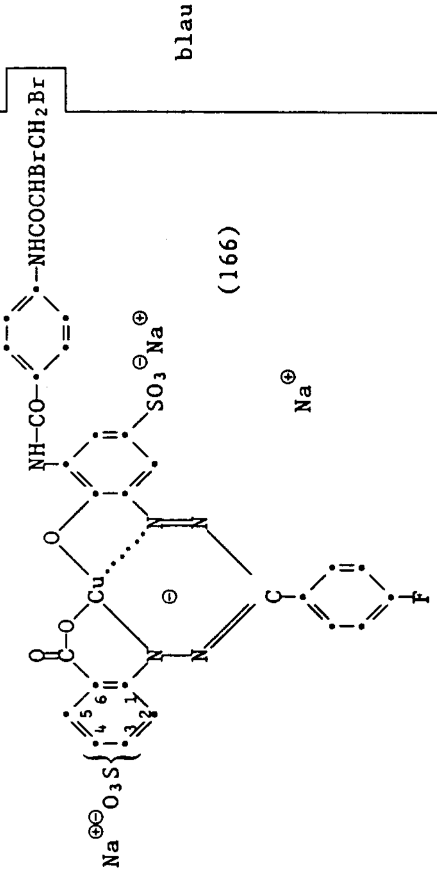 (166) | blau |
| 93 | 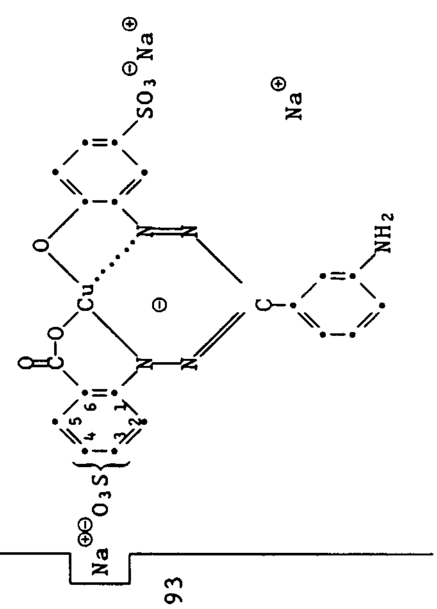 | 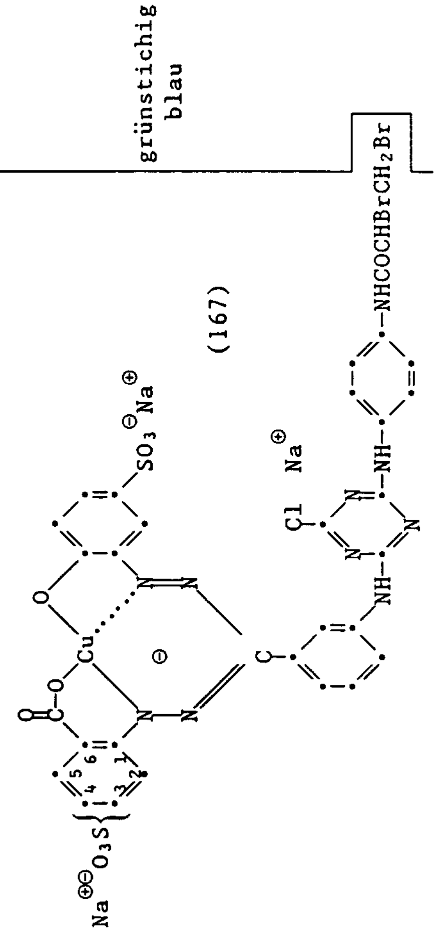 (167) | grünstichig blau |

Färbebeispiel 1

In 4000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol-Aequivalente Aethylenoxid)

sowie 4 Teile Ammoniumsulfat gelöst.

5 Teile des gemäss Beispiel 2 erhaltenen Farbstoffes der Formel (103) werden in 100 Teilen Wasser heiss gelöst und dem obigen Färbebad zugegeben. Dann wird mit 100 Teilen vorgenetzten Wollstrickgarns eingegangen und im Verlaufe von 30 Minuten die Temperatur des Bades von 50 auf 80° erhöht. Nach 20 Minuten Färben bei 80° wird zum Sieden erhitzt und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Ansäuern mit 1 Teil 80%iger Ameisensäure, Zentrifugieren und Trocknen erhält man ein dunkelblau gefärbtes Wollgarn von sehr guter Nass- und Reibechtheit sowie ausgezeichneter Lichtechtheit.

Färbebeispiel 2

Ein filzfest ausgerüstetes Wollgewebe wird mit der nachfolgend beschriebenen Zubereitung getränkt und auf dem Foulard auf eine Feuchtigkeitsaufnahme von 250 % abgequetscht:

| | |
|---|---|
| 4 | Teile Diaprint REG® (säurebeständiges Verdickungsmittel), |
| 1 | Teil Sulfaminsäure |
| 0,2 | Teile Thymol |
| 0,2 | Teile Emulgator |
| 94,6 | Teile Wasser |
| 100 | Teile |

Das imprägnierte Material wird anschliessend in einer heizbaren Presse während 3 Minuten bei 100 bis 105° unter einem Druck von etwa 0,5 $kg/cm^2$ mit einem Transferpapier zusammengepresst, welches ein in üblicher Weise mit dem Farbstoff gemäss Beispiel 3 aufgebrachtes Druckmuster trägt. Nach Spülen und Trocknen des Wollgewebes weist dieses ein entsprechendes, blaues Druckmuster von sehr guten Echtheitseigenschaften auf.

Färbebeispiel 3

Ein Flanellgewebe aus chlorierter Wolle wird auf einem Foulard mit nachfolgend beschriebener Farbstoffzubereitung getränkt und auf eine Flüssigkeitsaufnahme von 100 % abgequetscht.

| | |
|---|---|
| 50 | Teile des Farbstoffes gemäss Beispiel 8 |
| 300 | Teile Harnstoff |
| 320 | Teile Solvitose OFA® à 4 % (Verdickungsmittel) |
| 10 | Teile einer Mischung von anionaktivem Fettalkoholäthersulfat mit nichtionogenen Netzmitteln |
| 10 | Teile des in Färbebeispiel 1 verwendeten Egalisiermittels |
| 10 | Teile Natrium-metabisulfit |
| 10 | Teile Essigsäure 80%ig |
| 290 | Teile Wasser |
| 1000 | Teile Foulardierflotte. |

Das imprägnierte Gewebe wird anschliessend in aufgerolltem und luftdicht verpacktem Zustand während 48 Stunden bei Raumtemperatur gelagert. Nach Spülen mit kaltem Wasser wird das Material auf frischem Bad mit soviel Ammoniak zu 24 % behandelt, dass ein pH-Wert von 8,5 erreicht wird und während 15 Minuten bei 80° gehalten. Nach Spülen in warmem Wasser wird zum Schluss mit Essigsäure 80%ig abgesäuert und getrocknet. Das Wollgewebe ist in einem vollen Blauton von ausgezeichneten Echtheitseigenschaften gefärbt.

Färbebeispiel 4

Ein Flanellgewebe aus chlorierter Wolle wird auf einem Foulard mit nachfolgend beschriebener Farbstoffzubereitung getränkt und auf eine Flüssigkeitsaufnahme von 100 % abgequetscht:

| | |
|---|---|
| 50 | Teile des Farbstoffes gemäss Beispiel 1 |
| 300 | Teile Solvitose OFA® à 40 % (Verdickungsmittel) |
| 20 | Teile einer Mischung von anionaktivem Fettalkoholäthersulfat mit nichtionogenen Netzmitteln |
| 10 | Teile des in Färbebeispiel 1 verwendeten Egalisiermittels |
| 20 | Teile Essigsäure 80%ig |
| 600 | Teile Wasser |
| 1000 | Teile Foulardierflotte. |

Das imprägnierte Gewebe wird anschliessend in einen Dämpfer gebracht und während 20 bis 40 Minuten mit gesättigtem Dampf behandelt. Nach Spülen mit kaltem Wasser wird das Material auf frischem Bad mit soviel 24%iger Ammoniaklösung behandelt, dass ein pH-Wert von 8,5 erreicht wird und während 15 Minuten bei 80° gehalten. Nach Spülen in warmem Wasser wird zum Schluss mit Essigsäure 80%ig abgesäuert und getrocknet. Das Wollgewebe ist in einem vollen Blauton von ausgezeichneten Echtheitseigenschaften gefärbt.

Färbebeispiel 5

In 1000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

3 Teile des gemäss Beispiel 18 erhaltenen Farbstoffes werden in 100 Teilen Wasser heiss gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97-99° erhöht, und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut bei dieser Temperatur nachbehandelt. Nach gründlichem Spülen mit heissem und kaltem Wasser, Absäuren mit 1 Teil 80%iger Ameisensäure, zentrifugieren und Trocknen erhält man ein dunkelblau gefärbtes Färbegut von sehr guter Nassechtheit sowie ausgezeichneter Lichtechtheit.

Färbebeispiel 6

In 1000 Teilen Wasser von 50° werden nacheinander 6 Teile 80%ige Essigsäure, 3 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 6 Teile Ammoniumsulfat gelöst.

3 Teile des gemäss Beispiel 2 erhaltenen Farbstoffes werden in 100 Teilen Wasser heiss gelöst und dem obigen Färbebad zugegeben. Ein Zirkulationsfärbeapparat wird mit 150 Teilen vogenetzter loser Wolle beschickt und im Verlaufe von 30 Minuten die Temperatur der Flotte von 50° auf 97-99° erhöht, und anschliessend 90 Minuten kochend gefärbt. Der Farbstoff zieht fast vollkommen auf das Substrat auf. Nach Abkühlen der Flotte auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein faseregal blau gefärbtes Substrat mit guter Nass- und Reibechtheit sowie ausgezeichneter Lichtechtheit.

Färbebeispiel 7

In 4000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

0,25 Teile des gemäss Beispiel 9 erhaltenen Farbstoffes und 0,30 Teile des gelben Farbstoffes der Formel

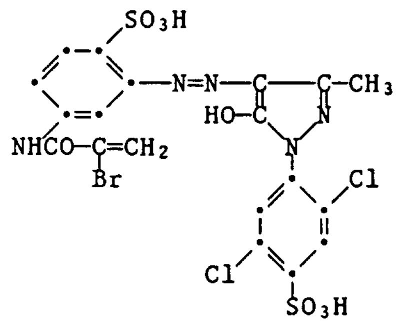

und 0,30 Teile des roten Farbstoffes der Formel

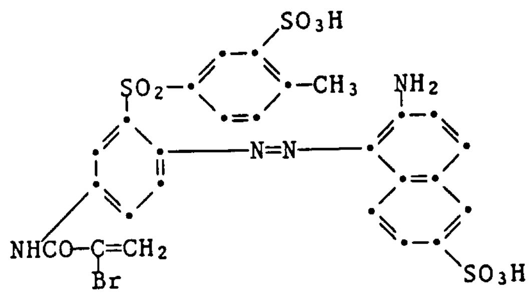

werden in 100 Teilen Wasser heiss gelöst und dem obigen Färbebad zugegeben. Dann wird mit 100 Teilen vorgenetztem Wollgewebe eingegangen und im Verlaufe von 30 Minuten die Temperatur des Bades von 50 auf 80° erhöht. Nach 20 Minuten Färben bei 80° wird zum Sieden erhitzt und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure. Zentrifugieren und Trocknen erhält man ein faseregales dunkelbraun gefärbtes Wollgewebe von sehr guter Nass- und Reibechtheit sowie ausgezeichneter Lichtechtheit.

Färbebeispiel 8

In 1000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

0,6 Teile des gemäss Beispiel 2 erhaltenen Farbstoffes und 0,09 Teile des gelben Farbstoffes der Formel

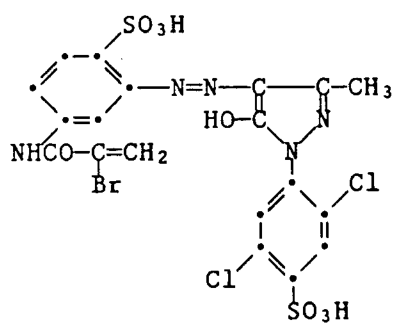

und 0,2 Teile des roten Farbstoffes der Formel

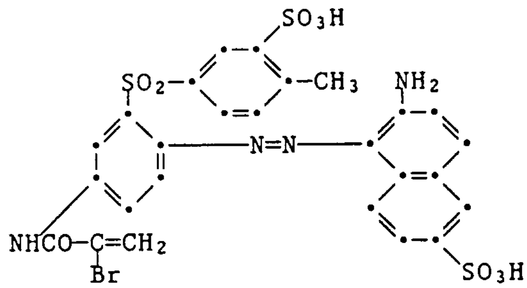

werden in 100 Teilen Wasser heiss gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97-99° erhöht und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein grau gefärbtes Färbegut von sehr guter Nassechtheit sowie ausgezeichneter Lichtechtheit.

**Patentansprüche**
**Patentansprüche für folgende Vertragsstaaten : DE, GB, FR, IT, LI, CH, BE**

**1.** Faserreaktive Formazanfarbstoffe der Formel

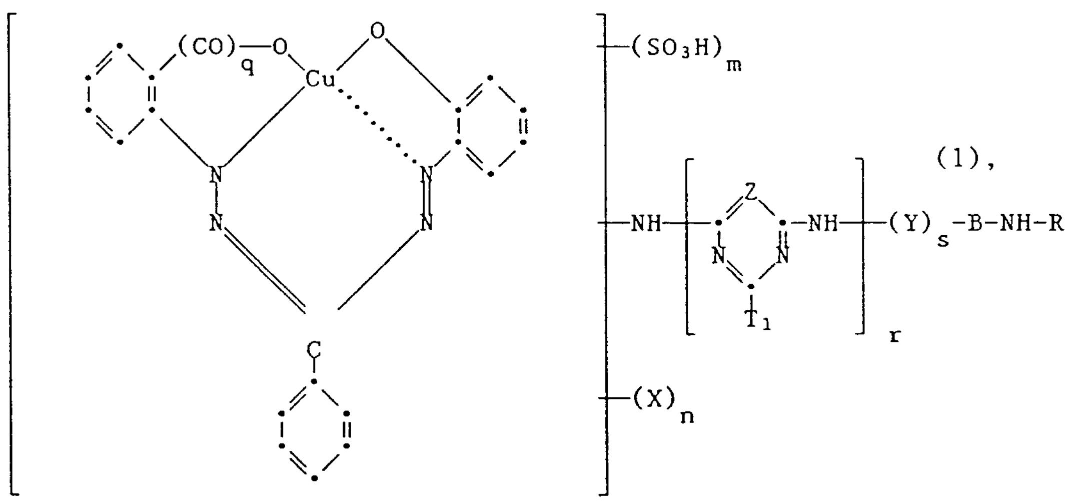

(1),

worin B gegebenenfalls durch $C_1$-$C_4$-Alkoxy oder Halogen substituiertes $C_1$-$C_8$-Alkylen oder ein sulfogruppenfreies aromatisches Brückenglied, R $\alpha,\beta$-Dihalogenpropionyl, $\alpha$-Halogenacryloyl oder Halogenacetyl, $T_1$ Halogen, X Halogen, $C_1$-$C_4$-Alkyl, $C_1$-$C_4$-Alkoxy, Cyan oder Nitro, Y -CO- oder -$SO_2$-, Z ein Stickstoffatom oder -C-$T_2$, $T_2$ Halogen, Cyano, $C_1$-$C_4$-Alkylthio, Wasserstoff, Formyl oder $C_1$-$C_4$-Alkylsulfonyl, m die Zahl 1 oder 2, n die Zahl 0, 1 oder 2, q die Zahl 0 oder 1, r die Zahl 0 oder 1 und s die Zahl 0 oder 1 ist, wobei r und s voneinander verschiedene Bedeutungen haben.

**2.** Faserreaktive Formazanfarbstoffe gemäss Anspruch 1, worin q die Zahl 1 bedeutet.

**3.** Faserreaktive Formazanfarbstoffe gemäss einem der Ansprüche 1 und 2, worin m die Zahl 2 bedeutet.

**4.** Faserreaktive Formazanfarbstoffe gemäss einem der Ansprüche 1 bis 3, worin X Halogen, insbesondere Chlor, bedeutet.

5. Faserreaktive Formazanfarbstoffe gemäss einem der Ansprüche 1 bis 4, worin B $-(CH_2)_p-$ oder

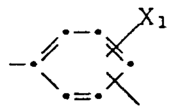

ist, p die Zahl 1, 2, 3, 4, 5 oder 6 ist und $X_1$ Wasserstoff oder ein Substituent, ausgenommen Sulfo, ist.

6. Faserreaktive Formazanfarbstoffe gemäss einem der Ansprüche 1 bis 5, worin n die Zahl 0 oder 1 ist.

7. Faserreaktive Formazanfarbstoffe gemäss einem der Ansprüche 1 bis 6, worin $T_1$ Fluor oder insbesondere Chlor ist und Z den Rest -C-F oder -C-Cl oder insbesondere ein Stickstoffatom bedeutet.

8. Faserreaktive Formazanfarbstoffe gemäss einem der Ansprüche 1 bis 7 der Formel

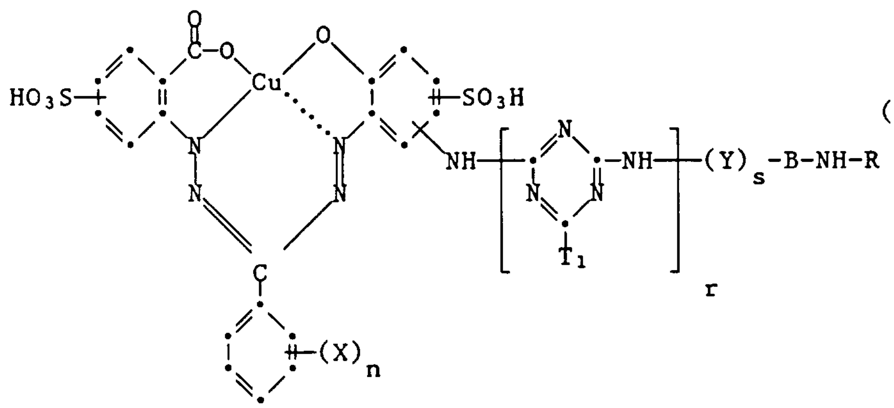

(2)

worin B Phenylen, R ein als Halogen Brom- und/oder Chloratome enthaltender $\alpha,\beta$-Dihalogenpropionyl-, $\alpha$-Halogenacryloyl- oder Halogenacetylrest, $T_1$ Fluor oder insbesondere Chlor, X Chlor, Y -CO- oder $-SO_2-$, n die Zahl 0 oder 1, r die Zahl 0 oder 1 und s die Zahl 0 oder 1 ist.

9. Faserreaktive Formazanfarbstoffe gemäss Anspruch 8 der Formel

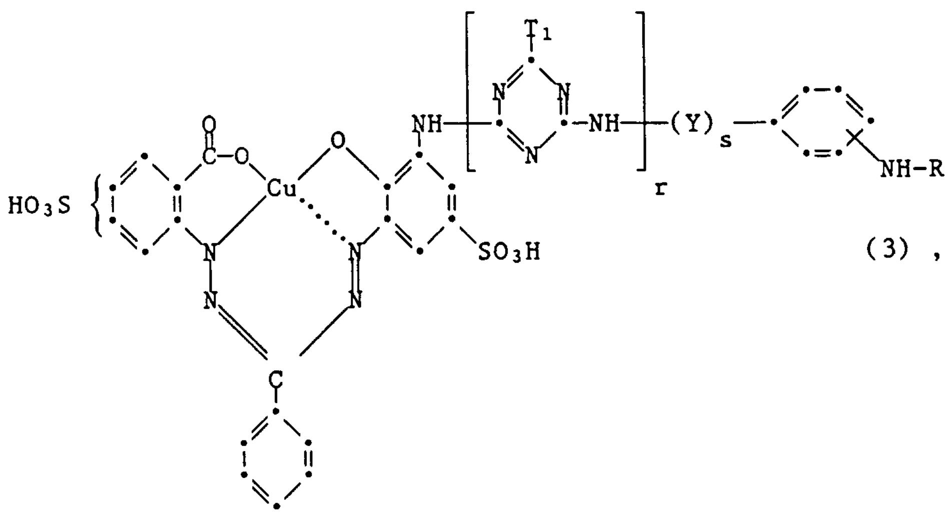

(3) ,

worin R, $T_1$, Y, r und s die in Anspruch 8 angegebenen Bedeutungen haben.

**10.** Faserreaktive Formazanfarbstoffe gemäss Anspruch 9 der Formel

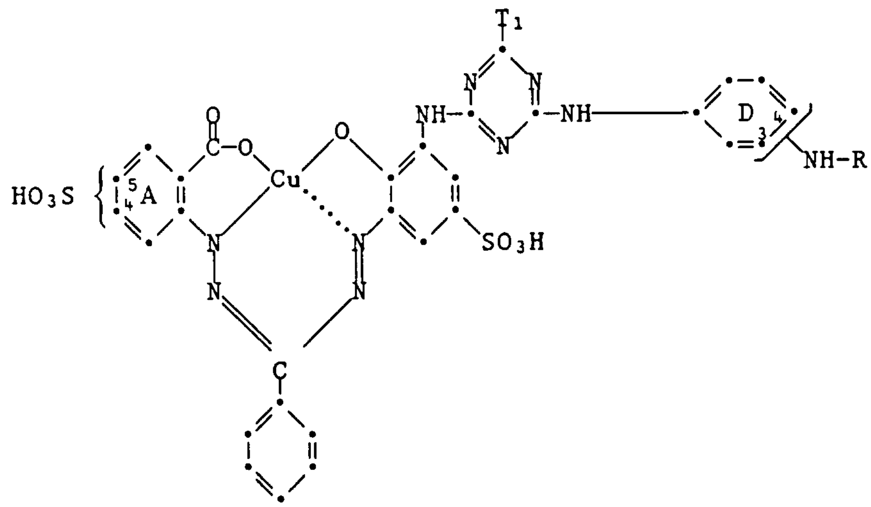

(4)

worin $T_1$ Chlor oder Fluor, R $\alpha,\beta$-Dibrompropionyl, $\alpha$-Bromacryloyl oder Chloracetyl ist, die Sulfogruppe in 4- oder 5-Position an den Benzring A gebunden ist und -NH-R in 3- oder 4-Position an den Benzring D gebunden ist.

**11.** Faserreakive Formazanfarbstoffe gemäss Anspruch 9 der Formel

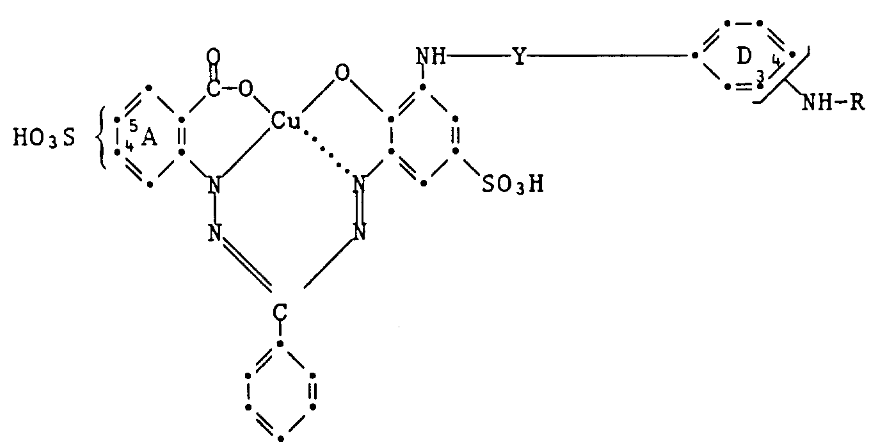

(5)

worin R $\alpha,\beta$-Dibrompropionyl, $\alpha$-Bromacryloyl oder Chloracetyl ist, die Sulfogruppe in 4- oder 5-Position an den Benzring A gebunden ist, -NH-R in 3- oder 4-Position an den Benzring D gebunden ist und Y -CO- oder $-SO_2-$ ist.

**12.** Verfahren zur Herstellung der faserreaktiven Formazanfarbstoffe gemäss Anspruch 1, dadurch gekennzeichent, dass man ein Amin der Formel

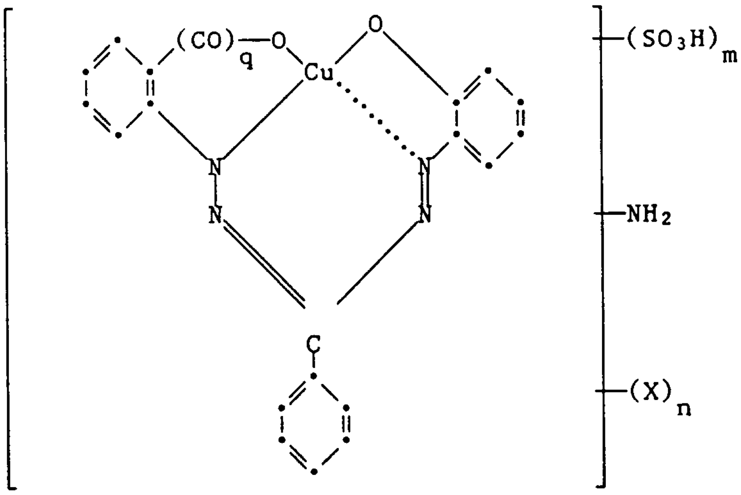

(6),

worin X, m, n und q die unter Formel (1) angegebenen Bedeutungen haben, mit einer den Rest der Formel

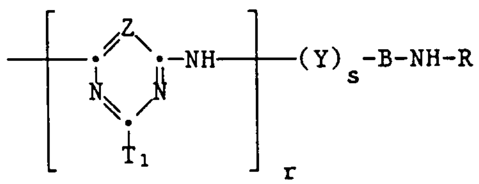

(7)

einführenden Verbindung, worin B, R, Y, $T_1$, Z, r und s die in Anspruch 1 angegebenen Bedeutungen haben, umsetzt.

**13.** Verwendung der faserreaktiven Formazanfarbstoffe gemäss einem der Ansprüche 1 bis 11, bzw. der gemäss Anspruch 12 erhaltenen faserreaktiven Formazanfarbstoffe zum Färben und Bedrucken.

**14.** Verwendung gemäss Anspruch 13 zum Färben und Bedrucken von Papier, Leder und hydroxylgruppenhaltigen oder stickstoffhaltigen Textilmaterialien.

**15.** Verfahren zum Trichromie-Färben oder -Bedrucken von natürlichen und synthetischen Polyamidmaterialien mit Farbstoffmischungen, dadurch gekennzeichnet, dass man einen faserreaktiven Formazanfarbstoff der Formel

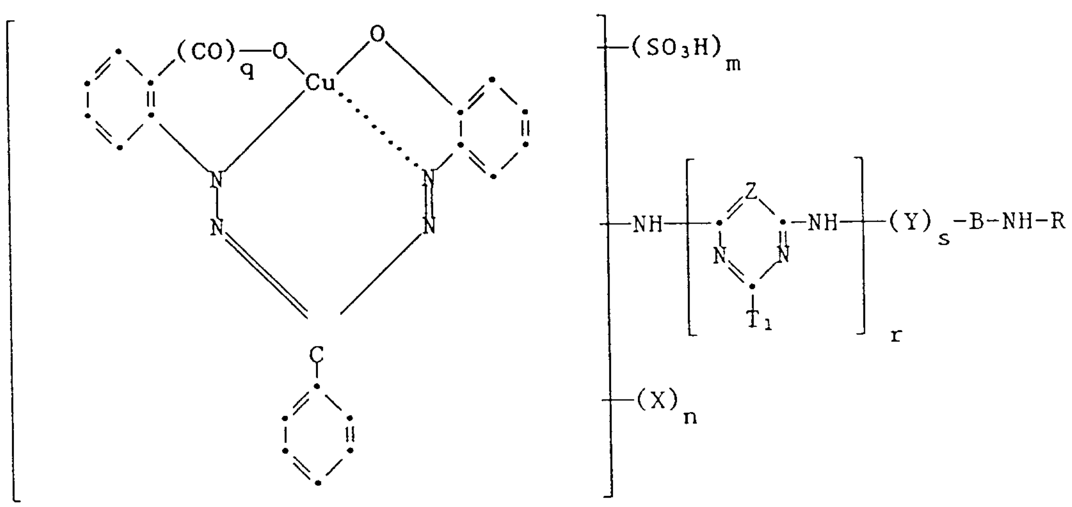

worin B gegebenenfalls durch $C_1$-$C_4$-Alkoxy oder Halogen substituiertes $C_1$-$C_8$-Alkylen oder ein sulfogruppenfreies aromatisches Brückenglied, R $\alpha,\beta$-Dihalogenpropionyl, $\alpha$-Halogenacryloyl oder Halogenacetyl, $T_1$ Halogen, X Halogen, $C_1$-$C_4$-Alkyl, $C_1$-$C_4$-Alkoxy, Cyan oder Nitro, Y -CO- oder -$SO_2$-, Z ein Stickstoffatom oder -C-$T_2$, $T_2$ Halogen, Wasserstoff, $C_1$-$C_4$-Alkylthio, Cyano, Formyl oder $C_1$-$C_4$-Alkylsulfonyl, m die Zahl 1 oder 2, n die Zahl 0, 1 oder 2, q die Zahl 0 oder 1, r die Zahl 0 oder 1 und s die Zahl 0 oder 1 ist, wobei r und s voneinander verschiedene Bedeutungen haben, zusammen mit einem faserreaktiven, sulfogruppenhaltigen rotfärbenden Farbstoff und einem faserreaktiven, sulfogruppenhaltigen gelb- oder orange-färbenden Farbstoff verwendet.

**16.** Verfahren gemäss Anspruch 15, dadurch gekennzeichnet, dass man als faserreaktive, sulfogruppenhaltige gelb- oder orange- und rotfärbende Farbstoffe Azofarbstoffe verwendet.

**17.** Verfahren gemäss einem der Ansprüche 15 und 16, dadurch gekennzeichnet, dass die gelb- oder orange- und rotfärbenden Farbstoffe als faserreaktive Gruppe jeweils eine Halogentriazin-, Halogenpyrimidin-Gruppe oder eine Gruppe der aliphatischen Reihe enthalten.

**18.** Verfahren gemäss einem der Ansprüche 15 bis 17, dadurch gekennzeichnet, dass die gelb- oder orange- und rotfärbenden Farbstoffe als faserreaktive Gruppe Difluorchlorpyrimidinyl, insbesondere 2,4-Difluor-5-chlorpyrimidinyl, oder $\alpha,\beta$-Dihalogenpropionyl, insbesondere $\alpha,\beta$-Dibrompropionyl, oder $\alpha$-Halogenacryloyl, insbesondere $\alpha$-Bromacryloyl, enthalten.

**19.** Verfahren gemäss einem der Ansprüche 15 bis 18, dadurch gekennzeichnet, dass zum Trichromie-Färben oder -Bedrucken natürliches Polyamidmaterial, insbesondere Wolle, verwendet wird.

**20.** Verbindungen der Formel

Z-Y-B-NH-R ,

worin Z eine abspaltbare Gruppe, insbesondere ein Halogenatom, B gegebenenfalls durch $C_1$-$C_4$-Alkoxy oder Halogen substituiertes $C_1$-$C_8$-Alkylen oder ein sulfogruppenfreies aromatisches Brückenglied, R $\alpha,\beta$-Dihalogenpropionyl, $\alpha$-Halogenacryloyl oder Halogenacetyl, und Y -CO- oder -$SO_2$-ist.

**21.** Verbindungen gemäss Anspruch 20, worin B -$(CH_2)_p$- oder

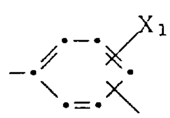

ist, p die Zahl 1, 2, 3, 4, 5 oder 6 ist und $X_1$ Wasserstoff oder ein Substituent, ausgenommen Sulfo, ist.

**Patentansprüche für folgenden Vertragsstaat : ES**

**1.** Verfahren zur Herstellung von faserreaktiven Formazanfarbstoffen der Formel

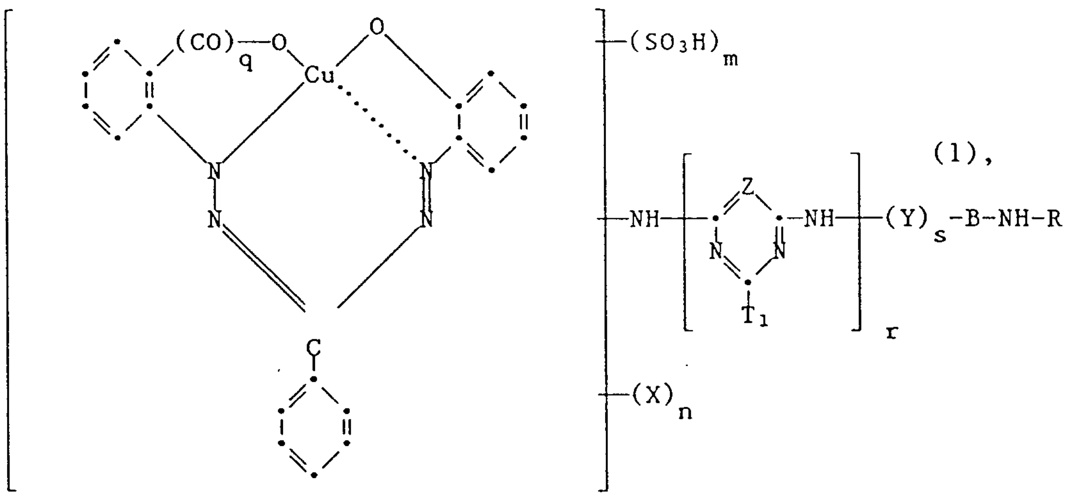

(1),

worin B gegebenenfalls durch $C_1$-$C_4$-Alkoxy oder Halogen substituiertes $C_1$-$C_8$-Alkylen oder ein sulfogruppenfreies aromatisches Brückenglied, R $\alpha,\beta$-Dihalogenpropionyl, $\alpha$-Halogenacryloyl oder Halogenacetyl, $T_1$ Halogen, X Halogen, $C_1$-$C_4$-Alkyl, $C_1$-$C_4$-Alkoxy, Cyan oder Nitro, Y -CO- oder -$SO_2$-, Z ein Stickstoffatom oder -C-$T_2$, $T_2$ Halogen, Cyano, $C_1$-$C_4$-Alkylthio, Wasserstoff, Formyl oder $C_1$-$C_4$-Alkylsulfonyl, m die Zahl 1 oder 2, n die Zahl 0, 1 oder 2, q die Zahl 0 oder 1, r die Zahl 0 oder 1 und s die Zahl 0 oder 1 ist, wobei r und s voneinander verschiedene Bedeutungen haben, dadurch gekennzeichnet, dass man ein Amin der Formel

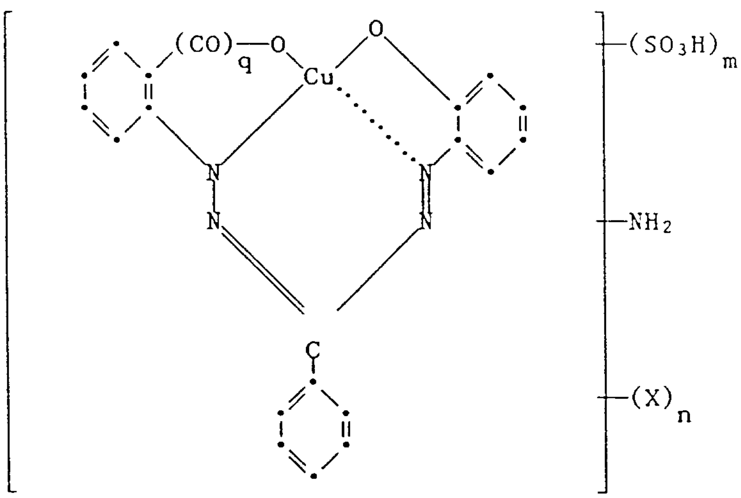

(6),

worin X, m, n und q die unter Formel (1) angegebenen Bedeutungen haben, mit einer den Rest der Formel

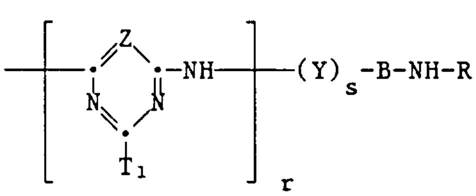

(7)

einführenden Verbindung, worin B, R, Y, $T_1$, Z, r und s die unter Formel (1) angegebenen Bedeutungen

haben, umsetzt, oder ein Amin der Formel (6), worin X, m, n und q die unter Formel (1) angegebenen Bedeutungen haben, mit einer Verbindung der Formel

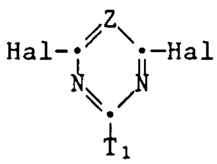

(8),

worin Z und $T_1$ die unter Formel (1) angegebenen Bedeutungen haben, und Hal je ein Halogenatom, insbesondere ein Fluor- oder Chloratom, bedeuten, kondensiert, und das Kondensationsprodukt anschliessend mit einer den Rest der Formel

-NH-B-NH-R (9)

einführenden Verbindung umsetzt, wobei B und R in Formel (9) die unter Formel (1) angegebenen Bedeutungen haben.

**2.** Verfahren gemäss Anspruch 1, dadurch gekennzeichnet, dass man ein Amin der Formel (6) verwendet, worin q die Zahl 1 bedeutet.

**3.** Verfahren gemäss einem der Ansprüche 1 und 2, dadurch gekennzeichnet, dass man ein Amin der Formel (6) verwendet, worin m die Zahl 2 bedeutet.

**4.** Verfahren gemäss einem der Ansprüche 1 bis 3, dadurch gekennzeichnet, dass man ein Amin der Formel (6) verwendet, worin X Halogen, insbesondere Chlor, bedeutet.

**5.** Verfahren gemäss einem der Ansprüche 1 bis 4, dadurch gekennzeichnet, dass man eine den Rest der Formel (7) oder eine den Rest der Formel (9) einführende Verbindung verwendet, worin B $-(CH_2)_p-$ oder

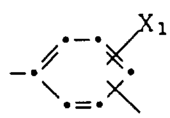

ist, p die Zahl 1, 2, 3, 4, 5 oder 6 ist und $X_1$ Wasserstoff oder ein Substituent, ausgenommen Sulfo, ist.

**6.** Verfahren gemäss einem der Ansprüche 1 bis 5, dadurch gekennzeichnet, dass man ein Amin der Formel (6) verwendet, worin n die Zahl 0 oder 1 ist.

**7.** Verfahren gemäss einem der Ansprüche 1 bis 6, dadurch gekennzeichnet, dass man eine den Rest der Formel (7) oder eine den Rest der Formel (8) einführende Verbindung verwendet, worin $T_1$ Fluor oder insbesondere Chlor ist und Z den Rest -C-F oder -C-Cl oder insbesondere ein Stickstoffatom bedeutet.

**8.** Verfahren gemäss einem der Ansprüche 1 bis 7, dadurch gekennzeichnet, dass man ein Amin der Formel

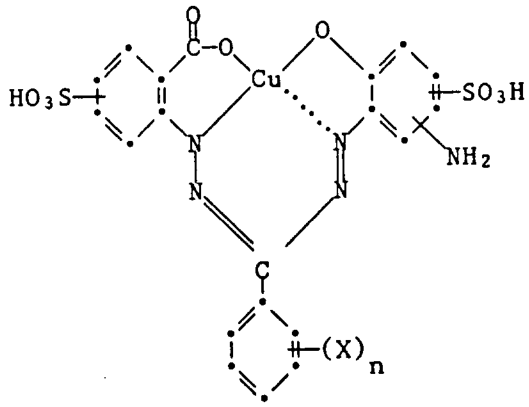

(11),

worin X Chlor und n die Zahl 0 oder 1 ist, mit einer Verbindung der Formel (8), worin Hal je Halogen, insbesondere Fluor oder Chlor, $T_1$ Fluor oder insbesondere Chlor und Z ein Stickstoffatom ist, kondensiert und anschliessend das Kondensationsprodukt mit einer den Rest der Formel (9) einführenden Verbindung, worin B Phenylen und R ein als Halogen Brom- und/oder Chloratome enthaltender $\alpha,\beta$-Dihalogenpropionyl-, $\alpha$-Halogenacryloyl-oder Halogenacetylrest ist, umsetzt, oder ein Amin der Formel (11), worin X Chlor und n die Zahl 0 oder 1 ist, mit einer Verbindung der Formel

-Y-B-NH-R (10),

worin B Phenylen, R ein als Halogen, Brom-und/oder Chloratome enthaltender $\alpha,\beta$-Dihalogenpropionyl-, $\alpha$-Halogenacryloyl- oder Halogenacetylrest und Y -CO- oder $-SO_2$- ist, umsetzt.

**9.** Verfahren gemäss Anspruch 8, dadurch gekennzeichnet, dass man ein Amin der Formel

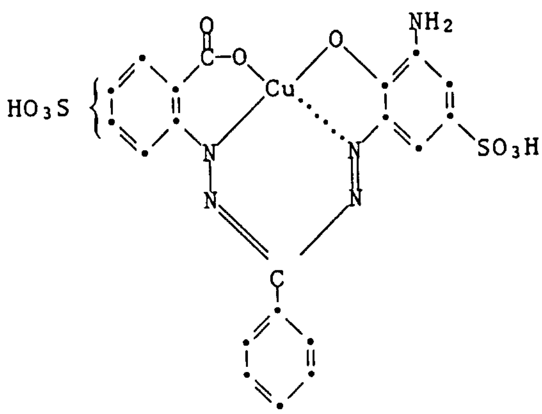

(12)

entweder mit Cyanurchlorid oder Cyanurfluorid kondensiert und anschliessend das Kondensationsprodukt mit einer den Rest der Formel (9) einführenden Verbindung, worin B und R die in Anspruch 8 angegebenen Bedeutungen haben, umsetzt, oder ein Amin der Formel (12) mit einer den Rest der Formel (10) einführenden Verbindung, worin B, R und Y die in Anspruch 8 angegebenen Bedeutungen haben, umsetzt.

**10.** Verfahren gemäss Anspruch 9, dadurch gekennzeichnet, dass man ein Amin der Formel

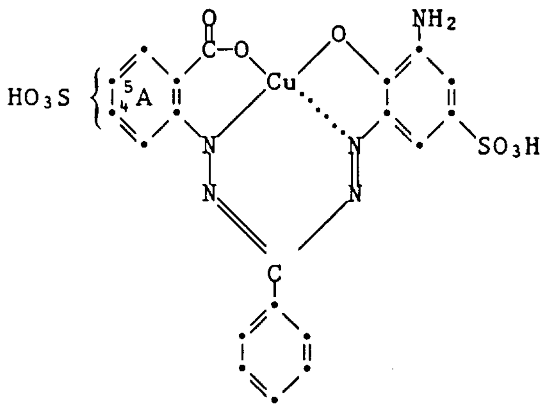

(13),

worin die Sulfogruppe in 4- oder 5-Position an den Benzring A gebunden ist, mit Cyanurchlorid oder Cyanurfluorid kondensiert und das Kondensationsprodukt anschliessend mit einer Verbindung der Formel

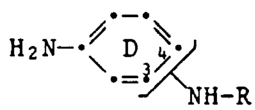

(14) ,

worin R $\alpha,\beta$-Dibrompropionyl, $\alpha$-Bromacryloyl oder Chloracetyl ist, umsetzt, wobei -NHR in 3- oder 4-Position an den Benzring D gebunden ist.

**11.** Verfahren gemäss Anspruch 9, dadurch gekennzeichnet, dass man ein Amin der Formel

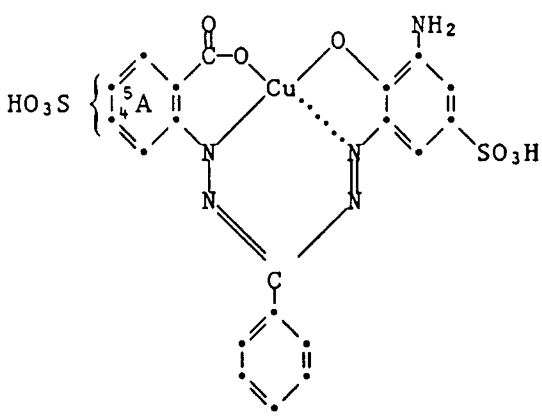

(13),

worin die Sulfogruppe in 4- oder 5-Position an den Benzring A gebunden ist, mit einer Verbindung der Formel

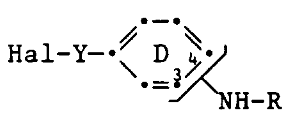

(15) ,

worin Hal Halogen, insbesondere Chlor, Y -CO- oder -$SO_2$- und R $\alpha,\beta$-Dibrompropionyl, $\alpha$-Bromacryloyl oder Chloracetyl ist, umsetzt, wobei -NH-R in 3- oder 4-Position an den Benzring D gebunden ist.

**12.** Verwendung der gemäss einem der Ansprüche 1 bis 11, erhaltenen faserreaktiven Formazanfarbstoffe zum Färben und Bedrucken.

**13.** Verwendung gemäss Anspruch 12 zum Färben und Bedrucken von Papier, Leder und hydroxylgruppenhaltigen oder stickstoffhaltigen Textilmaterialien.

**14.** Verfahren zum Trichromie-Färben oder -Bedrucken von natürlichen und synthetischen Polyamidmaterialien mit Farbstoffmischungen, dadurch gekennzeichnet, dass man einen gemäss Anspruch 1 erhaltenen faserreaktiven Formazanfarbstoff zusammen mit einem faserreaktiven, sulfogruppenhaltigen rotfärbenden Farbstoff und einem faserreaktiven, sulfogruppenhaltigen gelb- oder orange-färbenden Farbstoff verwendet.

**15.** Verfahren gemäss Anspruch 14, dadurch gekennzeichnet, dass man als faserreaktive, sulfogruppenhaltige gelb- oder orange- und rotfärbende Farbstoffe Azofarbstoffe verwendet.

**16.** Verfahren gemäss einem der Ansprüche 14 und 15, dadurch gekennzeichnet, dass die gelb- oder orange- und rotfärbenden Farbstoffe als faserreaktive Gruppe jeweils eine Halogentriazin-, Halogenpyrimidin-Gruppe oder eine Gruppe der aliphatischen Reihe enthalten.

**17.** Verfahren gemäss einem der Ansprüche 14 bis 16, dadurch gekennzeichnet, dass die gelb- oder orange- und rotfärbenden Farbstoffe als faserreaktive Gruppe Difluorchlorpyrimidinyl, insbesondere 2,4-Difluor-5-chlorpyrimidinyl, oder $\alpha,\beta$-Dihalogenpropionyl, insbesondere $\alpha,\beta$-Dibrompropionyl, oder $\alpha$-Halogenacryloyl, insbesondere $\alpha$-Bromacryloyl, enthalten.

**18.** Verfahren gemäss einem der Ansprüche 14 bis 17, dadurch gekennzeichnet, dass zum Trichromie-Färben oder -Bedrucken natürliches Polyamidmaterial, insbesondere Wolle, verwendet wird.

**19.** Verfahren zur Herstellung von Verbindungen der Formel

Z-Y-B-NH-R (10a)

worin Z eine abspaltbare Gruppe, insbesondere ein Halogenatom, B gegebenenfalls durch $C_1$-$C_4$-Alkoxy oder Halogen substituiertes $C_1$-$C_8$-Alkylen oder ein sulfogruppenfreies aromatisches Brückenglied, R $\alpha,\beta$-Dihalogenpropionyl, $\alpha$-Halogenacryloyl oder Halogenacetyl, und Y -CO- oder -$SO_2$-ist, dadurch gekennzeichnet, dass man eine Verbindung der Formel

HO-Y-B-$NH_2$ (10b),

worin Y und B die unter Formel (10a) angegebenen Bedeutungen haben, mit einer den Rest R einführenden Verbindung, wobei R die unter Formel (10a) angegebenen Bedeutungen hat, kondensiert und anschliessend mit einer die Gruppe Z einführenden Verbindung, wobei Z die unter Formel (10a) angegebene Bedeutung hat, umsetzt.

**20.** Verfahren gemäss Anspruch 19, dadurch gekennzeichnet, dass man eine Verbindung der Formel (10b), worin B -$(CH_2)_p$- oder

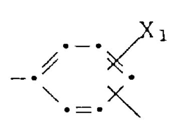

,

p die Zahl 1, 2, 3, 4, 5 oder 6 und $X_1$ Wasserstoff oder ein Substituent, ausgenommen Sulfo, ist, verwendet.

## Claims

**Claims for the following Contracting States : DE, GB, FR, IT, LI, CH, BE**

1. A fibre-reactive formazan dye of the formula

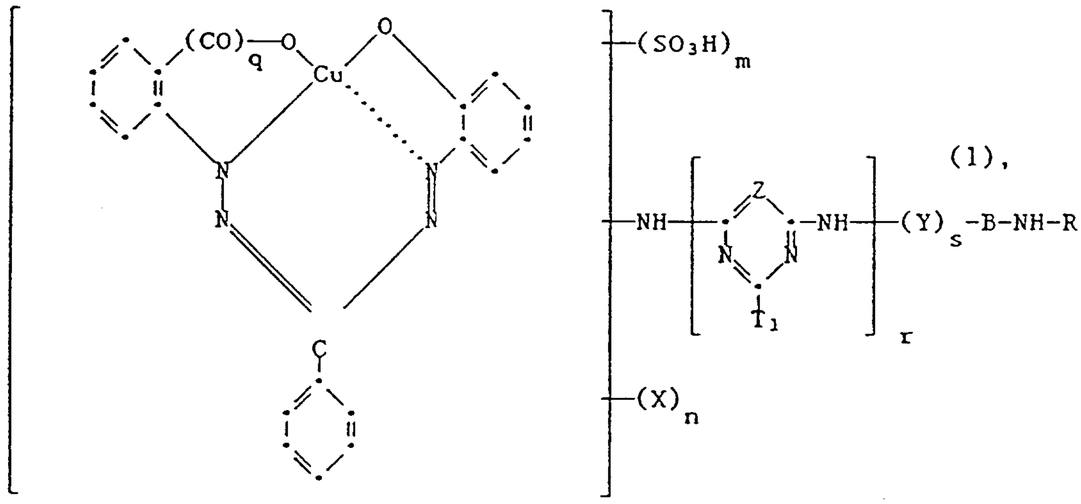

(1),

where B is optionally $C_1$-$C_4$alkoxy- or halo-substituted $C_1$-$C_8$alkylene or a sulfo-free aromatic bridge member, R is $\alpha,\beta$-dihalopropionyl, $\alpha$-haloacryloyl or haloacetyl, $T_1$ is halogen, X is halogen, $C_1$-$C_4$alkyl, $C_1$-$C_4$alkoxy, cyano or nitro, Y is -CO- or $-SO_2-$, Z is nitrogen or $-C-T_2$, $T_2$ is halogen, cyano, $C_1$-$C_4$alkylthio, hydrogen, formyl or $C_1$-$C_4$alkylsulfonyl, m is 1 or 2, n is 0, 1 or 2, q is 0 or 1, and r and s are each either 0 or 1 but never the same as each other.

2. A fibre-reactive formazan dye according to claim 1, wherein q is 1.

3. A fibre-reactive formazan dye according to either of claims 1 and 2, wherein m is 2.

4. A fibre-reactive formazan dye according to any one of claims 1 to 3, wherein X is halogen, in particular chlorine.

5. A fibre-reactive formazan dye according to any one of claims 1 to 4, wherein B is $-(CH_2)_p-$ or

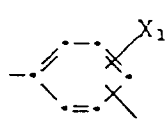

,

p is 1, 2, 3, 4, 5 or 6, and $X_1$ is hydrogen or a substituent other than sulfo.

6. A fibre-reactive formazan dye according to any one of claims 1 to 5, wherein n is 0 or 1.

7. A fibre-reactive formazan dye according to any one of claims 1 to 6, wherein $T_1$ is fluorine or in particular chlorine and Z is -C-F or -C-Cl or in particular nitrogen.

8. A fibre-reactive formazan dye according to any one of claims 1 to 7 of the formula

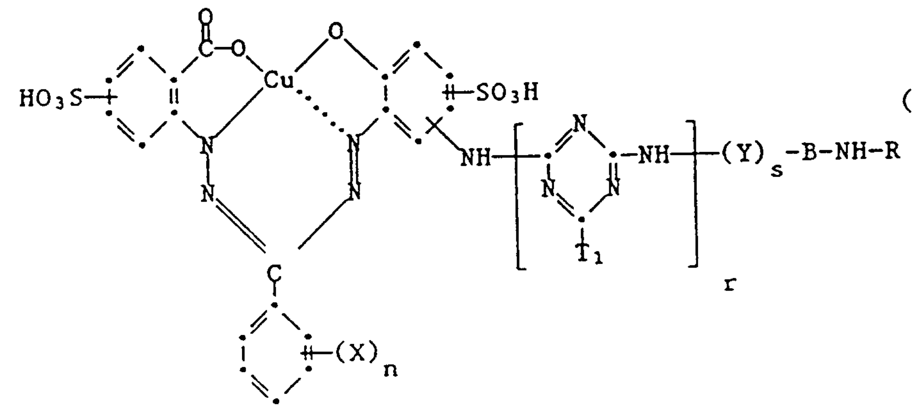

(2)

where B is phenylene, R is an $\alpha,\beta$-dihalopropionyl, $\alpha$-haloacryloyl or haloacetyl radical where the halogen is bromine and/or chlorine, $T_1$ is fluorine or in particular chlorine, X is chlorine, Y is -CO- or $-SO_2-$, n is 0 or 1, r is 0 or 1, and s is 0 or 1.

9. A fibre-reactive formazan dye according to claim 8 of the formula

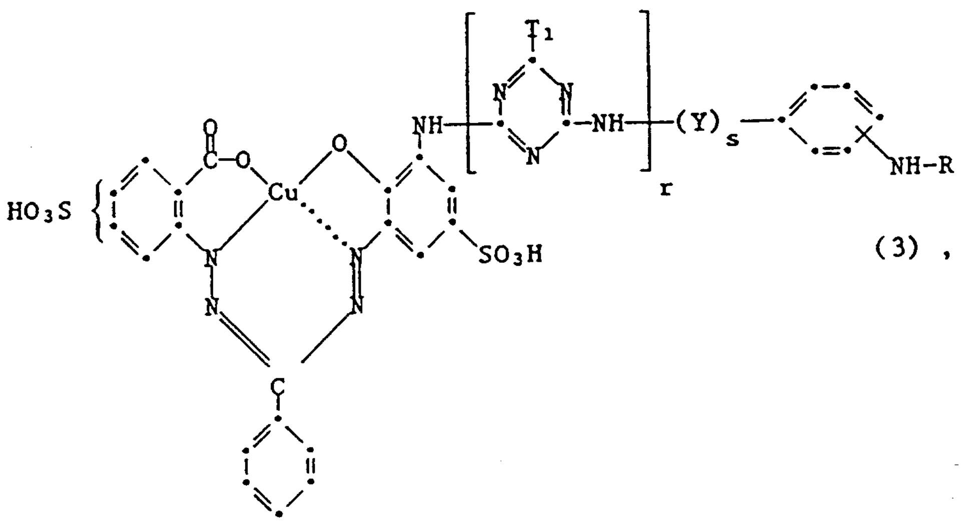

(3) ,

where R, $T_1$, Y, r and s are as defined in claim 8.

**10.** A fibre-reactive formazan dye according to claim 9 of the formula

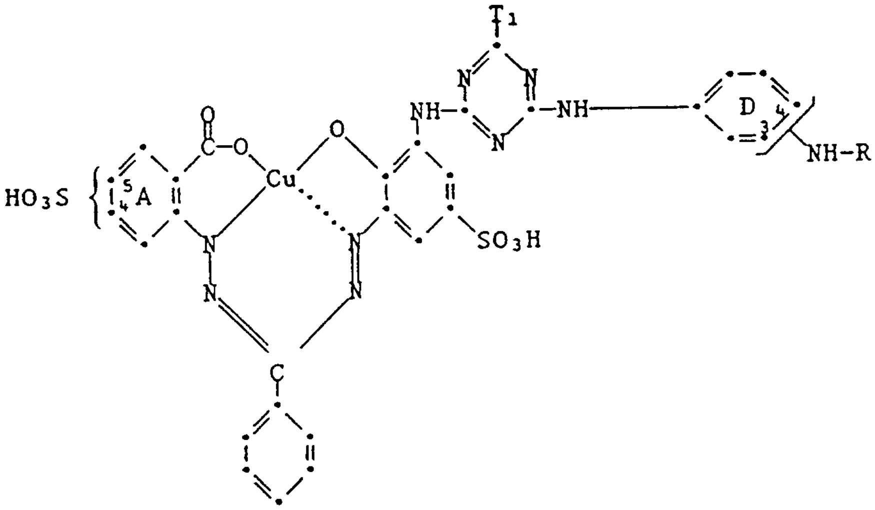

(4)

where $T_1$ is chlorine or fluorine, R is $\alpha,\beta$-dibromopropionyl, $\alpha$-bromoacryloyl or chloroacetyl, the sulfo group is bonded to the benzene ring A in the 4- or 5-position, and -NH-R is bonded to the benzene ring D in the 3- or 4-position.

**11.** A fibre-reactive formazan dye according to claim 9 of the formula

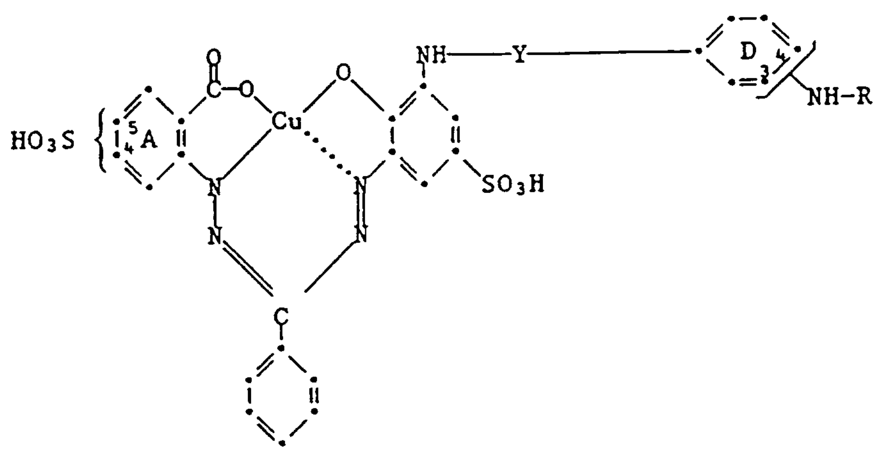

(5)

where R is $\alpha,\beta$-dibromopropionyl, $\alpha$-bromoacryloyl or chloroacetyl, the sulfo group is bonded to the benzo ring A in the 4- or 5-position, -NH-R is bonded to the benzo ring D in the 3- or 4-position, and Y is -CO- or $-SO_2-$.

**12.** A process for preparing a fibre-reactive formazan dye according to claim 1, which comprises reacting an amine of the formula

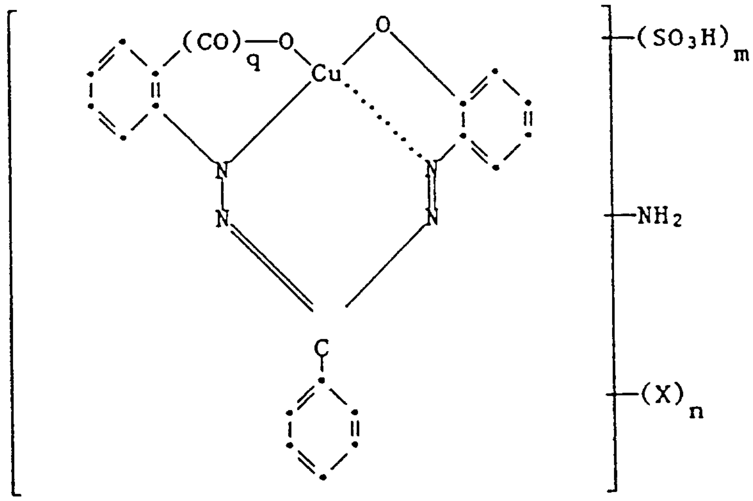

(6),

where X, m, n and q are as defined under the formula (1), with a compound which introduces the radical of the formula

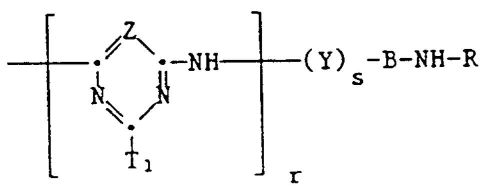

(7)

where B, R, Y, $T_1$, Z, r and s are as defined in claim 1.

**13.** The use of a fibre-reactive formazan dye according to any one of claims 1 to 11 or of a fibre-reactive formazan dye obtained according to claim 12, for dyeing and printing.

**14.** The use according to claim 13, for dyeing and printing paper, leather and hydroxyl- or nitrogen-containing textile materials.

**15.** A process for the trichromatic dyeing or printing of natural and synthetic polyamide materials with dye mixtures, which comprises using a fibre-reactive formazan dye of the formula

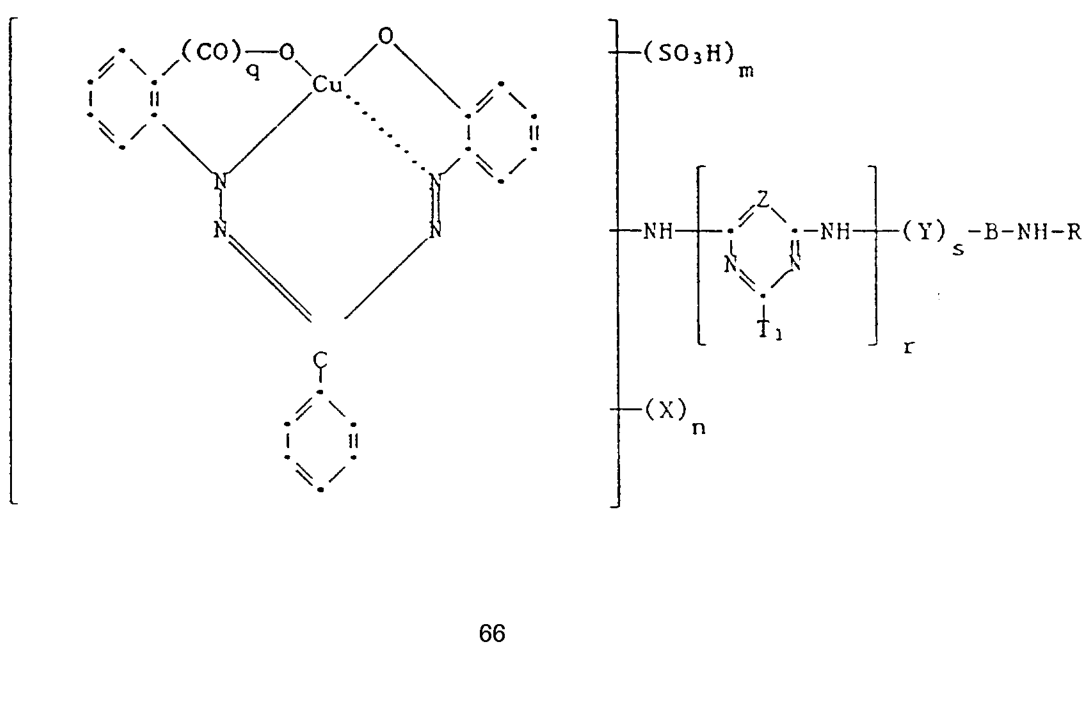

where B is optionally $C_1$-$C_4$alkoxy- or halo-substituted $C_1$-$C_8$alkylene or a sulfo-free aromatic bridge member, R is α,β-dihalopropionyl, α-haloacryloyl or haloacetyl, $T_1$ is halogen, X is halogen, $C_1$-$C_4$alkyl, $C_1$-$C_4$alkoxy, cyano or nitro, Y is -CO- or $-SO_2-$, Z is nitrogen or $-C-T_2$, $T_2$ is halogen, hydrogen, $C_1$-$C_4$alkylthio, cyano, formyl or $C_1$-$C_4$alkylsulfonyl, m is 1 or 2, n is 0, 1 or 2, q is 0 or 1, and r and s are each either 0 or 1 but never the same as each other, together with a fibre-reactive, sulfo-containing red-dyeing dye and a fibre-reactive, sulfo-containing yellow- or orange-dyeing dye.

**16.** A process according to claim 15, wherein the fibre-reactive, sulfo-containing yellow- or orange- and red-dyeing dyes are azo dyes.

**17.** A process according to either of claims 15 and 16, wherein the yellow- or orange- and red-dyeing dyes each contain as the fibre-reactive group a halotriazine or a halopyrimidine group or a group of the aliphatic series.

**18.** A process according to any one of claims 15 to 17, wherein the yellow- or orange- and red-dyeing dyes contain as the fibre-reactive group difluorochloropyrimidinyl, in particular 2,4-difluoro-5-chloropyrimidinyl, or α,β-dihalopropionyl, in particular α,β-dibromopropionyl, or α-haloacryloyl, in particular α-bromoacryloyl.

**19.** A process according to any one of claims 15 to 18, wherein the trichromatic dyeing or printing substrate used is natural polyamide material, in particular wool.

**20.** A compound of the formula

Z-Y-B-NH-R

where Z is a detachable group, in particular a halogen atom, B is optionally $C_1$-$C_4$alkoxy- or halo-substituted $C_1$-$C_8$alkylene or a sulfo-free aromatic bridge member, R is α,β-dihalopropionyl, α-haloacryloyl or haloacetyl, and Y is -CO- or $-SO_2-$.

**21.** A compound according to claim 20, wherein B is $-(CH_2)_p-$ or

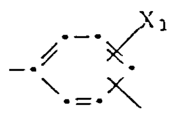

p is 1, 2, 3, 4, 5 or 6, and $X_1$ is hydrogen or a substituent other than sulfo.

**Claims for the following Contracting State : ES**

**1.** A process for preparing a fibre-reactive formazan dye of the formula

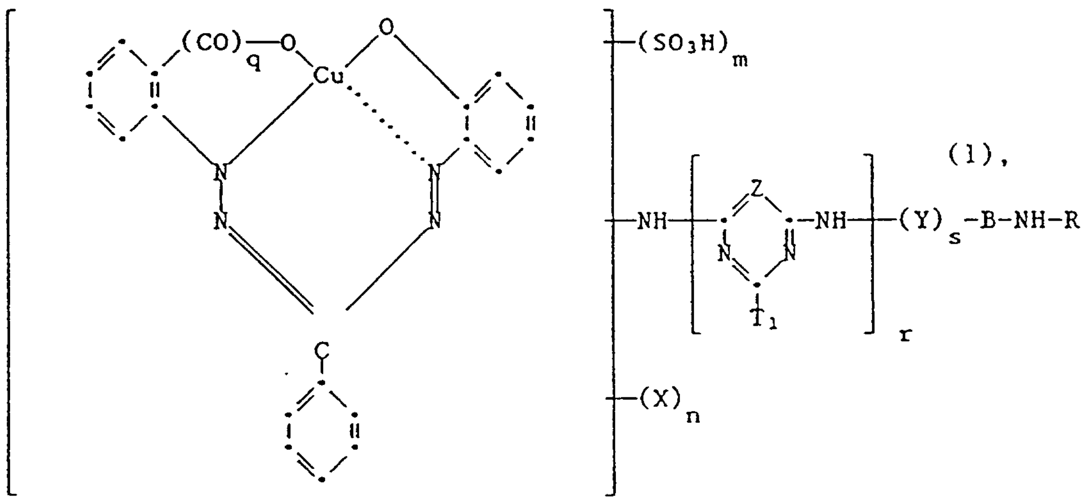

(1),

where B is optionally $C_1$-$C_4$alkoxy- or halo-substituted $C_1$-$C_8$alkylene or a sulfo-free aromatic bridge member, R is $\alpha,\beta$-dihalopropionyl, $\alpha$-haloacryloyl or haloacetyl, $T_1$ is halogen, X is halogen, $C_1$-$C_4$alkyl, $C_1$-$C_4$alkoxy, cyano or nitro, Y is -CO- or -$SO_2$-, Z is nitrogen or -C-$T_2$, $T_2$ is halogen, cyano, $C_1$-$C_4$alkylthio, hydrogen, formyl or $C_1$-$C_4$alkylsulfonyl, m is 1 or 2, n is 0, 1 or 2, q is 0 or 1, and r and s are each either 0 or 1 but never the same as each other, which comprises reacting an amine of the formula

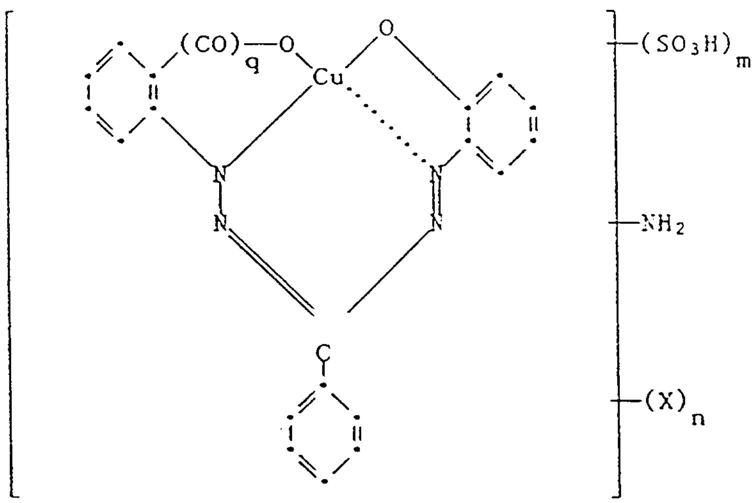

(6),

where X, m, n and q are as defined under the formula (1), with a compound which introduces the radical of the formula

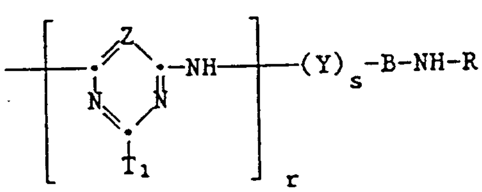

(7)

where B, R, Y, $T_1$, Z, r and s are as defined under the formula (1), or condensing an amine of the

formula (6), where X, m, n and q are as defined under the formula (1), with a compound of the formula

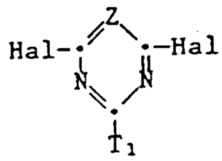

(8),

where Z and $T_1$ are as defined under the formula (1) and each Hal is halogen, in particular fluorine or chlorine, and then reacting the condensation product with a compound which introduces the radical of the formula

-NH-B-NH-R (9)

where B and R in the formula (9) are as defined under the formula (1).

**2.** A process according to claim 1, which comprises using an amine of the formula (6) in which q is 1.

**3.** A process according to either of claims 1 and 2, which comprises using an amine of the formula (6) in which m is 2.

**4.** A process according to any one of claims 1 to 3, which comprises using an amine of the formula (6) in which X is halogen, in particular chlorine.

**5.** A process according to any one of claims 1 to 4, which comprises using a radical of the formula (7) or a compound which introduces the radical of the formula (9), in which B is $-(CH_2)_p-$ or

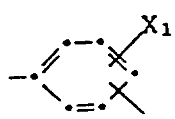

,

p is 1, 2, 3, 4, 5 or 6, and $X_1$ is hydrogen or a substituent other than sulfo.

**6.** A process according to any one of claims 1 to 5, which comprises using an amine of the formula (6) in which n is 0 or 1.

**7.** A process according to any one of claims 1 to 6, which comprises using a radical of the formula (7) or a compound which introduces the radical of formula (9), in which $T_1$ is fluorine or in particular chlorine and Z is -C-F or -C-Cl or in particular nitrogen.

**8.** A process according to any one of claims 1 to 7 which comprises condensing an amine of the formula

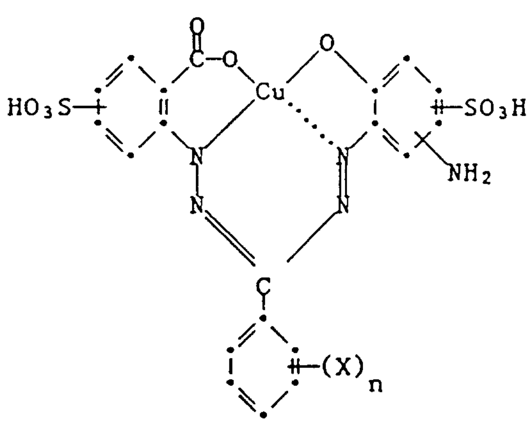

(11),

where X is chlorine and n is 0 or 1, with a compound of the formula (8), where each Hal is halogen, in particular fluorine or chlorine, $T_1$ is fluorine or in particular chlorine and Z is nitrogen, and then reacting the condensation product with a compound which introduces the radical of the formula (9), where B is phenylene and R is an α,β-dihalopropionyl, α-haloacryloyl or haloacetyl radical where the halogen is bromine and/or chlorine, or reacting an amine of the formula (11), where X is chlorine and n is 0 or 1, with a compound of the formula

-Y-B-NH-R (10),

where B is phenylene, R is an α,β-dihalopropionyl, α-haloacryloyl or haloacetyl radical where the halogen is bromine and/or chlorine, Y is -CO- or $-SO_2-$.

**9.** A process according to claim 8, which comprises condensing an amine of the formula

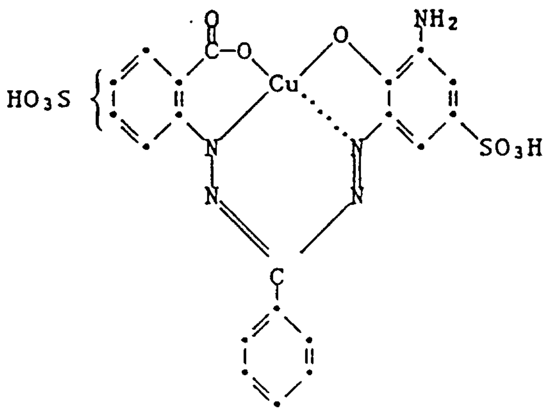

(12)

with either cyanuric chloride or cyanuric fluoride and then reacting the condensation product with a compound which introduces the radical of the formula (9), where B and R are as defined in claim 8, or reacting an amine of the formula (12) with a compound which introduces the radical of the formula (10), where B, R and Y are as defined in claim 8.

**10.** A process according to claim 9, which comprises condensing an amine of the formula

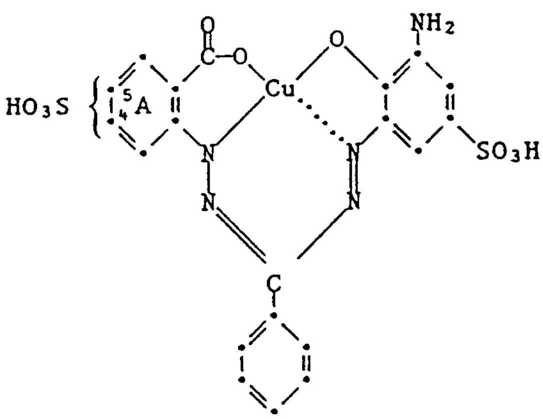

(13),

in which the sulfo group is bonded to the benzene ring A in the 4- or 5-position, with cyanuric chloride or cyanuric fluoride and subsequently reacting the condensation product with a compound of the formula

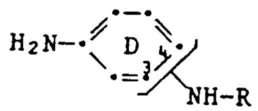

(14) ,

in which R is α,β-dibromopropionyl, α-bromoacryloyl or chloroacetyl, where -NHR is bonded to the benzene ring D in the 3- or 4-position.

**11.** A process according to claim 9, which comprises reacting an amine of the formula

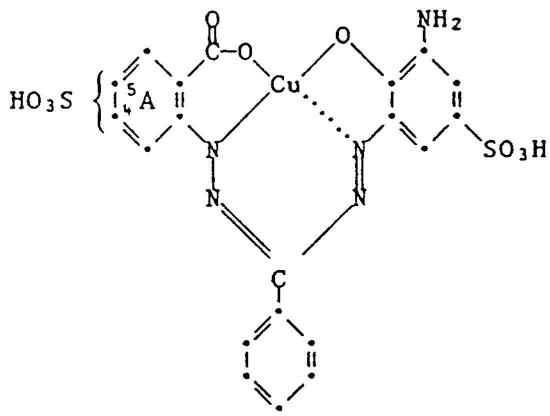

(13),

in which the sulfo group is bonded to the benzene ring A in the 4- or 5-position, with a compound of the formula

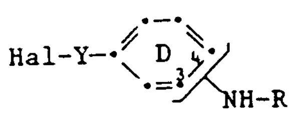

in which Hal is halogen, especially chlorine, Y is -CO- or $-SO_2-$ and R is α,β-dibromopropionyl, α-bromoacryloyl or chloroacetyl, where -NH-R- is bonded to the benzene ring D in the 3- or 4-position.

**12.** The use of a fibre-reactive formazan dye obtained according to any of claims 1 to 11 for dyeing and printing.

**13.** The use according to claim 12 for dyeing and printing paper, leather, or hydroxyl-containing or nitrogen-containing textile materials.

**14.** A process for the trichromatic dyeing or printing of natural and synthetic polyamide materials with dye mixtures, which comprises using a fibre-reactive formazan dye obtained according to claim 1 together with a fibre-reactive, sulfo-containing red-dyeing dye and a fibre-reactive, sulfo-containing yellow- or orange-dyeing dye.

**15.** A process according to claim 14, which comprises using azo dyes as the fibre-reactive, sulfo-containing yellow- or orange- and red-dyeing dyes.

**16.** A process according to either of claims 14 and 15, wherein the yellow- or orange- and red-dyeing dyes contain as the fibre-reactive group in each case a halotriazine or a halopyrimidine group or a group of the aliphatic series.

**17.** A process according to any of claims 14 to 16, wherein the yellow-or orange- and red-dyeing dyes contain as the fibre-reactive group difluorochloropyrimidinyl, in particular 2,4-difluoro-5-chloropyrimidinyl, or α,β-dihalopropionyl, in particular α,β-dibromopropionyl, or α-haloacryloyl, in particular α-bromoacryloyl.

**18.** A process according to any of claims 14 to 17, which comprises using natural polyamide material, in particular wool, for the trichromatic dyeing or printing.

**19.** A process for the preparation of compounds of the formula

Z-Y-B-NH-R (10a)

where Z is a detachable group, in particular a halogen atom, B is optionally $C_1$-$C_4$alkoxy- or halo-substituted $C_1$-$C_8$alkylene or a sulfo-free aromatic bridge member, R is $\alpha,\beta$-dihalopropionyl, $\alpha$-haloacryloyl or haloacetyl, and Y is -CO- or $-SO_2-$, which comprises condensing a compound of the formula

$HO-Y-B-NH_2$ (10b),

where Y and B are as defined under the formula (10a), with a compound which introduces the radical R, where R is as defined under the formula (10a), and subsequently reacting the product with a compound which introduces the group Z, where Z is as defined under the formula (10a).

**20.** A process according to claim 19, which comprises using a compound of the formula (10b) in which B is $-(CH_2)_p-$ or

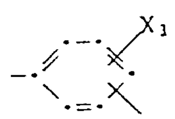 ,

p is 1, 2, 3, 4, 5 or 6 and $X_1$ is hydrogen or a substituent with the exception of sulfo.

**Revendications**

**Revendications pour les Etats contractants suivants : DE, GB, FR, IT, LI, CH, BE**

**1.** Colorants formazanes, réactifs avec les fibres, de formule :

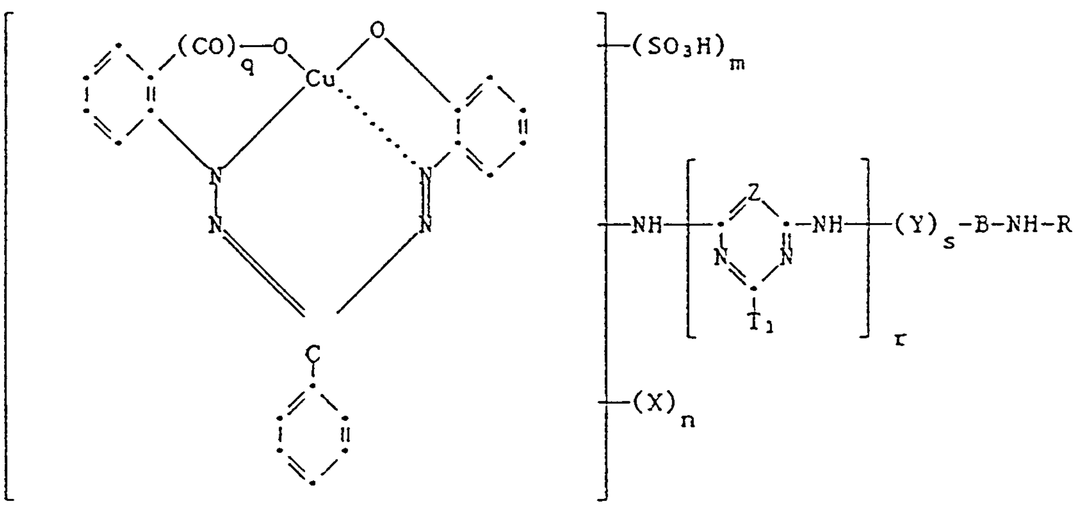

dans laquelle B désigne un alkylène en $C_1$-$C_8$ éventuellement substitué par alcoxy en $C_1$-$C_4$ ou par halogène ou un membre d'un pont aromatique exempt de groupe sulfo, R désigne $\alpha,\beta$-dihalogénopropionyle, $\alpha$-halogénoacryloyle ou halogénoacétyle ; $T_1$ désigne halogène ; X désigne halogène, alkyle en $C_1$-$C_4$, alcoxy en $C_1$-$C_4$, cyano ou nitro ; Y désigne -CO- ou $-SO_2-$, Z désigne un atome d'azote ou le groupe $-C-T_2$ ; $T_2$ désigne halogène ou un radical cyano, alkylthio en $C_1$-$C_4$, hydrogène, formyle ou alkylsulfonyle en $C_1$-$C_4$ ; m désigne le nombre 1 ou 2 ; n désigne le nombre 0, 1 ou 2 ; q désigne le nombre 0 ou 1 ; r désigne le nombre 0 ou 1 et s désigne le nombre 0 ou 1 ; r et s ayant des

significations différentes l'une de l'autre.

2. Colorants formazanes, réactifs avec les fibres, selon la revendication 1, pour lesquels q désigne le nombre 1.

3. Colorants formazanes, réactifs avec les fibres, selon la revendication 1 ou 2, pour lesquels m désigne le nombre 2.

4. Colorants formazanes, réactifs avec les fibres, selon l'une des revendications 1 à 3, pour lesquels X désigne halogène, en particulier le chlore.

5. Colorants formazanes, réactifs avec les fibres, selon l'une des revendications 1 à 4, pour lesquels B désigne $-(CH_2)_p-$ ou

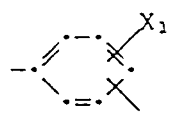

p désigne le nombre 1, 2, 3, 4, 5 ou 6 et $X_1$ désigne l'hydrogène ou un substituant à l'exclusion de sulfo.

6. Colorants formazanes, réactifs avec les fibres, selon l'une des revendications 1 à 5, pour lesquels n désigne le nombre 0 ou 1.

7. Colorants formazanes, réactifs avec les fibres, selon l'une des revendications 1 à 6, pour lesquels $T_1$ désigne le fluor ou en particulier le chlore et Z désigne le reste -C-F ou -C-Cl ou en particulier un atome d'azote.

8. Colorants formazanes, réactifs avec les fibres, selon l'une des revendications 1 à 7, de formule :

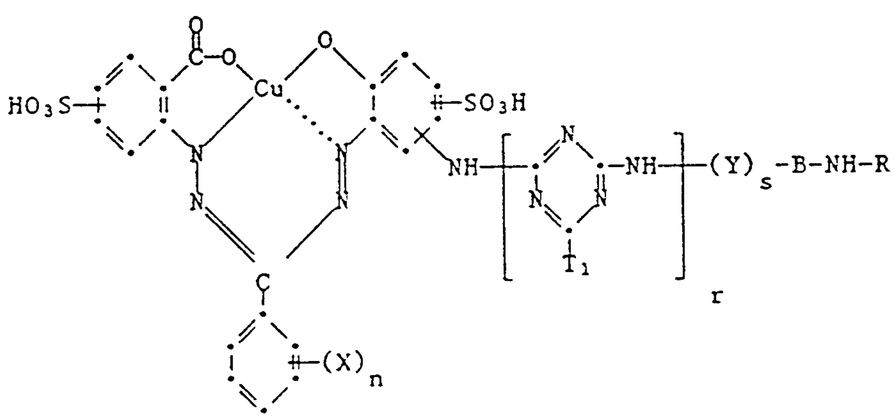

(2)

dans laquelle B désigne phénylène, R désigne un reste α,β-dihalogénopropionyle, α-halogénoacryloyle ou halogénoacétyle contenant comme halogène des atomes de brome et/ou de chlore ; $T_1$ désigne le fluor et plus particulièrement le chlore ; X désigne le chlore ; Y désigne -CO- ou $-SO_2-$, n désigne le nombre 0 ou 1, r désigne le nombre 0 ou 1 et s désigne le nombre 0 ou 1.

**9.** Colorants formazanes, réactifs avec les fibres, selon la revendication 8, ayant la formule :

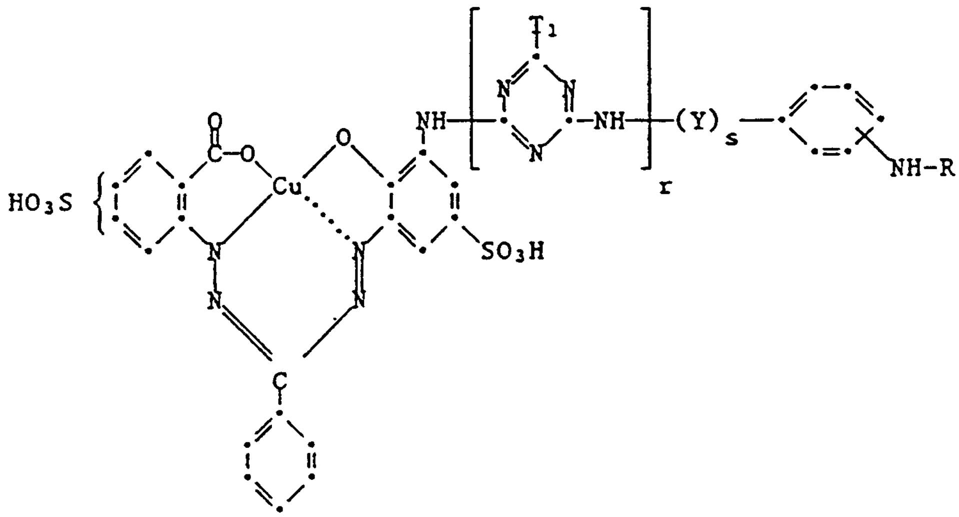

(3)

dans laquelle R, $T_1$, Y, r et s ont les significations indiquées dans la revendication 8.

**10.** Colorants formazanes, réactifs avec les fibres, selon la revendication 9, ayant la formule :

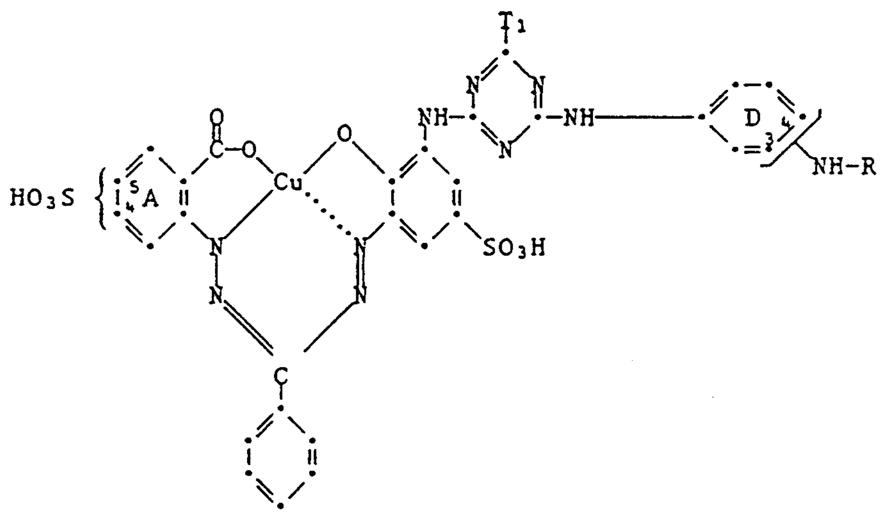

(4)

dans laquelle $T_1$ désigne le chlore ou le fluor, R désigne $\alpha,\beta$-dibromopropionyle, $\alpha$-bromoacryloyle ou chloroacétyle, le groupe sulfo est lié au noyau benzénique A en position 4 ou 5 et -NH-R est lié au noyau benzénique D en position 3 ou 4.

**11.** Colorants formazanes, réactifs avec les fibres, selon la revendication 9, ayant la formule :

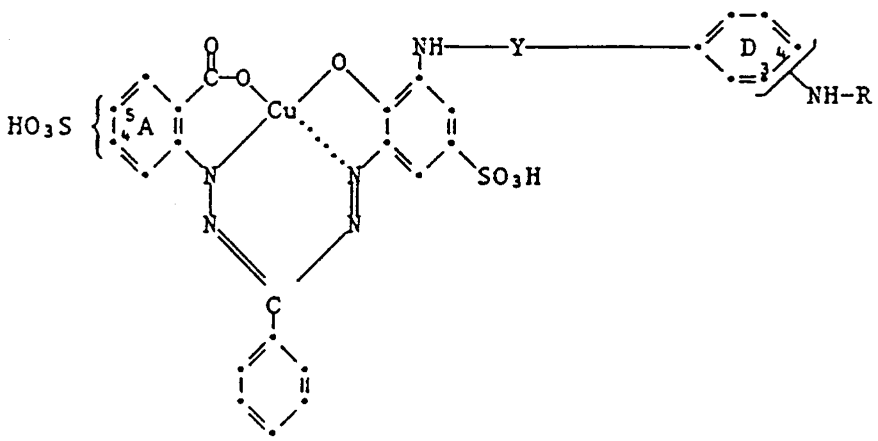

(5)

dans laquelle R désigne $\alpha,\beta$-dibromopropionyle, $\alpha$-bromoacryloyle ou chloroacétyle, le groupe sulfo est lié au noyau benzénique A en position 4 ou 5, -NH-R est lié au noyau benzénique D en position 3 ou 4 et Y désigne -CO-ou $-SO_2$-.

**12.** Procédé de préparation de colorants formazanes, réactifs avec les fibres, selon la revendication 1, caractérisé par le fait qu'on fait réagir une amine de formule :

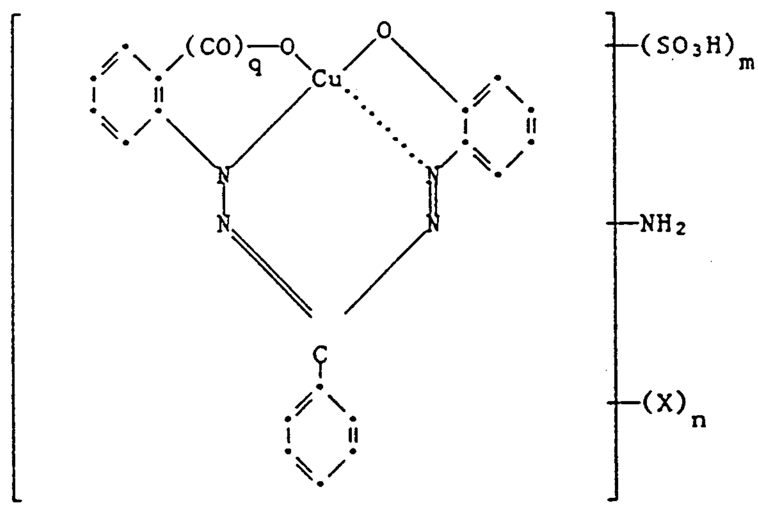

(6)

dans laquelle X, m, n et q ont les significations indiquées pour la formule (1), avec un composé introduisant le reste de formule :

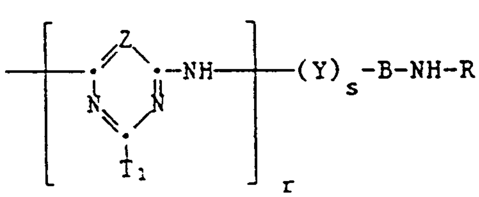

(7)

dans laquelle B, R, Y, $T_1$, Z, r et s ont les significations indiquées dans la revendication 1.

**13.** Utilisation de colorants formazanes, réactifs avec les fibres selon l'une des revendications 1 à 11 ou de colorants formazanes, réactifs avec les fibres, pouvant être obtenus selon la revendication 12, pour la teinture et l'impression.

**14.** Utilisation selon la revendication 13, pour la teinture et l'impression du papier, du cuir et de matières textiles, renfermant des groupes hydroxyle ou de l'azote.

**15.** Procédé de teinture ou d'impression en trichromie, de matières en polyamides naturels ou synthétiques, avec des mélanges de colorants, caractérisé par le fait qu'on utilise un colorant formazane, réactif avec les fibres, ayant la formule :

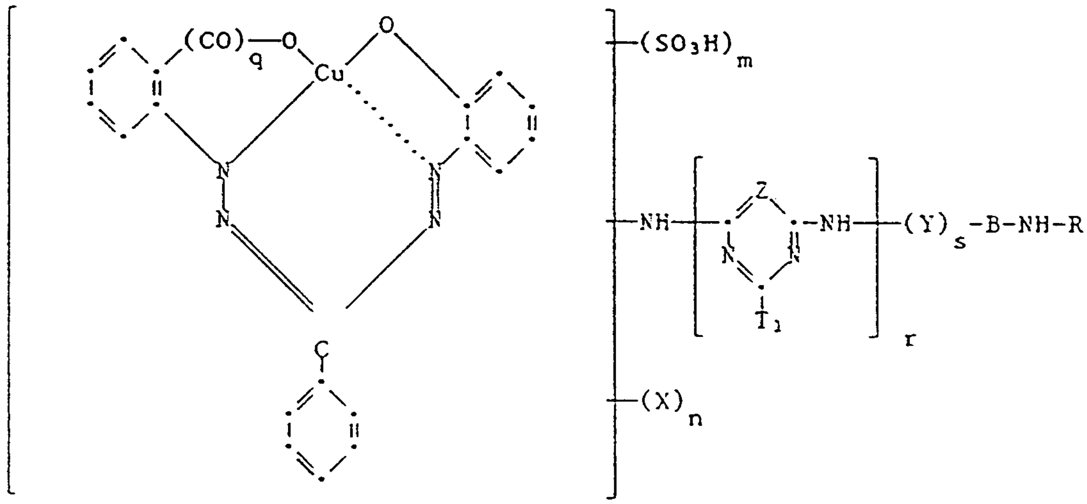

dans laquelle a désigne un alkylène en $C_1$-$C_8$ éventuellement substitué par alcoxy en $C_1$-$C_4$ ou par halogène, ou un membre de pont aromatique exempt de groupes sulfo ; R désigne $\alpha,\beta$-dihalogénopropionyle, $\alpha$-halogénoacryloyle ou halogénoacétyle ; $T_1$ désigne halogène ; X désigne halogène, alkyle en $C_1$-$C_4$, alcoxy en $C_1$-$C_4$, cyano ou nitro ; Y désigne -CO- ou -$SO_2$- ; Z désigne un atome d'azote ou le groupe -C-$T_2$ ; $T_2$ désigne halogène, hydrogène, alkylthio en $C_1$-$C_4$, cyano, formyle ou alkylsulfonyle en $C_1$-$C_4$ ; m désigne le nombre 1 ou 2 ; n désigne le nombre 0, 1 ou 2 ; q désigne le nombre 0 ou 1 ; r désigne le nombre 0 ou 1 et s désigne le nombre 0 ou 1 ; r et s étant différents l'une de l'autre ; ensemble avec un colorant réactif avec les fibres, renfermant des groupes sulfo et teignant en rouge et avec un colorant réactif avec les fibres, renfermant des groupes sulfo et teignant en orange ou en jaune.

**16.** Procédé selon la revendication 15, caractérisé par le fait qu'on utilise comme colorants réactifs avec les fibres, renfermant des groupes sulfo et teignant en jaune ou en orange et en rouge, des colorants azoïques.

**17.** Procédé selon la revendication 15 ou 16, caractérisé par le fait que les colorants teignant en jaune ou orange et en rouge renferment comme groupes réactifs avec les fibres, un groupe halogénotriazine, un groupe halogénopyrimidine ou un groupe de la série aliphatique.

**18.** Procédé selon l'une des revendications 15 à 17, caractérisé par le fait que les colorants teignant en jaune ou orange et en rouge renferment comme groupes réactifs avec les fibres un groupe difluorochloropyrimidinyle et en particulier 2,4-difluoro-5-chloropyrimidinyle ou $\alpha,\beta$-dihalogénopropionyle et en particulier $\alpha,\beta$-dibromo-propionyle ou $\alpha$-halogénoacryloyle et en particulier $\alpha$-bromoacryloyle.

**19.** Procédé selon l'une des revendications 15 à 18, caractérisé par le fait qu'on utilise pour la teinture ou l'impression en trichromie, du matériau polyamide naturel et en particulier de la laine.

**20.** Composés de formule :

Z-Y-B-NH-R

dans laquelle Z désigne un groupe éliminable et en particulier un atome d'halogène, B désigne un groupe alkylène en $C_1$-$C_8$ éventuellement substitué par alcoxy en $C_1$-$C_4$ ou par halogène ou un

membre de pont aromatique exempt de groupes sulfo, R désigne $\alpha,\beta$-dihalogénopropionyle, $\alpha$-halogénoacryloyle ou halogénoacétyle, et Y désigne -CO-ou $-SO_2$.

**21.** Composés selon la revendication 20, pour lesquels B désigne $-(CH_2)_p-$ ou

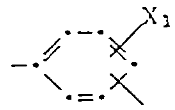

p désigne le nombre 1, 2, 3, 4, 5 ou 6 et $X_1$ désigne hydrogène ou un substituant, excepté sulfo.

**Revendications pour l'Etat contractant suivant : ES**

**1.** Procédé de préparation de colorants formazanes, réactifs avec les fibres, de formule :

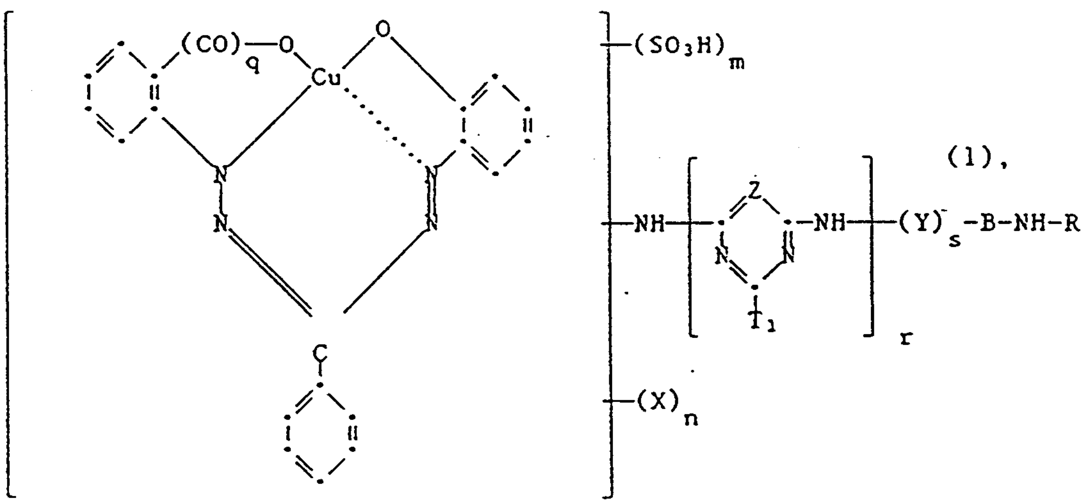

(1),

dans laquelle B désigne alkylène en $C_1$-$C_8$, éventuellement substitué par alcoxy en $C_1$-$C_4$ ou par halogène, ou un membre de pont aromatique exempt de groupes sulfo ; R désigne $\alpha,\beta$-dihalogénopropionyle, $\alpha$-halogénoacryloyle ou halogénoacétyle ; $T_1$ désigne halogène ; X désigne halogène, alkyle en $C_1$-$C_4$, alcoxy en $C_1$-$C_4$, cyano ou nitro ; Y désigne -CO- ou $-SO_2-$ ; Z désigne un atome d'azote ou le groupe $-C-T_2$ ; $T_2$ désigne halogène, cyano, alkylthio en $C_1$-$C_4$, hydrogène, formyle ou alkylsulfonyle en $C_1$-$C_4$ ; m désigne le nombre 1 ou 2 ; n désigne le nombre 0, 1 ou 2 ; q désigne le nombre 0 ou 1 ; r désigne le nombre 0 ou 1 et s désigne le nombre 0 ou 1 ; r et s étant différents l'un de l'autre ; caractérisé par le fait qu'on fait réagir une amine de formule :

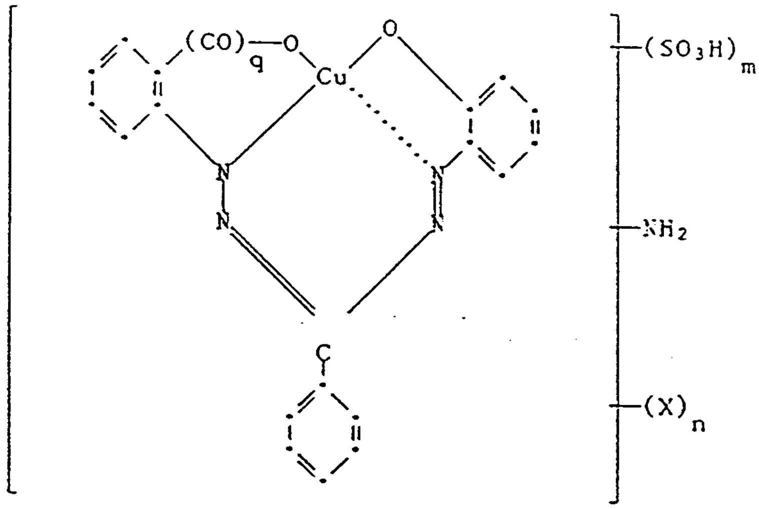

(6)

dans laquelle X, m, n et q ont les significations indiquées pour la formule (1), avec un composé introduisant le reste de formule :

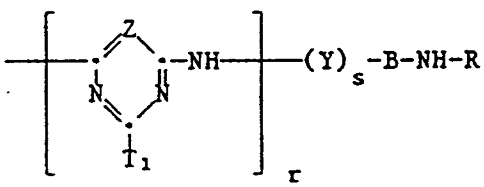

(7)

dans laquelle B, R, Y, $T_1$, Z, r et s ont les significations indiquées pour la formule (1),
ou bien on condense une amine de formule (6) dans laquelle X, m, n et q ont les significations indiquées pour la formule (1), avec un composé de formule :

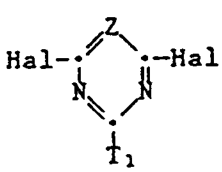

(8)

dans laquelle Z et $T_1$ ont les significations indiquées pour la formule (1), et Hal désigne chaque fois un atome d'halogène, en particulier un atome de fluor ou de chlore,
et qu'on fait réagir ensuite le produit de condensation avec un composé introduisant le reste de formule :

-NH-B-NH-R (9)

dans cette formule (9) B et R ont les significations indiquées pour la formule (1).

2. Procédé selon la revendication 1, caractérisé par le fait qu'on utilise une amine de formule (6) dans laquelle q désigne le nombre 1.

3. Procédé selon la revendication 1 ou 2, caractérisé par le fait qu'on utilise une amine de formule (6) dans laquelle m désigne le nombre 2.

4. Procédé selon l'une des revendications 1 à 3, caractérisé par le fait qu'on utilise une amine de formule (6) dans laquelle X désigne halogène et en particulier le chlore.

5. Procédé selon l'une des revendications 1 à 4, caractérisé par le fait qu'on utilise un composé introduisant un reste de formule (7) ou un reste de formule (9), dans lesquels B désigne $-(CH_2)_p-$ ou

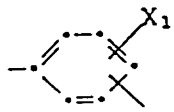

p désigne le nombre 1, 2, 3, 4, 5 ou 6 et $X_1$ désigne l'hydrogène ou un substituant excepté sulfo.

6. Procédé selon l'une des revendications 1 à 5, caractérisé par le fait qu'on utilise une amine de formule (6) dans laquelle n désigne le nombre 0 ou 1.

7. Procédé selon l'une des revendications 1 à 6, caractérisé par le fait qu'on utilise un composé introduisant le reste de formule (7) ou le reste de formule (8) dans lesquels $T_1$ désigne le fluor ou plus particulièrement le chlore et Z désigne le reste -C-F ou -C-Cl ou plus particulièrement un atome d'azote.

8. Procédé selon l'une des revendications 1 à 7, caractérisé par le fait qu'on condense une amine de formule :

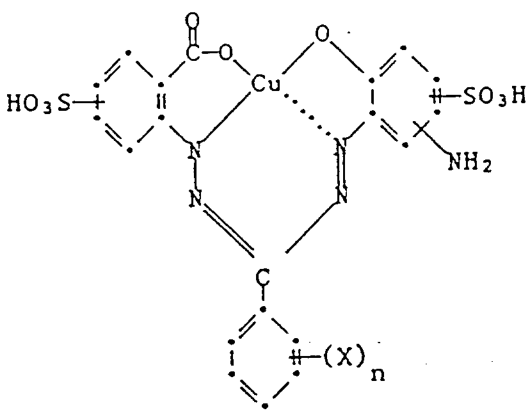

(11)

dans laquelle X désigne chlore et n désigne le nombre 0 ou 1, avec un composé de formule (8) dans laquelle Hal désigne halogène et en particulier du fluor ou du chlore, $T_1$ désigne du fluor ou plus particulièrement du chlore et Z désigne un atome d'azote, et qu'ensuite on fait réagir le produit de condensation avec le composé introduisant un reste de formule (9), dans laquelle B désigne phénylène et R désigne un reste $\alpha,\beta$-dihalogénopropionyle, $\alpha$-halogénoacryloyle ou halogénoacétyle contenant comme halogène des atomes de brome et/ou de chlore ou bien qu'on fait réagir une amine de formule (11) dans laquelle X désigne le chlore et n désigne le nombre 0 ou 1 avec un composé de formule :

-Y-B-NH-R (10)

dans laquelle B désigne phénylène, R désigne un reste $\alpha,\beta$-dihalogénopropionyle, $\alpha$-halogénoacryloyle ou halogénoacétyle, contenant comme halogène un atome de brome et/ou de chlore et Y désigne -CO- ou $-SO_2-$.

**9.** Procédé selon la revendication 8, caractérisé par le fait qu'on condense une amine de formule :

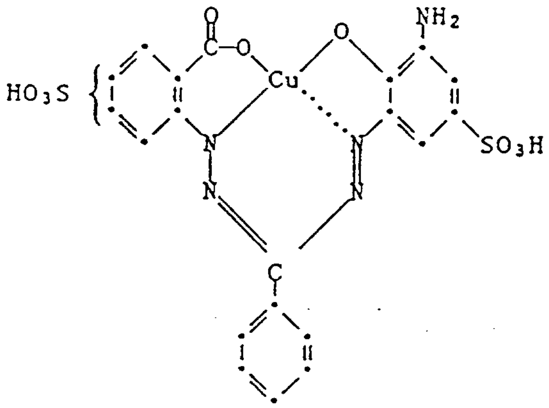

(12)

avec du chlorure de cyanure ou avec du fluorure de cyanure et qu'ensuite on fait réagir le produit de condensation avec un composé introduisant le reste de formule (9) dans laquelle B et R ont les significations indiquées dans la revendication 8, ou bien qu'on fait réagir une amine de formule (12) avec un composé introduisant le reste de formule (10) dans laquelle B, R et Y ont les significations indiquées dans la revendication 8.

**10.** Procédé selon la revendication 9, caractérisé par le fait qu'on condense une amine de formule :

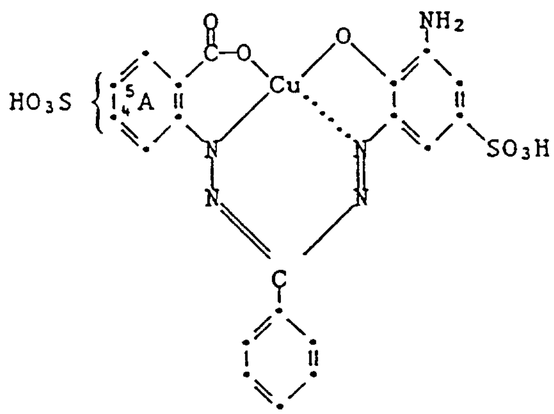

(13)

dans laquelle les groupes sulfo sont liés par rapport au noyau benzénique A en position 4 ou 5, avec du chlorure de cyanure ou avec du fluorure de cyanure et qu'on fait réagir ensuite le produit de condensation avec un composé de formule :

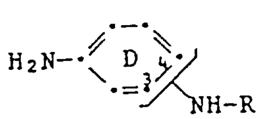

(14)

dans laquelle R désigne un groupe $\alpha,\beta$-dibromopropionyle, $\alpha$-bromoacryloyle ou chloroacétyle, -NHR étant lié en position 3 ou 4 par rapport au noyau benzénique D.

11. Procédé selon la revendication 9, caractérisé par le fait qu'on fait réagir une amine de formule :

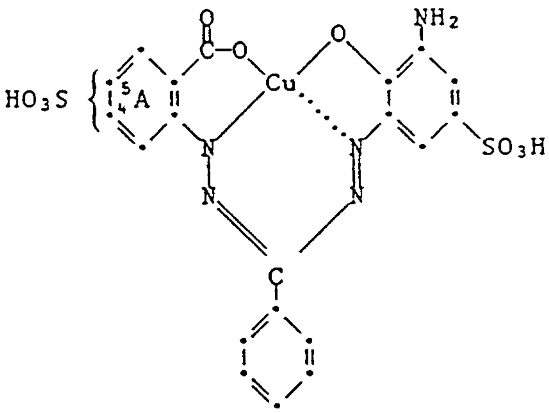

(13)

dans laquelle le groupe sulfo est lié en position 4 ou 5 par rapport au noyau benzénique, avec un composé de formule :

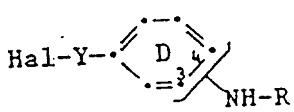

(15)

dans laquelle Hal désigne halogène et en particulier du chlore ; Y désigne -CO- ou $-SO_2-$ et R désigne $\alpha,\beta$-dibromopropionyle, $\alpha$-bromoacryloyle ou chloroacétyle ; le groupe -NH-R étant lié en position 3 ou 4 par rapport au noyau benzénique D.

12. Utilisation des colorants formazanes, réactifs avec les fibres, obtenus selon l'une des revendications 1 à 11, pour la teinture et l'impression.

13. Utilisation selon la revendication 12, pour la teinture et l'impression du papier, du cuir et de matières textiles renfermant des groupes hydroxyle ou des atomes d'azote.

14. Procédé pour la teinture ou l'impression en trichromie, de matières en polyamides naturels ou synthétiques avec des mélanges de colorants, caractérisé par le fait qu'on utilise un colorant formazane, réactif avec les fibres, obtenu selon la revendication 1, ensemble avec des colorants réactifs avec les fibres, renfermant des groupes sulfo et teignant en rouge et avec un colorant réactif avec les fibres, renfermant des groupes sulfo et teignant en jaune ou en orange.

15. Procédé selon la revendication 14, caractérisé par le fait qu'on utilise comme colorants réactifs avec les fibres, renfermant des groupes sulfo et teignant en jaune ou en orange et en rouge, des colorants azoïques.

16. Procédé selon la revendication 14 ou 15, caractérisé par le fait que les colorants teignant en jaune ou orange et en rouge renferment comme groupes réactifs avec les fibres, chaque fois un groupe halogénotriazine ou un groupe halogénopyrimidine ou un groupe de la série aliphatique.

17. Procédé selon l'une des revendications 14 à 16, caractérisé par le fait que les colorants teignant en jaune ou orange et en rouge renferment comme groupes réactifs avec les fibres, un groupe difluorochloropyrimidinyle et en particulier 2,4-difluoro-5-chloropyrimidinyle ou $\alpha,\beta$-dihalogénopropionyle et en particulier $\alpha,\beta$-dibromo-propionyle ou $\alpha$-halogénoacryloyle et en particulier $\alpha$-bromoacryloyle.

18. Procédé selon l'une des revendications 14 à 17, caractérisé par le fait qu'on procède à la teinture ou à l'impression en trichromie de matériaux polyamides naturels et en particulier de la laine.

**19.** Procédé pour la fabrication de composés de formule :

Z-Y-B-NH-R (10a)

dans laquelle Z désigne un groupe éliminable et en particulier un atome d'halogène, B désigne un groupe alkylène en $C_1$-$C_8$ éventuellement substitué par alcoxy en $C_1$-$C_4$ ou par halogène ou un membre de pont aromatique exempt de groupes sulfo ; R désigne $\alpha,\beta$-dihalogénopropionyle, $\alpha$-halogénoacryloyle ou halogénoacétyle, et Y désigne - CO- ou -$SO_2$,
caractérisé par le fait qu'on condense un composé de formule :

HO-Y-B-$NH_2$ (10b)

dans laquelle Y et B ont les significations indiquées pour la formule (10a), avec un composé introduisant le reste R, R ayant la signification indiquée pour la formule (10a) et qu'ensuite on fait réagir avec un composé introduisant le groupe Z, Z ayant la signification indiquée pour la formule (10a).

**20.** Procédé selon la revendication 19, caractérisé par le fait qu'on utilise un composé de formule (10b) dans laquelle B désigne -$(CH_2)_p$- ou

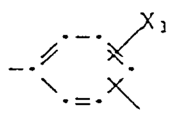

p désigne le nombre 1, 2, 3, 4, 5 ou 6 et $X_1$ désigne hydrogène ou un substituant à l'exception de sulfo.